# EUROPEAN PATENT APPLICATION

(11) **EP 2 385 692 A1**
(43) Date of publication of application: **09.11.2011**
(21) Application number: 09838366.4
(22) Date of filing: 24.11.2009
(51) Int. Cl.: H04N 5/225, H04N 5/232, H04N 5/91, H04N 5/93

(54) **DISPLAY CONTROL DEVICE, DISPLAY CONTROL METHOD AND PROGRAM**

(30) Priority: 19.01.2009 JP 2009009171
(71) Applicant: Sony Corporation, Tokyo 108-0075 (JP)
(72) Inventor: NAGASAKA, Hideo, Tokyo 108-0075 (JP); AOKI, Sunao, Tokyo 108-0075 (JP); YAMADA, Masahiro, Tokyo 108-0075 (JP)
(74) Representative: Thévenet, Jean-Bruno
(86) International application number: PCT/JP2009/069758
(87) International publication number: WO 2010/082400

(57) **Abstract**

Provided is a display control device including a display mode decision unit that decides a display mode when an image data group including a plurality of pieces of image data obtained by capturing a subject image in a plurality of mutually different focal positions is displayed as a slideshow based on focused image determination information to determine focused image data in which a predetermined subject is in focus from the image data group and a display control unit that controls the slideshow display of the image data group based on the display mode decided by the display mode decision unit.

## Description

### Technical Field

The present invention relates to a display control device, a display control method, and a program.

### Background Art

A digital still camera generates digital image data by converting a subject image (optical image) incident on an image sensor into an electric signal and records the digital image data in a recording medium such as a memory card in accordance with a release operation by an imager. The digital still camera is generally mounted with an auto-focus (automatic focus) mechanism to facilitate the focusing and adopts an optical system having a deep depth of field with a large F value. Accordingly, the imager can capture the subject image in which a subject is in focus by the auto-focus mechanism and record the digital image data of the subject image by simply operating a release button with the digital still camera directed toward the subject.

Patent Literature 1 discloses a digital still camera that performs multifocus imaging in response to one release operation to provide a digital still camera capable of generating digital image data in which a focused range (focused point) can arbitrarily be changed after imaging. In the multifocus imaging according to Patent Literature 1, a plurality of pieces of image data in which focal positions are different from each other is obtained by performing imaging in a stepwise manner while automatically changing the focal position from the focal position on the shortest distance side to the focal position on the infinity side in response to one release operation.

### Citation List

### Patent Literature

- Patent Literature 1:: JP 2003-143461A
- Patent Literature 2:: JP 2006-54523A

### Summary of Invention

### Technical Problem

However, how to present a plurality of pieces of image data (a series of images with different focal positions) obtained by multifocus imaging to a user in an easily understood manner has not been proposed at all. For example, Patent Literature 1 does not suggest any display method (presentation method) of the plurality of pieces of image data captured as multifocus images.

On the other hand, the slideshow method that successively shows a plurality of pieces of image data one by one is generally used as a conventional image presentation method. However, if the above plurality of pieces of image data captured as multifocus images is displayed without accentuation by the general slideshow method, the user will be forced to view many similar images of the same imaging range (angle of view) for a long time, causing a feeling of ennui. Further, even if the user aimlessly views the plurality of pieces of image data displayed in a slideshow, the intention of the imager is unknown to the user because which object is in focus during imaging is not known, making it difficult to identify the desired image.

Patent Literature 2, for example, discloses that when a plurality of pieces of image data is displayed in a slideshow, the motion (a zoom-in operation or panning operation) of individual reproduced images is determined based on AF information when each piece of image data is captured and the reproduced image is displayed with the determined motion. However, the technology in Patent Literature 2 is intended only to control the display mode when individual images are displayed based on AF information and is not intended to control the slideshow display method (such as the display time and display sequence) of the whole group of images captured as multifocus images. Thus, the above issue of how to present a series of images obtained by multifocus imaging and having different focal positions to the user in an easily understood manner has not yet been resolved.

The present invention has been made in view of the above situation and it is desirable to provide a novel and improved display control device capable of presenting a series of images obtained by multifocus imaging and having different focal positions in an easily understood manner and effectively in accordance with the focused point while imaging, a display control method, and a program.

### Solution to Problem

According to the first aspect of the present invention in order to achieve the above-mentioned object, there is provided a display control device including: a display mode decision unit that decides a display mode in which an image data group including a plurality of pieces of image data obtained by capturing a subject image in a plurality of mutually different focal positions based on focused image determination information to determine focused image data in which a predetermined subject is in focus from the image data group; and a display control unit that controls a slideshow display of the image data group based on the display mode decided by the display mode decision unit.

The display mode decision unit may determine the focused image data from the image data group based on the focused image determination information and decide the display mode in such a way that the focused image data can visually be recognized more easily than other image data, which is the image data group excluding the focused image data.

The display mode decision unit may control a display time of each piece of the image data so that the display time of the focused image data becomes longer than the display time of the other image data.

The display mode decision unit may decide a display order of the plurality of pieces of image data belonging to the image data group based on focal position information representing a focal position of each piece of the image data belonging to the image data group in favor of a first display order in which the image data the focal position of which is on a close-range side is first displayed or a second display order in which the image data the focal position of which is on a long-range side is first displayed.

The display mode decision unit may determine whether the focused image data is on the close-range side or the long-range side based on the focal position information of an (N-1)-th image data group when the plurality of pieces of image data belonging to the (N-1)-th image data group is arranged in order of the focal position, determine whether the focused image data is on the close-range side or the long-range side based on the focal position information of an N-th image data group when the plurality of pieces of image data belonging to the N-th image data group is arranged in order of the focal position, and decide the display order of the N-th image data group in accordance with results of the determination of the (N-1)-th and N-th image data groups and the display order of the (N-1)-th image data group.

The display mode decision unit may determine whether the focused image data is on the close-range side or the long-range side based on the focal position information when the plurality of pieces of image data belonging to the image data group is arranged in order of the focal position, and decide the display order of the image data group in accordance with a result of the determination.

The display mode decision unit may determine a number of pieces of the other image data present on the close-range side or the long-range side of the focused image data based on the focal position information when the plurality of pieces of image data belonging to the image data group is arranged in order of the focal position, and control the display mode in accordance with the number so that a display time of the whole other image data on the close-range side or the long-range side becomes equal to a predetermined time or less.

The display mode decision unit may exclude a portion of the other image data on the close-range side or the long-range side of the focused image data from the image data to be displayed as a slideshow when the number is equal to or greater than a threshold.

When first focused image data and second focused image data are present in the one image data group, the display mode decision unit does not have to exclude the other image data present between the first focused image data and the second focused image data from the image data to be displayed as the slideshow.

The display mode decision unit may control at least a portion of the display time of the other image data on the close-range side or the long-range side of the focused image data in accordance with the number.

The display mode decision unit may determine a difference in arrangement order between the focused image data and the other image data based on the focal position information when the plurality of pieces of image data belonging to the image data group is arranged in order of the focal position and controls a display time of the other image data in accordance with the difference in arrangement order.

Further, the display control device may include a storing unit which stores the image data group, focal position information representing a focal position of each piece of image data belonging to the image data group, and focused image determination information for determining focused image data in which a predetermined subject is in focus from the image data group, as corresponding to each other. Further, the display control device may include a reading unit which reads the image data group, the focal position information, and the focused image determination information from the storing unit. Furthermore, a display mode decision unit may display the image data group in order of the focal position represented by the focal position information as a slideshow.

According to the second aspect of the present invention in order to achieve the above-mentioned object, there is provided a display control method, including: deciding a display mode in which an image data group including a plurality of pieces of image data obtained by capturing a subject image in a plurality of mutually different focal positions based on focused image determination information to determine focused image data in which a predetermined subject is in focus from the image data group; and controlling a slideshow display of the image data group based on the display mode decided by the display mode decision step.

According to the third aspect of the present invention in order to achieve the above-mentioned object, there is provided a program causing a computer to execute: deciding a display mode in which an image data group including a plurality of pieces of image data obtained by capturing a subject image in a plurality of mutually different focal positions based on focused image determination information to determine focused image data in which a predetermined subject is in focus from the image data group; and controlling a slideshow display of the image data group based on the display mode decided by the display mode decision step.

With the above configuration, the display mode when an image data group including a plurality of pieces of image data obtained by capturing a subject image in a plurality of mutually different focal positions is displayed as a slideshow is decided based on focused image determination information to determine focused image data in which a predetermined subject is in focus from the image data group and the slideshow display of the image data group is controlled based on the decided display mode. Accordingly, the display mode when the plurality of pieces of image data belonging to the image data group is displayed as a slideshow can be controlled in accordance with the focused image data and therefore, the plurality of pieces of image data can effectively be displayed as a slideshow in an easily understood manner.

### Advantageous Effects of the Invention

According to the embodiments of the present invention described above, a series of images obtained by multifocus imaging and having different focal positions can be presented in an easily understood manner and effectively in accordance with the focused point while imaging.

### Brief Description of Drawings

[Fig. 1] Fig. 1 is a block diagram showing a configuration of an imaging apparatus according to a first embodiment of the present invention.
[Fig. 2] Fig. 2 is a schematic diagram schematically showing imaging processing by the imaging apparatus according to the embodiment.
[Fig. 3] Fig. 3 is a schematic diagram showing a change of a focal position using a deformed mirror device according to the embodiment.
[Fig. 4] Fig. 4 is an explanatory diagram showing changes of the focal position according to the embodiment.
[Fig. 5] Fig. 5 is a schematic diagram illustrating settings of a change position of the focal position in the imaging apparatus according to the embodiment.
[Fig. 6] Fig. 6 is a schematic diagram illustrating a depth of field for each focal position according to the embodiment.
[Fig. 7] Fig. 7 is a schematic diagram showing an example of focus control according to the embodiment.
[Fig. 8] Fig. 8 is a schematic diagram showing another example of the focus control according to the embodiment.
[Fig. 9] Fig. 9 is a schematic diagram showing a first modification of the focus control according to the embodiment.
[Fig. 10] Fig. 9 is a schematic diagram showing a second modification of the focus control according to the embodiment.
[Fig. 11] Fig. 9 is a schematic diagram showing a third modification of the focus control according to the embodiment.
[Fig. 12] Fig. 12 is a block diagram showing a hardware configuration of a display control device according to the embodiment.
[Fig. 13] Fig. 13 is a block diagram showing a function configuration of the display control device according to the embodiment.
[Fig. 14] Fig. 14 is an explanatory diagram showing a data structure of metadata according to the embodiment.
[Fig. 15] Fig. 15 is an explanatory diagram showing a modification of the data structure of the metadata according to the embodiment.
[Fig. 16] Fig. 16 is a schematic diagram schematically showing a slideshow display according to the embodiment.
[Fig. 17] Fig. 17 is a flow chart showing the slideshow display according to the embodiment.
[Fig. 18] Fig. 18 is a schematic diagram showing an image selection window 40 displayed in a display screen of the display control device according to the embodiment.
[Fig. 19] Fig. 19 is a schematic diagram schematically showing the slideshow display according to a second embodiment.
[Fig. 20] Fig. 20 is a flow chart showing the slideshow display according to the embodiment.
[Fig. 21] Fig. 21 is a flow chart showing decision processing of a display order according to the embodiment.
[Fig. 22] Fig. 22 is a schematic diagram schematically showing the slideshow display according to a modification of the embodiment.
[Fig. 23] Fig. 23 is a flow chart showing the decision processing of the display order according to the modification of the embodiment.
[Fig. 24] Fig. 24 is a schematic diagram schematically showing the slideshow display according to a third embodiment.
[Fig. 25] Fig. 25 is a schematic diagram showing an array of an image data group according to the embodiment.
[Fig. 26] Fig. 26 is a flow chart showing the slideshow display according to the embodiment.
[Fig. 27] Fig. 27 is a flow chart showing image selection processing according to the embodiment.
[Fig. 28] Fig. 28 is a schematic diagram schematically showing the slideshow display according to a fourth embodiment.
[Fig. 29] Fig. 29 is a flow chart showing the slideshow display according to the embodiment.
[Fig. 30] Fig. 30 is a flow chart showing calculation processing of a display time according to the embodiment.

### Reference Signs List

- 1: Imaging apparatus
- 2: Deformed mirror device
- 2a: Mirror surface
- 3: Diaphragm
- 4: Image sensor
- 5: Pre-processing unit
- 6: Signal processing unit
- 7: AF element
- 8: Mirror drive circuit
- 9: Diaphragm controller
- 10: Imaging controller
- 11: CPU
- 12: Memory unit
- 13: Operation input unit
- 14: Bus
- 15: Display unit
- 16: Compression/decompression processing unit
- 17: Storage unit
- 20: Display control device
- 21: Data acquisition unit
- 22: Storing unit
- 23: Data reading unit
- 24: Display mode decision unit
- 25: Display controller
- 26: Display unit
- 27: Input unit
- 30, 35: Metadata
- 32: Individual metadata
- 34: Common metadata
- 36: Metadata on an image data group
- 38: Metadata on individual image data
- 40: Window
- 42: Thumbnail image
- N-1, N, N+1: Group of image data
- Q: Display time

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

The description of the present invention will be provided in the order shown below:

### <Definition of Terms>

### <First Embodiment> (Slideshow display that displays a focused image for a long time)

[1.1. Configuration of Imaging Apparatus]
[1.2. Method of Changing Focal Position]
[1.3. Multifocus Imaging]
   [1.3.1. Example of multifocus imaging]
   [1.3.2. First modification of multifocus imaging]
   [1.3.3. Second modification of multifocus imaging]
   [1.3.4. Third modification of multifocus imaging]
[1.4. Overview of Slideshow Display]
[1.5. Configuration of Display control device]
[1.6. Function Configuration of Display control device]
[1.7. Data Structure of Metadata]
[1.8. Slideshow Display]
   [1.8.1. Overview of slideshow display]
   [1.8.2. Slideshow display flow]

### <Second Embodiment> (Slideshow display that changes the display order for each group of images)

[2.1. Overview of Slideshow Display]
[2.2. Decision Technique of Display Order]
[2.3. Slideshow Display Flow]
[2.4. Modification of Slideshow Display]

### <Third Embodiment> (Slideshow display that selects a display image)

[3.1. Overview of Slideshow Display]
[3.2. Image Selection Technique]
[3.3. Slideshow Display Flow]

### <Fourth Embodiment> (Slideshow display that changes the display time depending on the focused point)

[4.1. Overview of Slideshow Display]
[4.2. Slideshow Display Flow]

### <Definition of Terms>

First, before starting to describe each embodiment of the present invention, various terms used herein will be described.

An "imaging apparatus" is an apparatus to acquire image data by capturing a subject image. The imaging apparatus includes a digital still camera to mainly acquire still image (photo) data and a digital camcorder to mainly acquire video data. The digital still camera may also have a function to acquire video data and the digital camcorder may also have a function to acquire still image data. The digital still camera is mainly taken as an example of an imaging apparatus of the present invention in the embodiments below, but the imaging apparatus of the present invention may be any camera such as a digital camcorder.
"Imaging" means converting a subject image received from an image sensor into an image signal in an imaging apparatus.
An "imaging range" is a range of an imaging space that can be imaged by an imaging apparatus and corresponds to the angle of view.
A "subject image" is an optical image entering an image sensor via an imaging optical system of an imaging apparatus and an optical image representing a subject present within an imaging range of the imaging apparatus.
"Image data" is digital data obtained by performing signal processing on an image signal obtained by capturing a subject image through an image sensor.

A "focal position" is a position of the focus (focus point) of an imaging optical system of an imaging apparatus. More specifically, a "focal position" is a position on an optical axis of an imaging optical system in which the focus of the imaging optical system is present in an imaging space. The focal position can be changed by driving the imaging optical system of the imaging apparatus or the imaging apparatus. The distance from the lens center of the imaging optical system of the imaging apparatus to the focal position is called a "focal length".
"Focusing" is an adjustment of the focus of an imaging optical system of an imaging apparatus to a predetermined subject within an imaging range.
A "focused point position" is a focal position in which an imaging optical system of an imaging apparatus focuses on a predetermined subject within an imaging range.
A "focused range" is a range of the focal position around the focused point position when the focal position is in some focused point position in which focusing is obtained due to depth of field of an imaging optical system. "Around the focused point position" is a close-range side (near side) and a long-range side (far side) of the focused point position on an optical axis (Z axis) of the imaging optical system. As is evident from the description of the focused range, there is a width in focal position when some subject is in focus. Thus, "detection of the focused point position focusing on a predetermined subject" in the present invention means detection of any focal position within the focused range in which the subject is in focus.
A "focusing enabled range" is a range of the focal position in which focusing of an imaging optical system of an imaging apparatus can physically be achieved, ranging the focal position on the shortest distance side (macro) to the focal position on the infinity side.
An "X axis direction" is the horizontal direction of an imaging space, a "Y axis direction" is the vertical direction of the imaging space, and a "Z axis direction" is a depth direction of the imaging space (an optical axis direction of an imaging optical system). The X axis direction and the Y axis direction determine an imaging plane of an image obtained by an imaging apparatus and the Z axis direction is a direction in which the focus of the imaging optical system is changed.

A "detection instruction" is an instruction serving as a trigger to detect the focused point position. A typical detection instruction is, for example, an operation to press a release button (shutter button) halfway down by a user. In addition, however, for example, an operation to turn on an imaging apparatus, an operation to switch the operation mode of the imaging apparatus to an imaging mode, other user operations, or face detection by face detection processing on image data obtained by imaging can also serve as a trigger to issue a detection instruction.
A "release instruction" is an instruction serving as a trigger to acquire image data obtained by capturing a subject image as a save image data. In a common digital still camera, "release" means recording image data obtained by capturing a subject image in a recording medium and a typical operation thereof is to press the release button all the way down. However, the "release instruction" herein is not limited to the operation to press the release button all the way down and, for example, other user operations on the imaging apparatus or detection of a smiling face of a subject person by smile detection processing on image data obtained by imaging can also serve as a trigger to issue a release instruction.
"Save image data" is, among image data obtained by performing signal processing on an image signal of a subject image captured by an image sensor, image data saved in a recording medium by an imaging apparatus or an external device. In a digital still camera, for example, image data is generated by constantly capturing a subject image by an image sensor in imaging mode and the image data is displayed in a monitor of the imaging apparatus as a live view image. Instead of saving all image data obtained chronologically in this manner in a recording medium, image data in the timing in which the above release instruction is generated is saved in the recording medium. In a digital camcorder, on the other hand, all image data obtained chronologically is saved in a recording medium as save image data.

"Auto-focus processing" is processing to automatically detect the focal position in which an imaging apparatus focuses on any subject inside an imaging range. The auto-focus (hereinafter, referred to as "AF") processing may contain detection processing to detect the focal position in which a predetermined subject is brought into focus and tracking processing to change the focal position so that the focus is caused to track the subject. The subject for AF may be a subject present, for example, in a predetermined AF area (for example, an image center area) provided in an imaging range or at a reference point or the user may be enabled to freely select the subject for AF in the imaging range by using an AF position specifying means such as a touch panel.
"Subject detection processing" is processing to detect one or two or more subjects present inside the imaging range by analyzing image data obtained by capturing subject images in a plurality of changed and mutually different focal positions while changing the focal position. Subjects present within the imaging range and the range of the focused point position in which the subjects are brought into focus can be detected by the subject detection processing.

"Bracket imaging processing" is processing to acquire image data obtained by capturing subject images in a plurality of changed focal positions while periodically changing the focal position within a predetermined range containing the detected focused point position as save image data. Bracket imaging is referred to also as focus bracket imaging. In the bracket imaging processing, for example, the focal position may be changed within a predetermined range centered on the focused point position detected by the AF processing or the focal position may be changed within the range of the focused point position in which the subject detected by the subject detection processing is brought into focus. Images can be captured by changing the focal position to positions near the focused point position by the Bracket imaging processing and therefore, position shifts of the focused point position can be compensated for.
"Multifocus imaging processing" is processing to acquire image data obtained by capturing subject images in a plurality of changed and mutually different focal positions while changing the focal position within a predetermined range in a stepwise manner or continuously as save image data. Examples of the multifocus processing include "all-range focus imaging processing" that sets the entire range of the focusing enabled range as a range in which the focal position can be changed and "subject imaging processing" that sets the range of the focused point position in which the subject detected by the subject detection processing is brought into focus as a range in which the focal position can be changed.
"All-range focus imaging processing" is processing to acquire image data obtained by capturing subject images in a plurality of changed and mutually different focal positions while changing the focal position in the focusing enabled range in a stepwise manner or continuously as save image data. The all-range focus imaging processing is an example of the multifocus processing.
"Subject imaging processing" is processing to acquire image data obtained by capturing subject images in a plurality of changed and mutually different focal positions while changing the focal position within a range of the focused point position in which at least one subject of one or two or more subjects detected by the subject detection processing is brought into focus as save image data. The subject imaging processing is an example of the multifocus processing.

A "slideshow" is a function to cause a display unit to successively display a plurality of pieces of image data. The slideshow function is implemented in, for example, presentation software and image display software (a so-called viewer). The slideshow function is roughly divided into two types of mode, a mode in which the slide (one piece of image data) is switched each time the user presses an operation key and a mode in which the slide is automatically switched to the next slide (the next image data) in accordance with the passage of a preset elapsed time.
A "slideshow display" means displaying a plurality of pieces of image data successively by the slideshow.
A "display mode" is a mode in which a plurality of pieces image data is displayed by the slideshow and includes, for example, the display time of the plurality of pieces of image data displayed as the slideshow, the display order, and the selection of image data to be displayed.

### <First embodiment>

Next, the first embodiment of the present invention will be described. In the description that follows, first an imaging apparatus that performs multifocus imaging to obtain a plurality of pieces of image data with mutually different focal positions and an operation thereof will be described. Then, a display control device to successively display (slideshow display) the plurality of pieces of image data obtained by the multifocus imaging by using the display control device according to the present embodiment and an operation thereof will be described.

First, an overview of an imaging apparatus that performs multifocus imaging according to the first embodiment will be described. The imaging apparatus according to the present embodiment is **characterized in that** the focused point position of a predetermined subject is detected by performing AF processing in accordance with a detection instruction and then, all-range focus imaging is performed while changing the focal position by using the detected focused point position as a reference in accordance with a release operation.

That is, the imaging apparatus according to the present embodiment detects the focused point position in which a predetermined subject is brought into focus by performing AF processing to bring the predetermined subject within an imaging range into focus in accordance with a detection instruction. Then, the imaging apparatus records image data obtained by capturing a subject image in the detected focused point position in a recording medium as save image data in accordance with a release instruction. Further, the imaging apparatus performs all-range focus imaging that records image data obtained by capturing subject images in a plurality of changed and mutually different focal positions while changing the focal position within the focusing enabled range as save image data using the detected focused point position as a reference.

A plurality of pieces of save image data in which different positions are in focus within the focusing enabled range can be obtained by the all-range focus imaging. Digital image data whose focused point position can freely be changed after imaging can be obtained and thus, the user can easily acquire an image in which a different subject (focal position) is re-focused after imaging. An imaging apparatus according to the present embodiment will be described in detail below.

### [1.1. Configuration of Imaging Apparatus]

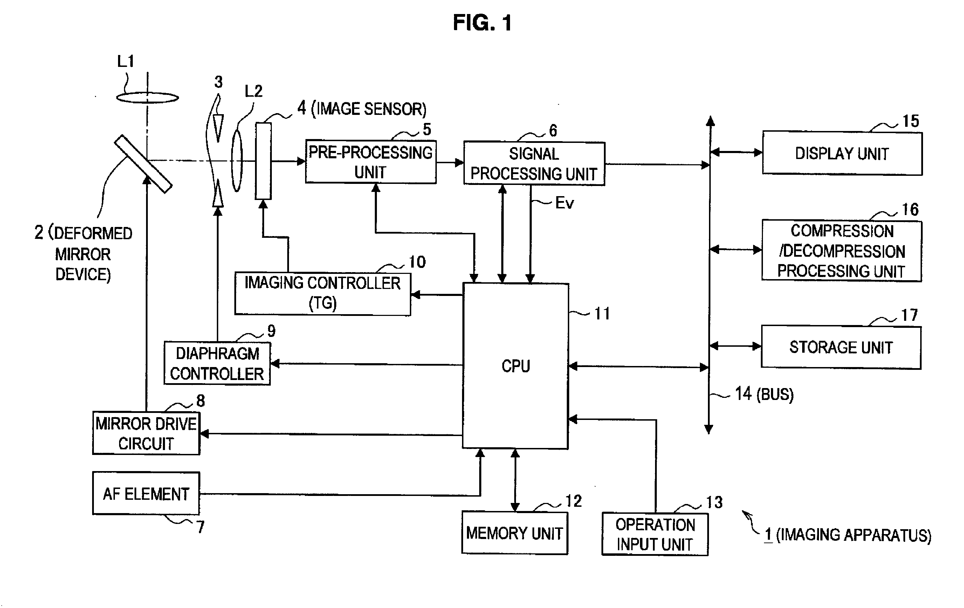

First, the configuration of an imaging apparatus 1 according to the present embodiment will be described with reference to Fig. 1. FIG. 1 is a block diagram showing the configuration of the imaging apparatus 1 according to the present embodiment.

As shown in Fig. 1, the imaging apparatus 1 is configured as, for example, a digital still camera capable of imaging and recording still images and video images. The imaging apparatus 1 includes an imaging optical system (L1, L2, 2, 3), an image sensor 4, a pre-processing unit 5, a signal processing unit 6, an AF element 7, a mirror drive circuit 8, a diaphragm controller 9, an imaging controller 10, a CPU (Central Processing Unit) 11, a memory unit 12, an operation input unit 13, a bus 14, a display unit 15, a compression/decompression processing unit 16, and a storage unit 17.

Among these units, the imaging optical system and the image sensor 4 are implementation examples of an imaging unit of the present invention and the imaging optical system causes the image sensor 4 to form a subject image and the image sensor 4 captures the received subject image to output an image signal thereof. The pre-processing unit 5 and the signal processing unit 6 are implementation examples of an image data generation unit of the present invention and generate image data of a subject image by processing an image signal output from the image sensor 4. The mirror drive circuit 8 is an implementation example of a drive unit of the present invention and changes the focal position by driving a deformed mirror device 2. The CPU 11 and the memory unit 12 are implementation examples of a control unit of the present invention and control each unit of the imaging apparatus 1. Each unit of the imaging apparatus 1 will be described below.

The imaging optical system includes a lens L1, the deformed mirror device 2, a lens L2, and a diaphragm 3. The lens L1 and the lens L2 schematically represent a lens group in the imaging optical system to cause the image sensor 4 to form a subject image (optical image). The lens L1 schematically represents a lens group to guide a subject image into the deformed mirror device 2 and the lens L2 schematically represents a lens group to guide, to the image sensor 4, the subject image reflected by a mirror surface of the deformed mirror device 2 via the lens L1. The actual imaging optical system only needs to cause the image sensor 4 to form a subject image and may include, for example, more lenses, an optical filter to remove unnecessary wavelengths, or other optical elements.

The deformed mirror device 2 is an apparatus including a deformed mirror whose sectional shape can be changed to a convex shape or a concave shape. The deformed mirror device 2 has a member having flexibility (flexible member) formed on the surface side thereof and the flexible member has a metal film such as aluminum formed therein to form the mirror surface. The shape of the mirror surface is changed to a convex shape or a concave shape by the shape of the flexible member being changed in accordance with a drive signal from the mirror drive circuit 8 whereby the focal position can be changed fast.

By exercising focus control (to change the focal position) by using the deformed mirror device 2, compared with a focus control mechanism that moves a normal focus lens closer to/away from the image sensor, the focal position can be adjusted correctly at high speed.

In the imaging apparatus 1 according to the present embodiment, as described above, multifocus imaging processing is performed and thus, it is necessary to change the focal position fast. Then, if, like a conventional focus mechanism, the focal position is adjusted by driving a focus lens using a motor, it is difficult to change the focal position instantaneously.

In contrast, the deformed mirror device 2 according to the present embodiment is smaller than a conventional mechanical focus mechanism and so can operate at high speed. Thus, if the deformed mirror device 2 is used as a focus mechanism, the focal position can be adjusted by infinitesimally changing the sectional shape of the mirror surface (flexible member) so that the focal position can be changed very fast. Therefore, when the focal position stepwise changed to many change positions within the focusing enabled range in accordance with a release instruction in the multifocus imaging processing, the change can be made fast. Consequently, image data of many focal positions that are mutually different can be acquired fast in the timing in which the user issues one release instruction by being conscious of the right timing to capture a good image and therefore, missing a good opportunity to capture an image can be avoided in multifocus imaging processing.

The diaphragm 3 is inserted between the deformed mirror device 2 and the lens L2 and adjusts the amount of light exposure of a subject image formed in the image sensor 4 by changing the range of passage of incident light based on control of the diaphragm controller 9 described later.

The image sensor 4 includes, for example, a solid-state image sensor such as CCD (Charge Coupled Device) and CMOS (Complementary Metal Oxide Semiconductor). The image sensor 4 generates a captured image signal by capturing an incident subject image. That is, the image sensor 4 makes a photoelectric conversion of light (subject image) guided via the imaging optical system and outputs an electric signal as an image signal by R (red), G (green), and B (blue). The imaging controller 10 exercises reading control of the image signal of the image sensor 4 based on instructions of the CPU 11 described later.

The pre-processing unit 5 is a so-called analog front-end that pre-processes an exposure image signal and includes a sample hold/AGC (Automatic Gain Control) circuit and a video A/D converter. The pre-processing unit 5 performs, for example, CDS (correlated double sampling) processing, gain processing by a programmable gain amplifier (PGA), A/D conversion processing on an analog electric signal as an image signal output from the image sensor 4. The pre-processing unit 5 also performs sensitivity variation correction processing and white balance processing on captured image data obtained by performing various kinds of processing described above on an image signal.

The signal processing unit 6 performs various kinds of processing on captured image data (R, G, B) obtained via the pre-processing unit 5 to obtain final image data.

The AF element 7 includes, for example, a line sensor and is used to detect whether a subject is in focus. A detection signal of the AF element 7 is input into the CPU 11 and the CPU 11 controls AF processing based on the detection signal and instructs the mirror drive circuit 8 to bring a predetermined subject into focus to control a deformation state of the deformed mirror. The AF element 7 is generally provided in high-performance cameras such as single-lens reflex cameras and the AF element 7 may be omitted in a digital still camera. In such a case, AF processing may be controlled by the CPU 11 based on a focusing evaluation value obtained by a captured image signal being processed by the signal processing unit 6.

The mirror drive circuit 8 adjusts the focal position by driving the deformed mirror device 2 to change the deformation state of the deformed mirror device 2 based on instructions from the CPU 11. Details of driving of the deformed mirror device 2 will be described later.

The diaphragm controller 9 adjusts the amount of light exposure of a subject image to an appropriate value by controlling an aperture of the diaphragm 3 based on instructions from the CPU 11.

The imaging controller 10 includes, for example, a timing generator (TG) and controls the electronic shutter speed of the image sensor 4 based on instructions from the CPU 11. The imaging controller 10 generates operation pulses necessary for the image sensor 4. For example, the imaging controller 10 generates various pulses such as a 4-phase pulse for vertical transfer, a field shift pulse, a 2-phase pulse for horizontal transfer, and a shutter pulse, which are supplied to the image sensor 4. The image sensor 4 can be driven (electronic shutter function) by the imaging controller 10.

The CPU 11 functions as a control unit that controls each unit of the imaging apparatus 1. The memory unit 12 is provided for the CPU 11 and the memory unit 12 includes, for example, a ROM (Read Only Memory), a RAM (Random Access Memory), and a flash memory.

The CPU 11 performs various arithmetic operations according to programs stored in the memory unit 12 or exchanges control signals with the diaphragm controller 9, the imaging controller 10, the mirror drive circuit 8, and each unit via the bus 14 to cause each of these units to perform required operations.

For example, by driving the diaphragm 3 through instructions to the diaphragm controller 9 based on information about the quantity of light of an imaging signal detected by the pre-processing unit 5, control is exercised so that an appropriate diaphragm number is obtained. Also, the deformation state of the deformed mirror device 2 is controlled by issuing instructions to the mirror drive circuit 8 based on a focusing evaluation value Ev obtained from a focusing evaluation value calculation unit in the signal processing unit 6 described above. Accordingly, the focal position of the imaging optical system can be changed and imaging processing such as the above AF processing, subject detection processing, multifocus imaging processing, all-range focus imaging processing, subject imaging processing, and bracket imaging processing can be controlled, which will be described later.

The memory unit 12 (for example, the ROM) provided accompanying the CPU 11 has programs causing the CPU 11 to perform various kinds of the above control processing stored therein and the CPU 11 performs arithmetic/control processing necessary for the above each control based on the programs.

Programs according to the present embodiment are programs causing the CPU 11 to perform various kinds of control of the CPU 11 described above. The programs can be stored in a storage device (such as an HDD, ROM, and flash memory) contained in the imaging apparatus 1 in advance. The programs may be provided to the imaging apparatus 1 by being stored in an optical disk such as CD (Compact Disc), DVD (Digital Versatile Disk), and BD (Blu-ray Disc) or a removable recording medium such as a memory card. Alternatively, the programs may be downloaded to the imaging apparatus 1 via a network such as a LAN and the Internet.

The operation input unit 13 has operation controls such as keys, buttons, dials, and touch panels. The operation input unit 13 includes operation controls to input various kinds of operation instructions and information, for example, an operation control to instruct power-on/power-off, a release operation control (release button) to instruct the start of recording captured images, operation controls for zoom adjustments, and a touch panel used as an image position specifying function like the selection of a subject to be brought into focus and the like. Among others, the release button has a function for the user to input a detection instruction for the AF or subject detection or a release instruction. For example, a detection instruction is input by a shutter button being pressed halfway down and a release instruction is input by the shutter button being pressed all the way down. The operation input unit 13 provides such information obtained from operation controls to the CPU 11 and the CPU 11 performs necessary arithmetic operations or control corresponding to the information.

The compression/decompression processing unit 16 performs compression/decompression processing, for example, image compression/decompression processing according to the MPEG (Moving Picture Experts Group) system on image data input via the bus 14. When recording image data obtained by imaging in the storage unit 17, the compression/decompression processing unit 16 compresses the image data to reduce the amount of data. When image data recorded in the storage unit 17 is reproduced, on the other hand, the compression/decompression processing unit 16 decompresses the image data, which is sent to the display unit 15 or the like.

The storage unit 17 is used to store image data and other various kinds of data. The storage unit 17 may include a semiconductor memory such as a flash memory or, for example, an HDD (Hard Disk Drive) or the like. The storage unit 17 may also include, instead of a recording medium contained in the imaging apparatus 1, a removable recording medium removable from the imaging apparatus 1, for example, a memory card containing a semiconductor memory or a recording/reproducing drive corresponding to the recording medium such as an optical disk, magneto-optical disk, and hologram memory. Naturally, both of a built-in type memory and a recording/reproducing drive corresponding to a removable recording medium may be mounted. The storage unit 17 records/reproduces image data input via the bus 14 and other various kinds of data based on control of the CPU 11.

In the display unit 15, a display panel unit such as a liquid crystal display and a display drive unit that drives the display panel unit. The display drive unit includes a pixel drive circuit to cause the display panel unit to display various kinds of display data input via the bus 14. The pixel drive circuit applies a drive signal based on an image signal to each pixel arranged in a matrix form in the display panel unit in predetermined horizontal/vertical drive timing to cause each pixel to display. The display panel in the display unit 15 may also be provided with the image position specifying function of the touch panel or the like described above.

When an image is captured, image data output from the signal processing unit 6 is supplied to the compression/decompression processing unit 16 based on control of the CPU 11 in accordance with a release instruction to generate compressed image data in the compression/decompression processing unit 16. Then, based on control of the CPU 11, the storage device 17 records the compressed image data on which compression processing has been performed in a recording medium. Also when an image is captured, the CPU 11 exercises control so that image data output from the signal processing unit 6 is supplied to the display unit 15 whereby captured image data obtained from an image signal captured by the image sensor 4 is displayed in the display unit 15 in real time (live view image). By viewing the live view image, the user can decide an appropriate opportunity to capture an image by checking the imaging range (angle of view), the appearance of a subject and the like.

If a reproduction instruction of compressed image data recorded in the storage device 17 is issued, the CPU 11 controls the storage unit 17 to exercise control so that, after the specified compressed image data being reproduced, the reproduced image data is decompressed by the compression/decompression processing unit 16. Then, the CPU 11 exercises control so that the decompressed image data is displayed in the display unit 15.

### [1.2. Method of Changing Focal Position]

Next, the method of changing the focal position in the imaging apparatus 1 according to the present embodiment will be described in detail.

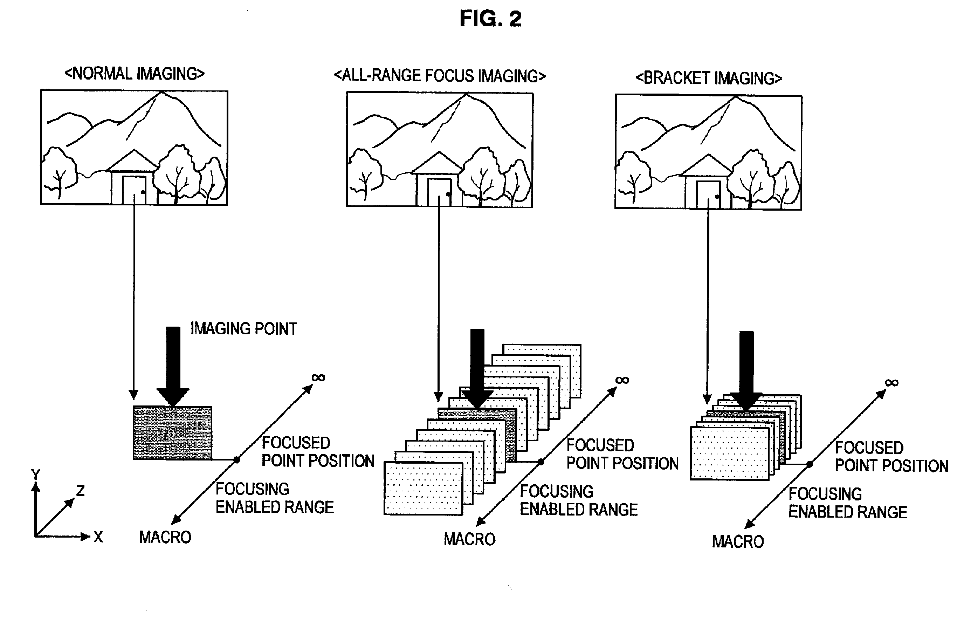

First, an overview of imaging processing using the imaging apparatus 1 according to the present embodiment will be described with reference to Fig. 2. Fig. 2 is a schematic diagram schematically showing imaging processing by the imaging apparatus 1 according to the present embodiment.

As shown in FIG. 2, the imaging apparatus 1 according to the present embodiment can perform normal imaging processing, all-range focus imaging processing, and bracket imaging processing. The user may be enabled to set/change imaging processing performed by the imaging apparatus 1 by switching, for example, the imaging mode of the imaging apparatus 1 between the normal imaging mode and multifocus imaging mode (more specifically, the all-range focus imaging mode and the bracket imaging mode).

In normal imaging processing, the imaging apparatus 1 performs AF processing that brings a subject (imaging point) desired by the user into focus in accordance with a detection instruction (for example, a half press of the release button). Then, the imaging apparatus 1 captures a subject image in which the subject is in focus and records only one piece of image data in accordance with a release instruction (for example, a full press of the release button). At this point, the focal position corresponding to the focused subject becomes the focused point position. The focused point position can be adjusted to any position within the focusing enabled range from the shortest distance side (macro) to the infinity side (∞).

In all-range focus imaging processing, on the other hand, the imaging apparatus 1 successively captures a subject image while automatically changing the focal position in a stepwise manner (stepper type) extending over the entire focusing enabled range in accordance with one release instruction and records a plurality of pieces of image data. The multifocus imaging processing may be performed without focusing on any subject, but may also be performed after detecting the focused point position for a predetermined subject by AF processing or the like in advance. The plurality of pieces of image data in which all subjects from the macro side to the infinity side in the imaging range are brought into focus can be obtained by the multifocus imaging processing.

In bracket imaging processing, the imaging apparatus 1 detects the focused point position by performing AF processing that brings a subject desired by the user into focus in accordance with a detection instruction (for example, a half press of the release button). Then, the imaging apparatus 1 periodically captures a subject image by automatically shifting the focal position in fine steps near the focused point position and records a plurality of pieces of image data. Then, the imaging apparatus 1 images in the focused point position and records one piece of image data in accordance with a release instruction. Image data captured in focal positions near the focused point position can be obtained by the bracket imaging processing during the time between the AF processing and the release operation. Therefore, even if the focused point position detected by the AF processing is shifted, image data in which the desired subject is properly brought into focus can be obtained almost without fail.

In the all-range focus imaging processing and bracket imaging processing and further subject imaging processing (not shown), as described above, imaging is performed by while changing the focal position in multiple steps. Thus, it is necessary to change the focal position precisely and fast.

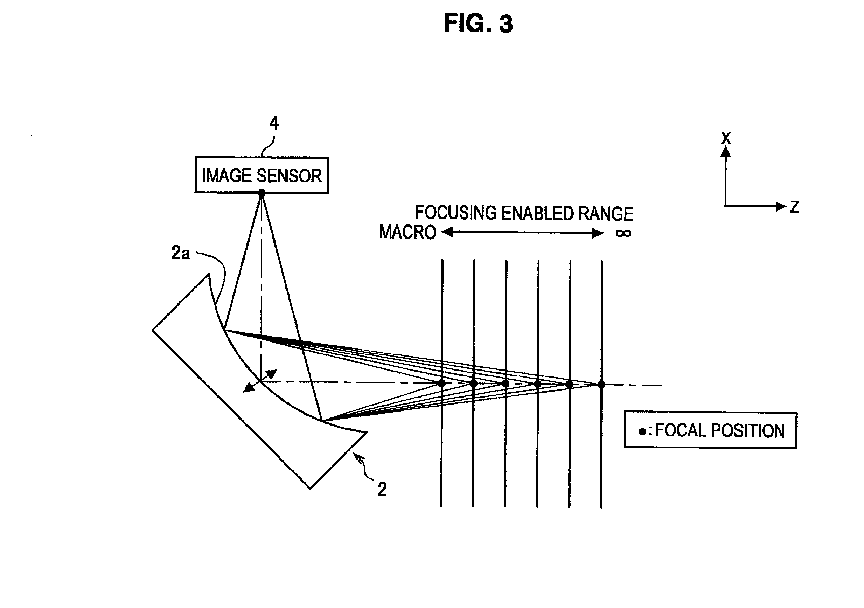

Next, changes of the focal position using the deformed mirror device 2 according to the present embodiment will be described with reference to Fig. 3. Fig. 3 is a schematic diagram showing changes of the focal position using the deformed mirror device 2 according to the present embodiment.

As shown in Fig. 3, the focal position can be changed by changing the shape of a mirror surface (reflecting surface) 2a of the deformed mirror device 2. By making a concave shape of the mirror surface 2a deeper, for example, the focal position can be changed to the close-range side (macro side) and conversely, by making the concave shape of the mirror surface 2a shallower, the focal position can be changed to the long-range side (infinity side). A subject far away from the imaging apparatus 1 can be brought into focus by changing the focal position to the long-range side and a subject near the imaging apparatus 1 can be brought into focus by changing the focal position to the close-range side. In this case, the shape of the mirror surface 2a that can physically be changed by the deformed mirror device 2 is limited and the range in which the focal position can be changed, that is, the focusing enabled range is decided by the Imitation.

The focal position can also be changed by, as described above, moving a motor-driven focus lens closer to/away from the image sensor by using a conventional focus mechanism. However, the conventional focus mechanism requires a long time of several seconds to move the focal position from the shortest distance side to the infinity side. In the present embodiment, by contrast, the focal position can be changed significantly fast when compared with the conventional focus mechanism by using the deformed mirror device 2 as the focus mechanism. For example, the deformed mirror device 2 requires a short time of less than 1 sec to move the focal position from the shortest distance side to the infinity side and several tens (for example, 30) of multifocus images can be obtained in the short time.

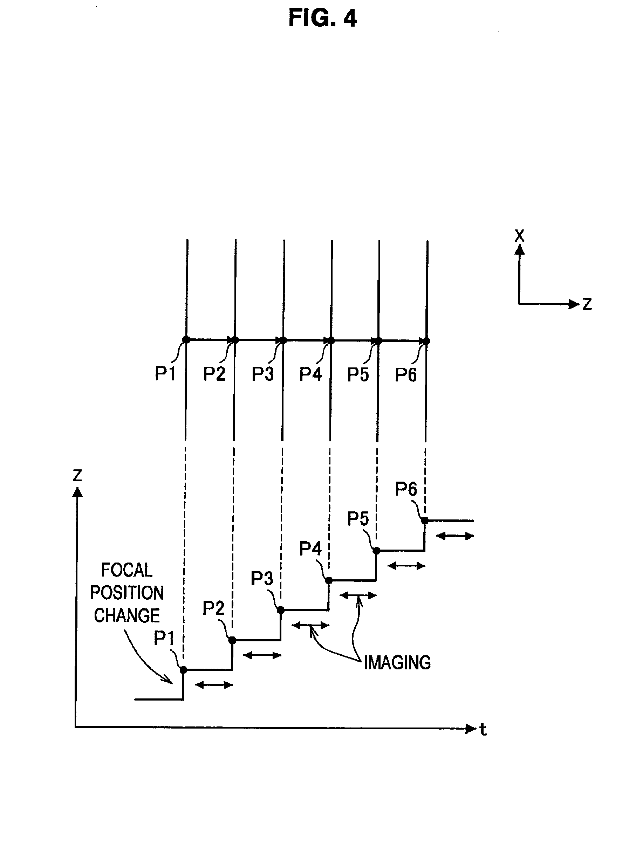

Next, details of the focus control that changes the focal position in a stepwise manner according to the present embodiment will be described with reference to Fig. 4. Fig. 4 is an explanatory diagram showing changes of the focal position according to the present embodiment.

As shown in Fig. 4, in the imaging apparatus 1 according to the present embodiment, the focal position is changed in a stepwise manner (stepper type) by using the deformed mirror device 2 described above. In the example in Fig. 4, the focal position is successively changed in six steps of positions P1, P2, P3, P4, P5, P6 toward the infinity side in the depth direction (Z axis direction) in the imaging space. The imaging apparatus 1 captures a subject image by the image sensor 4 in a state of the fixed focal position each time the focal position is changed by one step in this manner and records image data focused in the focal position.

More specifically, each time the focal position is changed by one step in a stepwise manner, a shutter operation of the image sensor 4 is performed to capture a subject image in a predetermined exposure time. In this case, the time of one step to change the focal position corresponds to a sum of the electronic shutter speed of the image sensor 4, a settling time, and an exposure time. The settling time is a time necessary before a changed quantity of light of a subject image varied accompanying a change of the focal position settles below a shift allowable range. The exposure time is a time necessary for exposure of imaging by the imaging apparatus 1.

In the foregoing, the method of changing the focal position in a stepwise manner in focus control according to the present embodiment has been described in detail. However, the present invention is not limited to, like the present embodiment, an example in which the focal position is changed in a stepwise manner. For example, the focal position may be changed continuously (steplessly) to capture a subject image a plurality of times by the image sensor 4 in predetermined timing during the change. Thus, multifocus imaging may be performed by continuously changing the focal position in this manner to obtain a plurality of pieces of image data imaged in mutually different focal positions.

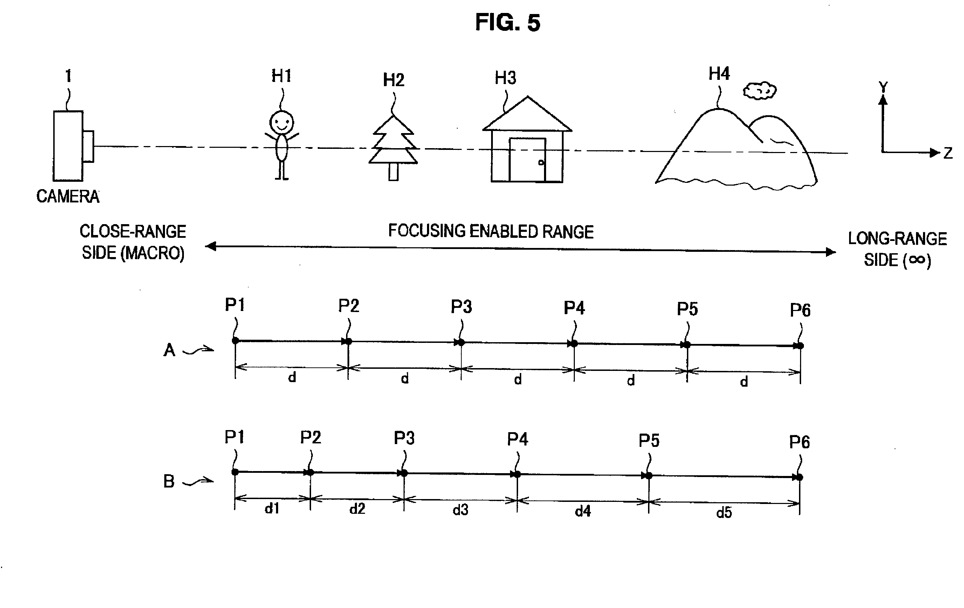

Next, settings of the change position of the focal position when the focal position is changed in the imaging apparatus 1 according to the present embodiment in a stepwise manner will be described with reference to Fig. 5. Fig. 5 is a schematic diagram illustrating settings of the change position of the focal position in the imaging apparatus 1 according to the present embodiment.

As shown in Fig. 5, a case when a plurality of subjects H1 to H4 is present in the focusing enabled range from the macro side to the infinity side will be considered. In this case, when a plurality of pieces of image data in different focal positions is acquired by multifocus imaging, it is necessary for at least one piece of image data regarding the subjects H1 to H4 to be in focus.

When the focal position is changed within the focusing enabled range in a stepwise manner, as shown, for example, in A of Fig. 5, the focal position may be changed linearly at equal intervals or, as shown, for example, in B of Fig. 5, the focal position may be changed by the amount of change of the focal position.

In the example in A of Fig. 5, the focal position is changed to change positions P1, P2, P3, P4, P5, P6 in a stepwise manner and the amount of change of the focal position (that is, the distance between adjacent focal positions) is a constant value d. Thus, while there is an advantage of easy position control of the focal position by changing the focal position in Z axis direction at same intervals, as described later, there is a disadvantage of an increased number of times of changing the focal position to bring all the subjects H1 to H4 in the focusing enabled range into focus.

In the example in B of Fig. 5, by contrast, the focal position is changed to change positions P1, P2, P3, P4, P5, P6 in a stepwise manner and the amounts of change of the focal position (that is, the distance between adjacent focal positions) are variable values d1 to d5. In this case, the amount of change of the focal position increases with an increasing distance (d1 < d2 < d3 < d4 < d5). The reason therefor is that the depth of field of an imaging optical system is small on the close-range side and is large on the long-range side and thus, an image with a subject in focus in any position can be obtained even if the amount of change of the focal position is increased on the long-range side. Settings of the focal position in accordance with the depth of field will be described in detail below.

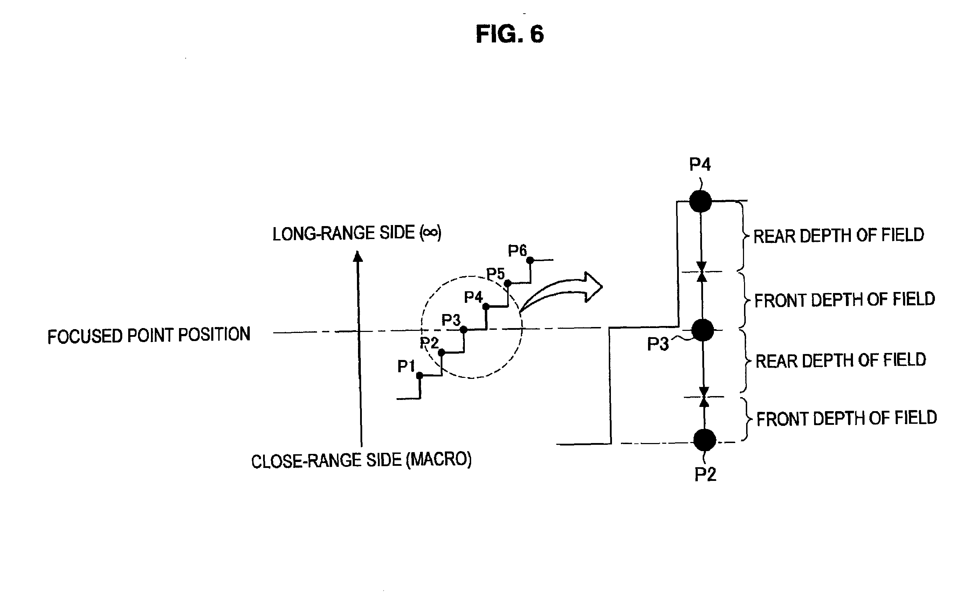

The depth of field will be described in detail with reference to Fig. 6. Fig. 6 is a schematic diagram illustrating the depth of field for each focal position according to the present embodiment.

Assume that when, as shown in Fig. 6, the focal position is changed from the position P1 to the position P6 in a stepwise manner, the position P3 is the focused point position. In this case, the range in which focusing is achieved on the close-range side (macro side) from the position P3 is called a backward depth of field and the range in which focusing is achieved on the long-range side (infinity side) from the position P3 is called a forward depth of field. The range obtained by combining the forward depth of field and the backward depth of field is the depth of field. When the focused point position is the position P3, the range in which focusing is achieved due to the depth of field is the focused range in the focused point position P3. That is, when the position P3 is brought into focus, an image in which not only a subject in the position P3, but also subjects within the focused range around the position P3 (subjects contained in the backward depth of field on the close-range side and in the forward depth of field on the long-range side) are in focus is obtained. Naturally, if the position P3 is the focused point position, only the position P3 is in strict focus, but subjects in the focused range around the position P3 (on the close-range side and the long-range side) also seem to be in focus in an actual image. Focus blurring increases with an increasing distance from the position P3, which is the focused point position, and focus blurring is considered to be within a permissible range if the position is within the focused range determined in accordance with the depth of field.

An optical apparatus such as an imaging optical system of the imaging apparatus 1 described above is **characterized in that** the depth of field decreases with the focal position closer to the close-range side and the depth of field increases with the focal position closer to the long-range side. Thus, when the focal position is changed in a stepwise manner, the focused range decreases with the focal position closer to the close-range side and the focused range increases with the focal position closer to the long-range side. Therefore, to bring the whole focusing enabled range into focus, as shown in B of Fig. 5, the focal position may be changed densely with a fine amount of change on the close-range side where the depth of field is small and the focal position may be changed coarsely with a large amount of change on the long-range side where the depth of field is large. That is, change positions when the focal position is changed in a stepwise manner is preferably set in accordance with the depth of field that varies depending on the distance from the imaging apparatus 1.

The depth of field changes depending on the aperture of the diaphragm 3 of an imaging optical system and thus, a change position P of the focal position may be set in accordance with the aperture of the diaphragm 3 (for example, the F number). Alternatively, the depth of field also changes depending on the focal length of the imaging optical system and thus, the change position P of the focal position may be set in accordance with the type of lens mounted in the imaging apparatus 1. Further, as described above, the depth of field also changes depending on the distance from the imaging apparatus 1 to the focal position and thus, the change position P of the focal position may be set in accordance with the distance (dependent on characteristics of a zoom lens). Therefore, in the imaging apparatus 1 according to the present embodiment, the change position P of the focal position is set in accordance with, for example, the aperture of the diaphragm 3, the type of lens, and the distance from the focal position to the imaging apparatus 1. Accordingly, the focal position can be changed efficiently and properly and also, all subjects present in any position within the focusing enabled range can be brought into focus without omission.

The timing to set the change position P of the focal position will be described. The imaging apparatus 1 may have the change position P of the focal position set in advance before multifocus imaging processing being performed. In such a case, the CPU 11 of the imaging apparatus 1 holds data of the preset change position P of the focal position and controls the deformed mirror device 2 so that the focal position is changed in a stepwise manner by using the data when multifocus imaging is performed.

Alternatively, the CPU 11 of the imaging apparatus 1 may calculate the change position P of the focal position in real time when multifocus imaging processing is performed and set the change position P dynamically to control the deformed mirror device 2 so that the focal position is changed to the set change position P in a stepwise manner. In this case, the CPU 11 can dynamically set the change position P of the focal position to an appropriate position in accordance with an imaging state by using data representing a correlation between the depth of field and the focal position and parameters such as the aperture of the diaphragm 3, the type of lens, and the distance from the focal position to the imaging apparatus 1 described above.

### [1.3. Multifocus Imaging]

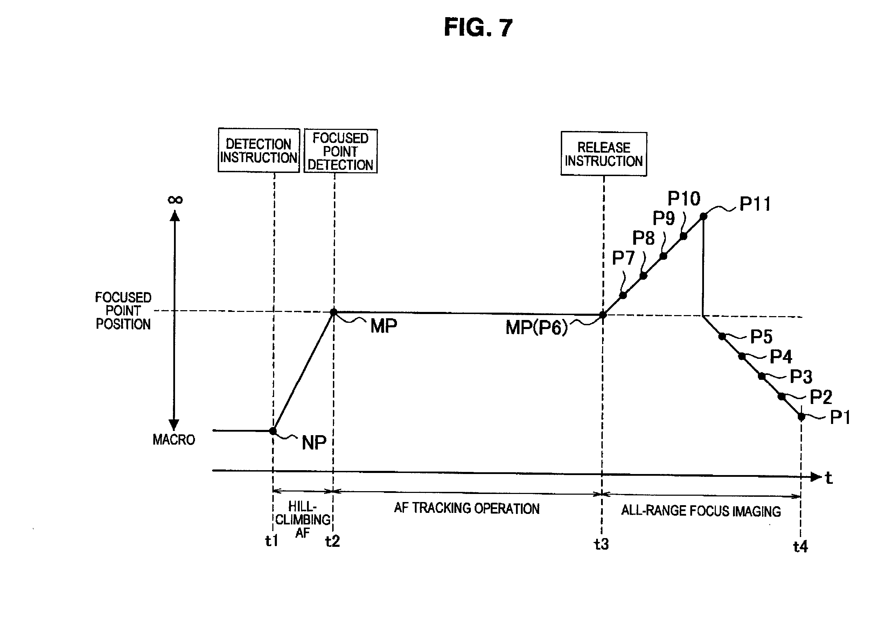

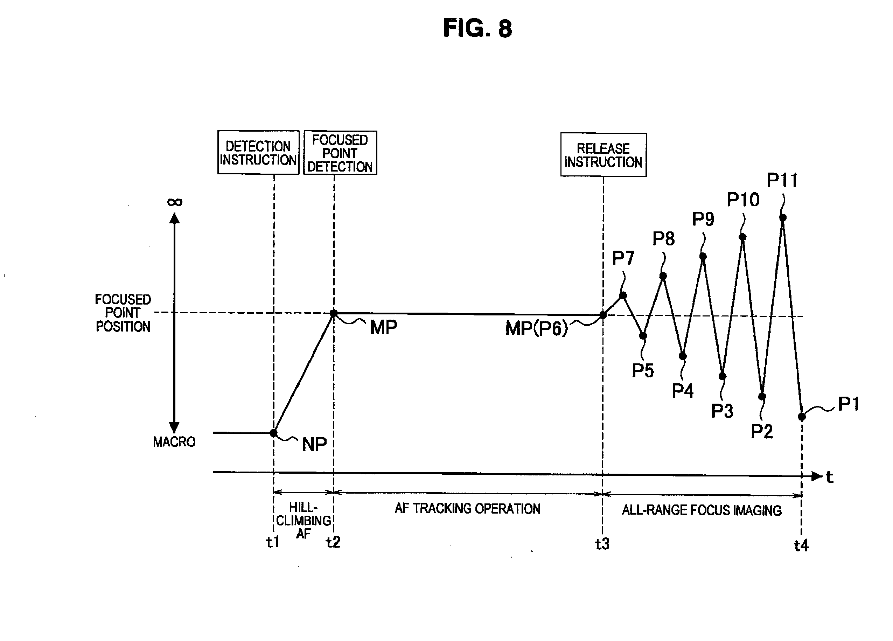

Next, focus control by the imaging apparatus 1 according to the present embodiment will be described in detail with reference to Figs. 7 and 8.

The imaging apparatus 1 according to the present embodiment detects the focused point position by performing AF processing in accordance with a detection instruction (for example, a half press operation of the release button). Then, the imaging apparatus 1 records image data obtained by imaging in the focused point position in accordance with one release instruction (for example, a full press operation of the release button) in the storage unit 17 and also performs all-range focus imaging processing. In the all-range focus imaging processing, the imaging apparatus 1 successively records, in the storage unit 17, a plurality of pieces of image data obtained by imaging in the changed focal position while changing the focal position within the focusing enabled range in a stepwise manner using the focused point position detected by AF processing as a reference.

Thus, the imaging apparatus 1 according to the present embodiment controls focus to detect the focused point position by AF processing and also controls focus to change the focal position in all-range focus imaging processing. A concrete example of the focus control according to the present embodiment will be described in detail below with reference to Figs. 7 and 8. In Figs. 7 and 8, the vertical axis (Z axis) represents the focal position and the horizontal axis represents the time.

### [1.3.1. Example of multifocus imaging]

First, an example of the focus control shown in Fig. 7 will be described. Fig. 7 is a schematic diagram showing an example of focus control that changes the focal position from a focused point position MP to the macro side in a stepwise manner after changing the focal position from the focused point position MP to the infinity side in a stepwise manner in multifocus imaging processing according to the present embodiment.

As shown in Fig. 7, when a detection instruction (AF start instruction) is received, the CPU 11 of the imaging apparatus 1 first performs AF processing to detect the focused point position MP where a predetermined subject in the imaging range is brought into focus (t1 to t2). The subject to be brought into focus in the AF processing may be, for example, a subject present in a predetermined position (for example, in the image center) when the detection instruction is received or a subject specified by the user through a touch panel or the like.

Further, as the AF processing, for example, the search of the focused point position by a general hill-climbing method (hill-climbing AF) can be used. The hill-climbing AF searches for the focused point position MP by, for example, acquiring evaluation parameters by analyzing image data obtained in the focal position while moving the focal position from the macro side (macro position NP) to the infinity side and evaluating the evaluation parameters. The hill-climbing AF can also be performed by moving the focal position from the infinity (infinity position FP) to the macro side as a matter of course.

The search of the focused point position MP by the hill-climbing method is performed by the focusing evaluation value Ev formed by the signal processing unit 6 being acquired by the CPU 11. Various concrete techniques of the search for the focused point position MP by the hill-climbing method are known, but basically, for example, the following technique can be adopted.

First, the CPU 11 sets the focal position to the macro (called as Sn) and acquires the value of the focusing evaluation value Ev calculated in this state. Then, the CPU 11 sets the focal position to a focal position (called as Sn+1) farther from the macro Sn by a preset distance t and acquires the value of the focusing evaluation value Ev calculated in this state. After acquiring the evaluation value Ev in the focal positions separated from each other by the distance t in this manner, the CPU 11 determines in which focal position a better value of the focusing evaluation value Ev is obtained. If the value of the focusing evaluation value Ev in the macro Sn is higher, the CPU 11 decides the macro Sn as the focused point position. Conversely, if the value of the evaluation value Ev in the focal position Sn+1 is higher, the CPU 11 can decide that the focused point position is in a focal position of the focal position Sn+1 or thereafter. In this case, the CPU 11 acquires the focusing evaluation value Ev in a focal position Sn+2 farther by the distance t and determines in which of the focal position Sn+1 and the focal position Sn+2 a better value of the evaluation value Ev is obtained. If the value of the focusing evaluation value Ev in the focal position Sn+1 is higher, the CPU 11 decides the focal position Sn+1 as the focused point position. If the value of the evaluation value Ev in the focal position Sn+2 is higher, the CPU 11 can decide that the focused point position is in a focal position of the focal position Sn+2 or thereafter and thus, acquires the focusing evaluation value Ev in a focal position Sn+3 farther by the distance t and determines in which of the focal position Sn+2 and the focal position Sn+3 a better value of the evaluation value Ev is obtained.

If a better the evaluation value Ev is obtained from the focal position farther by the distance t also thereafter, the CPU 11 compares with the evaluation value Ev acquired by moving the focal position farther by the distance t. Then, if the value of the evaluation value Ev in the newly moved focal position becomes lower, the CPU 11 decides the focal position moved to immediately before as the focal position.

In the manner as described above, the focused point position MP is detected by the hill-climbing AF. In addition to the hill-climbing AF, any method such as the phase difference detection method and the contrast detection method can be used as the AF processing mode.

In the phase difference detection method, two images are generated from a subject image incident through an imaging optical system by a separator lens in the image sensor, the interval between the images is measured by a line sensor (AF element 7) to detect the amount of blurring of focus, and determines the focused point position based on the amount of blurring of the focus. On the other hand, the contrast detection method is a detection method based on an idea that the contrast of an image obtained by imaging is highest when focusing is achieved. According to the contrast detection method, image data obtained by capturing a subject image by the image sensor 4 is analyzed and a lens position where the contrast value becomes highest is searched for by moving the focal position. In this case, the contrast value is calculated while moving the focal position and the focused point position is determined from a trajectory of changes thereof. Therefore, the contrast detection method requires a longer search time than the phase difference detection method, but can advantageously perform AF processing by the image sensor 4 for imaging.

Next, the CPU 11 controls an AF tracking operation in a period after the completion of detection of the focused point position MP before a release instruction is received (t2 to t3). The tracking operation is an operation to bring a subject into refocus if the subject brought into focus moves in the period t2 to t3. The AF tracking operation is frequently used in digital camcorders, but may also be used in digital still cameras. Instead of performing the AF tracking operation in the period t2 to t3, the focus may be fixed to the initially detected focused point position.

In the above period t1 to t3, imaging processing by the image sensor 4 is constantly performed and image data obtained by the imaging is displayed in the display unit 15 as a live view image. The user inputs a release instruction of the imaging apparatus 1 by performing, for example, a full press operation of the release button at the time of deciding as a good opportunity to capture an image while viewing such a live view image. The release instruction may automatically be issued by the imaging apparatus 1 based on detection of a smile or the like.

When a release instruction is received, the CPU 11 records, in the storage unit 17, image data D6 obtained by capturing a subject image in the focused point position MP (corresponding to the change position P6 of the focal position) by the image sensor 4 upon receiving the instruction (t3). Accordingly, the image data D6 in which the subject in the focused point position MP detected by the AF processing is in focus can be recorded as save image data. Further, immediately after recording the image data D6 in the focused point position MP, the CPU 11 performs all-range focus imaging processing (t3 to t4).

More specifically, as shown in Fig. 7, the CPU 11 first controls the deformed mirror device 2 to change the focal position from the focused point position MP to the infinity side in a stepwise manner. Accordingly, the focal position is successively changed to predetermined change positions P7, P8, P9, P10, P11. Thus, while changing the focal position in this manner, the CPU 11 records image data D7, D8, D9, D10, D11 obtained by capturing a subject image in each of the change positions P7, P8, P9, P10, P11 by the image sensor 4 in the storage unit 17. As a result, a plurality of pieces of image data D6 to D11 in which subjects in the range from the focused point position to infinity of the focusing enabled range are in focus is recorded.

Further, the CPU 11 controls the deformed mirror device 2 to change the focal position from the focused point position MP to the macro side in a stepwise manner. Accordingly, the focal position is successively changed to predetermined change positions P5, P4, P3, P2, P1. While changing the focal position in this manner, the CPU 11 records image data D5, D4, D3, D2, D1 obtained by capturing a subject image in each of the change positions P5, P4, P3, P2, P1 by the image sensor 4 in the storage unit 17. As a result, a plurality of pieces of image data D5 to D1 in which subjects in the range from the focused point position to macro of the focusing enabled range are in focus is recorded.

In the manner as described above, the imaging apparatus 1 can record a plurality of pieces of image data D1 to D11 in which subjects in the entire focusing enabled range from the macro side to the infinity side are in focus by performing all-range focus imaging processing (t3 to t4). In this case, the focal position is changed in a stepwise manner in the order gradually farther from the focused point position MP toward the infinity side (or the macro side) (change positions P7 → P8 → P9 → P10 → P11). Accordingly, on the infinity side of the focused point position MP, image data in which the focal position closer to the focused point position MP is in focus can be acquired in timing closer to the release instruction (t3). For example, the image data D7 in which the position P7 closest to the focused point position MP is in focus can be acquired earlier than the image data D8 in which the position P8 second closest to the focused point position MP. Therefore, image data in which the focal position closer to the focused point position MP is in focus can preferentially be acquired in timing closer to a good opportunity to capture an image (that is, the release instruction t3).

Normally, the possibility that a subject desired by the user is present increases for the focal position (for example, P7, P8) closer to the focused point position MP of the focusing enabled range. Thus, by acquiring image data in the order as described above, image data (for example, D7, D8) in which the subject desired by the user is in focus can preferentially acquired in timing closer to a good opportunity to capture an image. That is, image data (for example, D7, D8) in which the subject desired by the user is in focus is first acquired and then, image data (for example, D10, D11) in which other subjects are in focus can preliminarily be secured. Thus, missing a good opportunity to capture an image can be avoided in all-range focus imaging processing.

In the example in Fig. 7, after the focal position is first changed from the focused point position MP to the infinity side (P7 to P11), the focal position is changed from the focused point position MP to the macro side (P5 to P1) to perform all-range focus imaging processing, but the present invention is not limited to such an example. In contrast to the above example, all-range focus imaging processing may be performed by first changing the focal position from the focused point position MP to the macro side (P5 to P1) and then changing the focal position from the focused point position MP to the infinity side (P7 to P11).

Next, an example of the focus control shown in Fig. 8 will be described. Fig. 8 is a schematic diagram showing an example of the focus control in which the focal position is alternately changed to the infinity side and the macro side starting with a change position P closest to the focused point position MP in multifocus imaging processing according to the present embodiment.

As shown in Fig. 8, when a detection instruction (AF start instruction) is received, the CPU 11 of the imaging apparatus 1 first performs, for example, the hill-climbing AF processing to detect the focused point position MP in which a predetermined subject within the imaging range is in focus (t1 to t2). Next, the CPU 11 controls the AF tracking operation in a period after the detection completion of the focused point position MP before a release instruction is received (t2 to t3). The above processing (t1 to t3) is substantially the same as the processing (t1 to t3) in Fig. 7 and thus, details thereof are omitted.

Then, the CPU 11 records, in the storage unit 17, the image data D6 obtained by capturing a subject image in the focused point position MP (corresponding to the change position P6 of the focal position) by the image sensor 4 when a release instruction is received (t3). Accordingly, the image data in which the subject in the focused point position MP detected by the AF processing is in focus can be recorded as save image data. Further, immediately after recording the image data D6 in the focused point position MP, the CPU 11 performs all-range focus imaging processing (t3 to t4).

More specifically, as shown in Fig. 8, the CPU 11 first controls the deformed mirror device 2 to alternately change the focal position to the infinity side and the macro side in order of increasing distance from the focused point position MP in a stepwise manner. Accordingly, the focal position is successively changed in order of predetermined change positions P7, P5, P8, P4, P9, P3, P10, P2, P11, P1. Thus, while changing the focal position alternately to the infinity side and the macro side in this manner, the CPU 11 records image data D7, D5, D8, D4, D9, D3, D10, D2, D11, D1, obtained by capturing a subject image in each of the change positions P7, P5, P8, P4, P9, P3, P10, P2, P11, P1 by the image sensor 4 in the storage unit 17.

In the manner as described above, the imaging apparatus 1 can record a plurality of pieces of image data D1 to D11 in which subjects in the entire focusing enabled range from the macro side to the infinity side are in focus by performing all-range focus imaging processing (t3 to t4). In this case, the focal position is changed to the infinity side and the macro side in order of increasing distance of the change position from the focused point position MP (change positions P7 → P5 → P8 → P4 → P9 → P3 → P10 → P2 → P11 → P1). Accordingly, on both the macro side and the infinity side of the focused point position MP, image data in which the focal position closer to the focused point position MP is in focus can be acquired in timing closer to the release instruction (t3). For example, the image data D7, D5 in which the positions P7, P5 closest to the focused point position MP are in focus can be acquired earlier than the image data D8, D4 in which the positions P8, P4 second closest to the focused point position MP. Therefore, on both the macro side and the infinity side, image data in which the focal position closer to the focused point position MP is in focus can preferentially be acquired in timing closer to a good opportunity to capture an image (that is, the release instruction t3).

Therefore, by acquiring image data in the order shown in Fig. 8, compared with the example shown in Fig. 7, image data (for example, D7, D5) in which the subject desired by the user is in focus can be obtained preferentially in timing closer to a good opportunity to capture an image. That is, image data (for example, D7, D5) in which the subject desired by the user is in focus is first acquired and then, image data (for example, D11, D1) in which other subjects are in focus can preliminarily be secured. Thus, missing a good opportunity to capture an image can further be avoided in all-range focus imaging processing.

In the example in Fig. 8, all-range focus imaging processing is performed by alternately changing the focal position in the order of the infinity side (P7), the macro side (P5), the infinity side (P8), ... from the focused point position MP, but the present invention is not limited to such an example. In contrast to the above example, all-range focus imaging processing may be performed by alternately changing the focal position in the order of the macro side (P5), the infinity side (P7), the macro side (P4), ...from the focused point position MP. That is, it is an optional selection to change the focal position first to the infinity side or the macro side.

In the foregoing, the imaging apparatus 1 according to the present embodiment and the imaging method thereof have been described. According to the present embodiment, the following effects can be obtained.

The user of the imaging apparatus 1 brings a desired subject into focus by using the AF function of the imaging apparatus 1 or manually to capture the image thereof. Particularly for single-lens reflex cameras, it is necessary to correctly bring the desired subject into focus. When the focus is adjusted, bringing the desired subject into focus may fail even when the AF function is used, as well as when manual focus is used. However, the imaging apparatus 1 according to the present embodiment performs not only normal imaging processing to acquire image data in which a subject in the focused point position is in focus in accordance with a release operation, but also all-range focus imaging processing to acquire a plurality of pieces of image data while changing the focal position. Therefore, among the plurality of pieces of image data obtained by the all-range focus imaging processing, image data in which the desired subject is in focus is always present. Consequently, the user can reliably acquire image data in which the desired subject is in focus so that the user can capture images without caring about whether the focus of AF processing or the like is successful.

The user may want to have an image having the same angle of view and in which another subject is in focus after obtaining image data captured by bringing some subject into focus. Even in such a case, according to the present embodiment, high-precision image data captured by bringing the other subject into focus by actually adjusting imaging optical system can be acquired ex post facto without depending on retroactive image processing.

First, the imaging apparatus 1 can automatically acquire a plurality of pieces of image data in which any subject is in focus extending over the entire focusing enabled range from the macro side to the infinity side in accordance with one release instruction by performing the above all-range focus imaging processing. In the all-range focus imaging processing, as shown in Figs. 7 and 8, the focal position is changed in a stepwise manner using the focused point position detected by the AF processing as a reference. Therefore, image data in which the focal position closer to the focused point position MP can preferentially be acquired in timing closer to a good opportunity to capture an image (that is, a release instruction) so that missing a good opportunity to image a desired subject present near the focused point position can be avoided.

Further, the imaging apparatus 1 can automatically acquire a plurality of pieces of image data in which any subject is in focus extending over the entire focusing enabled range from the macro side to the infinity side in accordance with one release instruction by performing the above all-range focus imaging processing. In the all-range focus imaging processing, as shown in Figs. 7 and 8, the focal position is changed in a stepwise manner using the focused point position detected by the AF processing as a reference. Therefore, image data in which the focal position closer to the focused point position MP can preferentially be acquired in timing closer to a good opportunity to capture an image (that is, a release instruction) so that missing a good opportunity to image a desired subject present near the focused point position can be avoided.

A case when, for example, the user wants to capture an image when a subject smiles will be considered. In this case, if, like the multifocus imaging described in Patent Literature 1, images are successively captured by simply changing the focal position from the macro side to the infinity side regardless of the focused point position, there is the possibility of being unable to capture an image while the person smiles by missing a good opportunity to capture an image. Thus, when multifocus imaging of a subject providing a good opportunity to capture an image is performed, there is a problem of missing a good opportunity to capture an image according to the method described in Patent Literature 1.

In the present embodiment, by contrast, a desired subject is detected by AF processing, an image in the focused point position is captured in accordance with a release instruction, and also images are successively captured over the entire focusing enabled range including the subject starting with the focal position near the focused point position. Therefore, even when multifocus imaging of a subject (for example, a smiling face of a person) providing a good opportunity to capture an image is performed, an image in which the subject and the vicinity thereof are in focus can be captured immediately after a release instruction and thus, a good opportunity to capture an image is not missed.

When a plurality of pieces of image data is recorded in multifocus imaging, there is a problem that it is necessary to present to the user which subject the user aims at during imaging when a plurality of pieces of image data is presented to the user ex post facto. Regarding this problem, multifocus imaging according to the present embodiment is also superior to the method described in Patent Literature 1. That is, according to the multifocus imaging in the present embodiment, among a plurality of pieces of recorded image data, image data focused by AF processing becomes an index indicating which subject the user aims at during imaging. Therefore, when the user views the plurality of pieces of image data ex post facto, the imaging apparatus 1 can present which subject the user aims at during imaging by first presenting image data focused by AF processing. Therefore, after checking the presentation, the user can select from among the plurality of pieces of image data an image in which a desired subject is in focus.

Also in the imaging apparatus 1 according to the present embodiment, the deformed mirror device 2 is used as a focus mechanism to adjust the focal position and thus, the focal position can be changed fast in multifocus imaging processing. Therefore, multifocus imaging processing can be performed more quickly (for example, within 1 sec) than in the past.

### [1.3.2. First modification of multifocus imaging]

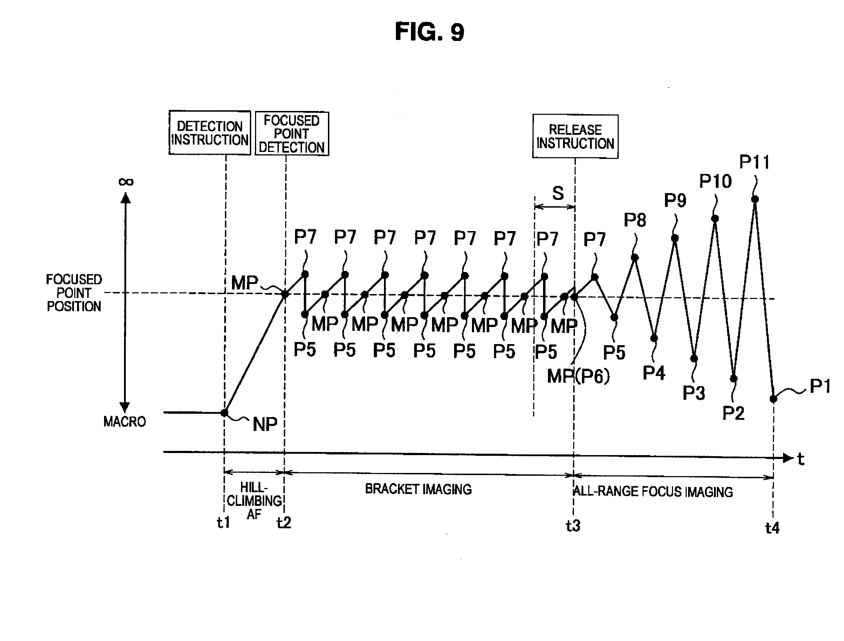

Next, a first modification of the focus control by the imaging apparatus 1 according to the present embodiment will be described in detail with reference to Fig. 9. Fig. 9 is a schematic diagram showing an example of the focus control in AF processing, bracket imaging processing, and all-range focus imaging processing according to the present embodiment. In Fig. 9, the vertical axis (Z axis) represents the focal position and the horizontal axis represents the time.

As shown in Fig. 9, the imaging apparatus 1 detects the focused point position by performing AF processing in accordance with a detection instruction (t1 to t2) and, in a period after the completion of detection of the focused point position before a release instruction, performs bracket imaging (t2 to t3). In the bracket imaging, the imaging apparatus 1 records image data obtained by capturing subject images in a plurality of changed focal positions while periodically changing the focal position within a predetermined range centered on the focused point position detected by the AF processing in the storage unit 17. Then, the imaging apparatus 1 records, in the storage unit 17, image data obtained by imaging in the focused point position in accordance with one release instruction and also performs all-range focus imaging processing (t3 to t4). In the all-range focus imaging processing, the imaging apparatus 1 successively records a plurality of pieces of image data obtained by imaging in the changed focal position in the storage unit 17 while changing the focal position within the focusing enabled range in a stepwise manner using the focused point position detected by the AF processing as a reference.

Thus, the example in Fig. 9 is **characterized in that** the CPU 11 performs bracket imaging processing in a period after the completion of detection of the focused point position MP before a release instruction is received (t2 to t3). In the bracket imaging processing, the CPU of the imaging apparatus 1 alternately changes the focal position to the position P7 on the infinity side and the position P5 on the macro side around the focused point position MP detected by the AF processing. Accordingly, the focal position is changed periodically in a stepwise manner like the position P7 → P5 → MP (= P6) → P7 → P5 → MP (= P6) → ... within the predetermined range (in the illustrated example, within the range of P5 to P7) centered on the focused point position MP. Thus, the imaging apparatus 1 captures a subject image by the image sensor 4 in each change position P7, P5, MP, ... while changing the focal position periodically in a stepwise manner to generate image data D7, D5, DM (= D6), ... based on an image signal output from the image sensor 4. The CPU 11 temporarily saves the image data D7, D5, DM, ... generated in this manner in a cache memory (not shown) or the like.

By performing bracket imaging processing (t2 to t3) as described above, the imaging apparatus 1 can periodically acquire a plurality of pieces of image data D7, D5, DM, ... in which the focal position near the focused point position MP (on the infinity side and the macro side) is in focus. The image data D7, D5, DM, ... can be used as image data to compensate for a case when an AF processing error occurs, that is, a subject desired by the user is not in focus by AF processing. That is, by periodically changing the focal position near the focused point position MP detected by AF processing, a subject positioned near the focused point position MP, even if not contained in the focused range centered on the focused point position MP, is likely to be contained in the focused range centered on the change position P5 or P7. Therefore, even if it is difficult to bring a subject desired by the user into focus by AF processing, the subject can be brought into focus by the image data D7 or D5 obtained by the above bracket imaging processing.

The above bracket imaging processing is repeated until a release instruction (t3) is issued. The CPU 11 saves the image data D7, D5, DM for one period S immediately before the release instruction of a plurality of pieces of image data D7, D5, DM, ... acquired by the above bracket imaging processing and temporarily saved in the cache memory in the storage unit 17 and deletes other duplicate old image data D7, DM, D5, .... Images are repeatedly captured in the same focal positions P5, P7, MP in the bracket imaging processing and thus, other duplicate old image data D7, D5, DM, ... may be deleted to leave the latest image data D7, DM, D5 obtained immediately before the release instruction. This is because the latest image data D7, DM, D5 obtained immediately before the release instruction reflects a good opportunity to capture an image more accurately.

In the present embodiment, all image data captured by bracket imaging is temporarily saved in a storing unit for temporary storage (for example, a cache memory), image data of at least one period S immediately before a release instruction is saved in a storing unit (for example, the storage unit 17) in accordance with the release instruction, and other image data is actively deleted from the temporary storing unit and invalidated. However, the present invention is not limited to such an example and at least the method of validating image data of at least one period S and invalidating other image data is optional. For example, after saving all image data in the storage unit 17 from the start, image data other than image data of at least one period S may be actively deleted from the storage unit 17 in accordance with a release instruction. Alternatively, the other image data may not be actively deleted and instead, left in the storing unit in accordance with a release instruction with settings (disable) to prevent the user from accessing the other image data. Alternatively, settings (enable) may be made so that the user can access only image data of at least one period S in accordance with a release instruction. In any case, image data immediately before a release instruction is important image data imaged in timing close to a good opportunity to capture an image immediately before the release instruction. Therefore, by enabling only image data of one period immediately before the release instruction of image data of a plurality of periods periodically captured by bracket imaging and presenting the image data of one period to the user, image data can efficiently be managed and presented.

If a release instruction is received during the bracket imaging processing, the CPU 11 records the image data D6 obtained by capturing a subject image in the focused point position MP (corresponding to the change position P6 of the focal position) by the image sensor 4 when the instruction is received in the storage unit 17 (t3). Accordingly, the image data D6 in which a subject in the focused point position MP detected by the AF processing is in focus can be recorded as save image data. Further, immediately after the image data D6 in the focused point position MP being recorded, the CPU 11 performs all-range focus imaging processing to record a plurality of pieces of image data D1 to D11 in which subjects in the entire focusing enabled range from the macro side to the infinity side are in focus in the storage unit 17 (t3 to t4). The all-range focus imaging processing (t3 to t4) is substantially the same as the all-range focus imaging processing described in Fig. 8 and thus, a detailed description thereof is omitted. The all-range focus imaging processing may be replaced by the all-range focus imaging processing described in Fig. 7.

According to the first modification of multifocus imaging described above, the following effect is obtained, in addition to the effects of above examples of Figs. 7 and 8. After AF processing is completed, bracket imaging processing is performed before a release instruction is received to obtain a focused image in a good opportunity to capture an image and thus, image data in which a subject desired by the user is in focus can be acquired without fail. That is, if a target subject is sharply in focus by the AF processing, bracket imaging processing before a release is unnecessary. However, the target subject may not be in focus by the AF processing. Thus, according to the present embodiment, by performing the bracket imaging processing before a release instruction, image data in which the target subject is in focus can reliably be obtained compensating for an AF processing error.

Further, in reality, there is a time difference between the time when the user decides a good opportunity to capture an image and the time when the user presses the release button to record image data in the focused point position. Thus, in the present embodiment, bracket imaging processing near the focused point position is performed before a release instruction to compensate for the time difference. Accordingly, image data in which a subject desired by the user is in focus can be recorded in advance before some good opportunity to capture an image. Therefore, even if there is the time difference, image data in which a subject desired by the user is correctly in focus can be acquired without missing a good opportunity to capture an image.

Image data acquired before a release instruction is valid only for a predetermined time (for example, one period S immediately before a release) set in the imaging apparatus 1 and thus, the amount of data of the image data recorded in the storage unit 17 of the imaging apparatus 1 can be reduced to a minimum.

### [1.3.3. Second modification of multifocus imaging]

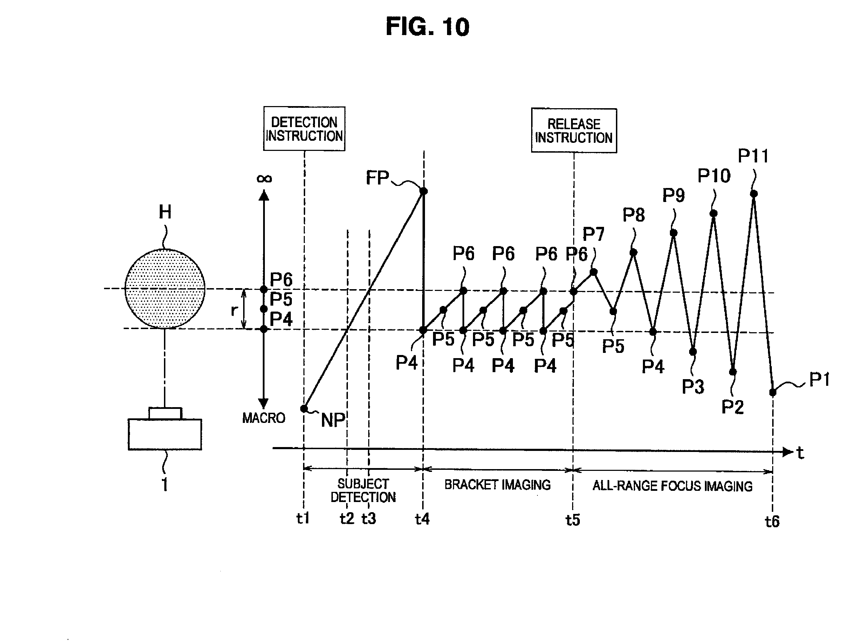

Next, a second modification of the focus control by the imaging apparatus 1 according to the present embodiment will be described in detail with reference to Fig. 10. Fig. 10 is a schematic diagram showing an example of the focus control in subject detection processing, bracket imaging processing, and all-range focus imaging processing according to the second modification of the present embodiment. In Fig. 10, the vertical axis (Z axis) represents the focal position and the horizontal axis represents the time.

As shown in Fig. 10, the imaging apparatus 1 performs subject detection processing in accordance with a detection instruction (for example, a half press operation of the release button) (t1 to t4). In the detection processing, evaluation parameters for subject detection are determined by analyzing image data obtained by capturing subject images in a plurality of changed different focal positions while changing the focal position within the focusing enabled range. Accordingly, the imaging apparatus 1 detects not only one or two or more subjects present in the imaging range, but also the range of the focused point position in which the detected subject is in focus. Then, the imaging apparatus 1 performs bracket imaging while changing the focal position in the detected range of the focused point position in a period after the completion of the subject detection processing before a release instruction is received (t4 to t5). In the bracket imaging, the imaging apparatus 1 records image data obtained by capturing subject images in the plurality of changed focal positions while periodically changing the focal position within the range of the focused point position in the storage unit 17. Then, the imaging apparatus 1 records image data obtained by imaging in any focal position within the range of the focused point position in accordance with one release instruction in the storage unit 17 and also performs all-range focus imaging processing like in Fig. 8 (t5 to t6).

Thus, the example in Fig. 10 is **characterized in that** the subject detection processing to detect subjects within the imaging range and the range of the focused point position thereof. The subject detection processing will be described in detail below.

As shown in Fig. 10, a case when one subject H is present within the imaging range of the imaging apparatus 1, the subject H is an object with a predetermined thickness or more in the depth direction (Z axis direction), and the imaging apparatus 1 detects the subject H and performs multifocus imaging will be considered.

First, when a detection instruction (subject detection start instruction) is received, the CPU 11 of the imaging apparatus 1 performs subject detection processing to detect the subject H present in the imaging range and also detects a range r of the focused point position in which the subject H is brought into focus (t1 to t4). The subject detection processing can be realized by using any AF mode such as the above-mentioned hill-climbing AF method, phase difference detection method, and contrast detection method.

Here, an example of detecting a subject by the contrast detection method will be described. The CPU 11 analyzes image data of an image obtained by imaging an imaging space containing one or two or more subjects to search for the focal position in which the contrast value of the image is highest while moving the focal position. Accordingly, the CPU 11 can determine the focal position in which the contrast output takes the maximum value as the focused point position of the subject. Further, the CPU 11 can determine the range of the focused point position in which a subject can be brought into focus depending on permissible blurring in accordance with the depth of field from the width of peak contrast output.

From the above subject detection processing (t1 to t4), the CPU 11 can determine the range r of the focused point position in which the subject H is in focus based on contrast output detected in time t2 to t3 while changing the focal position from a macro position NP to an infinity position FP. In the illustrated example, the range r of the focused point position is the range of the focal position P4 to the focal position P6. Because the front side of the subject H can be imaged by the imaging apparatus 1, but it is difficult to image the rear side thereof and thus, the range r of the focused point position becomes the range of the focal position corresponding to a portion of the subject H on the front side.

Next, the CPU 11 performs bracket imaging processing while periodically changing the focal position within the range r of the focused point position detected by the subject detection processing in a period after the completion of detection of the subject H and the range r of the focused point position before a release instruction is received (t4 to t5). In the illustrated example, the focal position is changed periodically in a stepwise manner like the position P4 → P5 → P6 → P4 → P5 → P6 → ... within the range r of the focused point position. The imaging apparatus 1 captures a subject image by the image sensor 4 in each change position P4, P5, P6, ... while changing the focal position periodically in a stepwise manner in this manner to generate the image data D4, D5, D6, ... based on an image signal output from the image sensor 4. The CPU 11 temporarily saves the image data D4, D5, D6, ... generated in this manner in a cache memory (not shown) or the like.

Thus, the imaging apparatus 1 can periodically acquire a plurality of pieces of image data D4, D5, D6, ... in which the subject H with a thickness in the depth direction is in focus by performing the bracket imaging processing (t4 to t5). By acquiring the image data D4, D5, D6, ..., image data in which a front side portion, a center portion, and a rear side portion of the subject H with a thickness are each correctly in focus can be acquired.

If a release instruction is received during the bracket imaging processing, the CPU 11 records the image data D6 obtained by capturing a subject image in any focal position (for example, the position P6 in the illustrated example) within the range r of the focused point position by the image sensor 4 when the instruction is received in the storage unit 17 (t5). Accordingly, the image data D6 in which the subject H detected by the subject detection processing is in focus can be recorded as save image data. Further, immediately after the image data D6 being recorded, the CPU 11 performs all-range focus imaging processing to record a plurality of pieces of image data D1 to D11 in which subjects in the entire focusing enabled range from the macro side to the infinity side are in focus in the storage unit 17 (t5 to t6). The all-range focus imaging processing (t5 to t6) is substantially the same as the all-range focus imaging processing described in Fig. 8 and thus, a detailed description thereof is omitted. The all-range focus imaging processing may be replaced by the all-range focus imaging processing described in Fig. 7.

According to the second modification of multifocus imaging described above, the subject detection processing is performed, instead of the AF processing, and thus, not only one or two or more subjects H present in the imaging range, but also the range r of the focused point position for the subject H can be detected.

When, for example, the large subject H with a thickness in the depth direction is imaged, it is difficult to adjust which portion of the front side, rear side, and center portion to bring into focus if the subject H is imaged by adjusting the focus by AF processing. In the present embodiment, by contrast, bracket imaging is performed while changing the focal position within the range r of the focused point position detected by the subject detection processing and thus, a plurality of pieces of image data in which all positions of the front side, rear side, and center portion of the subject H are in focus with precision can be obtained. That is, in the present embodiment, multifocus images of one subject H can be obtained by scanning the subject H with a thickness in the depth direction. Therefore, the user can easily acquire a plurality of pieces of image data in which a desired portion of the subject H is precisely in focus after imaging. Moreover, by acquiring a plurality of pieces of image data on one subject H, a three-dimensional image by image merging can easily be created with precision.

Further in the present embodiment, the subject H is extracted from within the imaging range, the subject is imaged in a best opportunity to capture an image, and all-range focus imaging is performed in the remaining time. Accordingly, a subject extraction can be executed precisely and also multifocus image data of the subject H desired by the user can be acquired within a best opportunity to capture an image.

### [1.3.4. Third modification of multifocus imaging]

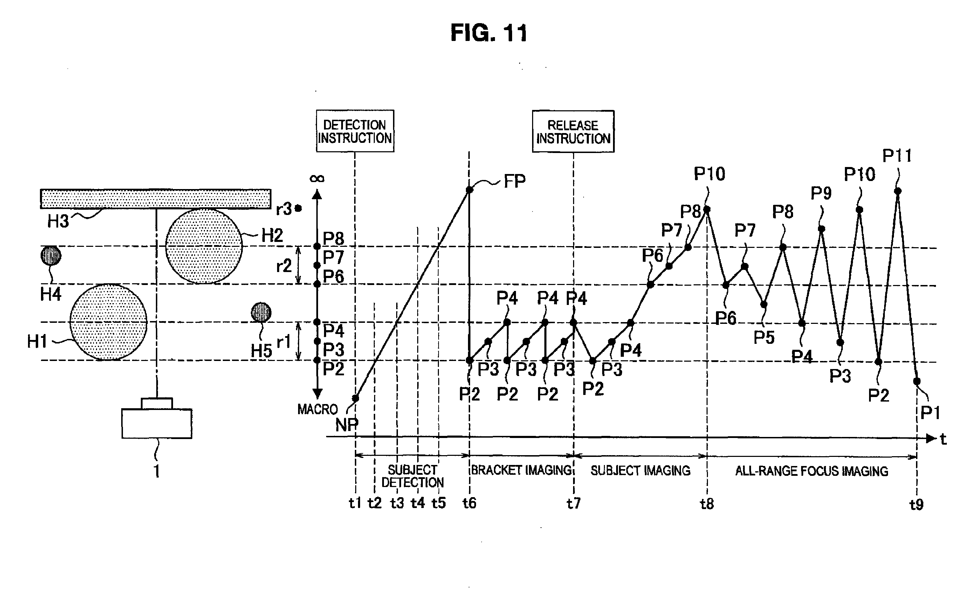

Next, a third modification of the focus control by the imaging apparatus 1 according to the present embodiment will be described in detail with reference to Fig. 11. Fig. 11 is a schematic diagram showing an example of the focus control in subject detection processing, bracket imaging processing, subject imaging processing, and all-range focus imaging processing according to the third modification of the present embodiment. In Fig. 11, the vertical axis (Z axis) represents the focal position and the horizontal axis represents the time.

As shown in Fig. 11, the imaging apparatus 1 performs subject detection processing in accordance with a detection instruction (for example, a half press operation of the release button) (t1 to t6). Accordingly, the imaging apparatus 1 detects not only a plurality of subjects present in the imaging range, but also the range of the focused point position in which each of the detected subjects is in focus. Next, the imaging apparatus 1 performs subject selection processing to select one or two or more important subjects from among the plurality of subjects detected by the subject detection processing based on user input. Then, the imaging apparatus 1 performs bracket imaging while changing the focal position in the range of the focused point position in which one subject selected from one or two or more of the selected subjects in a period after the completion of the subject detection processing before a release instruction is received (t6 to t7).

Then, the imaging apparatus 1 records image data obtained by imaging in any focal position within the range r of the focused point position in accordance with one release instruction (for example, a full press operation of the release button) in the storage unit 17. Further, the imaging apparatus 1 performs subject imaging processing that scans only the range of the focused point position in which one or two or more subjects selected by the subject selection processing are in focus (t7 to t8). After the subject imaging processing is completed, the imaging apparatus 1 performs all-range focus imaging processing like in Fig. 8 (t8 to t9).

Thus, the example in Fig. 11 is **characterized in that** the subject imaging processing is performed on a subject detected by the subject detection processing. The subject detection processing and subject imaging processing will be described in detail below.

As shown in Fig. 11, a case when five subjects H1, H2, H3, H4, H5 are present within the imaging range of the imaging apparatus 1, the subjects H1 to H5 are detected by the imaging apparatus 1, and the important subjects H1 to H3 are selected for multifocus imaging will be described. In the example in Fig. 11, in addition to the important subjects H1 to H3 such as persons, the less important subjects H4 and H5 (for example, objects other than persons) are added. It is assumed that the subject H3 is the wall of a building or the like and the rear side of the subject H3 is not visible when viewed from the imaging apparatus 1.

First, when a detection instruction (subject detection start instruction) is received, the CPU 11 of the imaging apparatus 1 performs subject detection processing to detect the subjects H1 to H5 which are present within the imaging range and also detects ranges r1 to r5 of the focused point position in which the subjects H1 to H5 are in focus respectively (t1 to t6).

The CPU 11 sorts the detected five subjects H1 to H5 into the important subjects H1 to H3 and the less important subjects H4 and H5 and selects the important subjects H1 to H3 as imaging targets for subject imaging processing (t7 to t8). The selection may manually be made, for example, based on user input on a touch panel or the like or by the CPU 11 automatically based on a result of image processing of image data (for example, face recognition) acquired by imaging. For example, a subject recognized by face recognition is a person with a high degree of importance and is selected as an imaging target for subject imaging processing.

Then, like the above examples, the imaging apparatus 1 performs the bracket imaging processing (t6 to t7) and the subject imaging processing (t7 to t8) in accordance with a release operation. In the subject imaging processing (t7 to t8), however, only the important subjects H1 to H3 selected from the above five subjects H1 to H5 are imaged.

Thus, the imaging apparatus 1 according to the present embodiment first performs subject detection processing to scan the entire focusing enabled range in accordance with a detection instruction to detect in which focal positions the subjects H1 to H5 to be imaged are located. Next, the imaging apparatus 1 images only portions (focal positions P2 to P4, P6 to P8, P10) in which the subjects H1 to H3 selected from the subjects H1 to H5 are located in accordance with a release instruction and does not image portions (focal positions P1, P5, P9, P11) in which none of the subjects H1 to H3 is located. Therefore, the subject imaging processing images only necessary portions in which subjects are present and so can be performed efficiently in a shorter time that the above all-range focus imaging processing.

Further, after the completion of the subject imaging processing (t7 to t8), like the example in Fig. 8, the imaging apparatus 1 performs all-range focus imaging over the entire focusing enabled range while changing the focal position in a stepwise manner (t8 to t9). With the all-range focus imaging, image data in which the subjects H4 and H5 considered to be unimportant are in focus can also be secured by way of precaution. Incidentally, only the subject imaging processing (t7 to t8) may be performed without performing the all-range focus imaging (t8 to t9).

Thus, the imaging apparatus 1 according to the present embodiment selects only the important subjects H1 to H3 to perform subject imaging processing thereon, instead of all the detected subjects H1 to H5. Accordingly, the subject imaging processing can be omitted for the subjects H4 and H5 not desired by the user, which leads to the improved processing speed and efficiency and a reduced amount of save data of imager data.

In the foregoing, the examples of multifocus imaging processing by the imaging apparatus 1 according to the present embodiment have been described with reference to Figs. 7 to 11. The multifocus imaging includes, as described above, the all-range focus imaging processing and subject imaging processing.

### [1.4. Overview of Slideshow Display]

According to the above multifocus imaging, the imaging apparatus 1 can acquire a plurality of pieces of image data by capturing subject images in a plurality of different focal positions while changing the focal position within the same imaging range (angle of view). The plurality of pieces of image data is associated as an image data group and recorded in the storage unit 17.

When the multifocus imaging is performed, the CPU 11 of the imaging apparatus 1 generates metadata on a plurality of pieces of image data belonging to an image data group obtained by imaging and records the metadata by associating with the plurality of pieces of image data in the storage unit 17. When recording a plurality of image data groups by performing multifocus imaging of mutually different imaging ranges (angles of view), a plurality of pieces of metadata corresponding to a plurality of pieces of image data belonging to each group of image data is generated and recorded.

Metadata is additional information about a plurality of pieces of image data belonging to an image data group. The metadata contains identification information (such as the image ID and file name) of each piece of image data belonging to an image data group, focal position information representing the focal position when each piece of image data is captured, and focused image determination information to determine focused image data in which a predetermined subject is in focus from an image data group. The "focused image data in which a predetermined subject is in focus" is image data obtained by capturing a subject image in the focused point position in which a predetermined subject is in focus. The predetermined subject is, for example, a subject automatically brought into focus by the AF function of the imaging apparatus 1, a subject detected by the subject detection processing, or a user-selected subject. Thus, the predetermined subject is a specific subject reflecting the intention of the imager of which subject to be brought into focus during imaging. Therefore, focused image data is imaged in the focused point position in which a user-desired specific subject is in focus and thus functions as representative image data representing a plurality of pieces of image data belonging to an image data group.

Thus, when a plurality of pieces of image data belonging to an image data group (a sequence of pieces of image data imaged in mutually different focal positions for the same angle of view) is displayed as a slideshow, a display control device according to the present embodiment controls a slideshow display mode based on the metadata. For example, the display control device successively displays a plurality of pieces of image data belonging to the group of image data in order of focal position based on focal position information contained in the metadata. The display control device also determines focused image data (representative image data) from the plurality of pieces of image data based on focused image determination information contained in the metadata to show the focused image data as s slideshow in a display mode that enables the user to recognize the focused image data more easily than other image data. Accordingly, representative image data (focused image data) is more highlighted than other image data. Therefore, a plurality of similar images with different focal positions can effectively be shown as a slideshow and the user can grasp the intention (which subject is in focus when imaged) of the imager while browsing the plurality of images displayed as a slideshow.

The display control device and the display control method to control a slideshow display mode as described above will be described in detail below. In the example below, an example of a personal computer (PC) is taken as an embodiment of the display control device and a case when the PC displays an image data group acquired from the imaging apparatus 1 as a slideshow will be described.

### [1.5. Configuration of Display control device]

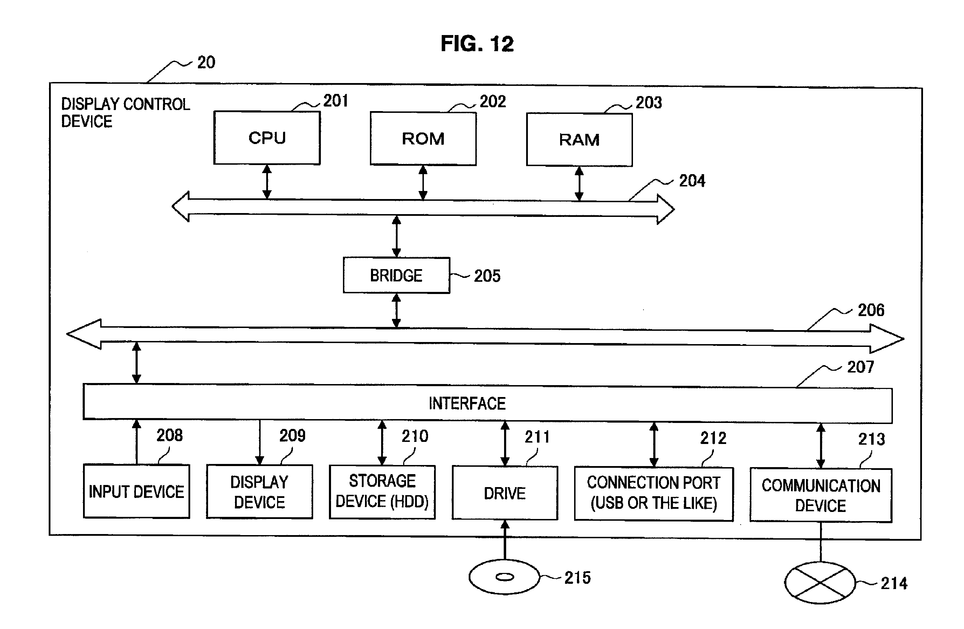

Next, the hardware configuration of a display control device 20 according to the present embodiment will be described with reference to Fig. 12. Fig. 12 is a block diagram showing the hardware configuration of the display control device 20 according to the present embodiment.

As shown in Fig. 12, the display control device 20 includes, for example, a CPU 201, a ROM 202, a RAM 203, a host bus 204, a bridge 205, an external bus 206, an interface 207, an input device 208, a display device 209, a storage device 210, a drive 211, a connection port 212, and a communication device 213. Thus, the display control device 20 can be configured by using a general-purpose computer device such as a personal computer.

The CPU 201 functions as an operation processing device and a control device and operates according to various programs to control each unit inside the display control device 20. The CPU 201 performs various kinds of processing according to programs stored in the ROM 202 or programs loaded into the RAM 203 from the storage device 210. The ROM 202 stores programs and operation parameters used by the CPU 201 and also functions as a buffer to reduce access from the CPU 201 to the storage device 210. The RAM 203 temporarily stores programs used for execution by the CPU 201 or parameters changing appropriately during execution thereof. These units are mutually connected by the host bur 204 including a CPU bus or the like. The host bus 204 is connected to the external bus 206 such as a PCI (Peripheral Component Interconnect/Interface) bus via the bridge 205.

The input device 208 includes an operation unit such as a mouse, keyboard, touch panel, button, switch, and lever and an input control circuit that generates an input signal and outputs the input signal to the CPU 201 and the like. The display device 209 includes a display device, for example, a liquid crystal display (LCD) device, CRT (Cathode Ray Tube) display device, plasma display device and the like. The display device 209 displays various kinds of data such as playback images in a display screen according to control by the CPU 201

The storage device 210 is a storage device to store various kinds of information or data and an example of a storing unit of the present invention. The storage device 210 includes, for example, an external or internal disk drive such as an HDD (Hard Disk Drive). The storage device 210 drives a hard disk, which is a storing medium, and stores programs executed by the CPU 201 and various kinds of data.

The drive 211 is a removable drive for a removable recording medium and is contained in the display control device 20 or externally attached thereto. The drive 211 is loaded into the display control device 20 and writes/reads various kinds of data to/from a removable recording medium 215. The removable recording medium 215 is, for example, an optical disk such as a CD, DVD, and BD or a semiconductor memory such as a memory card. The drive 211 can read the group of image data and metadata from the removable recording medium 215 in which the group of image data and metadata are recorded by the imaging apparatus 1. Accordingly, the group of image data and metadata can be provided to the display control device 20 from the imaging apparatus 1 via the removable recording medium 215.

The connection port 212 is a port to connect an external peripheral device and has a connection terminal such as USB and IEEE1394. The connection port 212 is connected to the CPU 201 and the like via the interface 207 and also the external bus 206, the bridge 205, and the host bus 204. The imaging apparatus 1 is connected with the display control device 20 by using the connection port 212. Accordingly, the display control device 20 can read an image data group and metadata stored in the storage unit 17 of the imaging apparatus 1 and store the group of image data and metadata in the storage device 210 of the display control device 20. Moreover, by inserting a removable recording medium such as a USB memory into the connection port 212, the group of image data and metadata can be read from the removable recording medium.

The communication device 213 is a communication interface including a communication device or the like to connect to, for example, a wired or wireless network 214 (such as LAN and the Internet). The communication device 213 transmits/receives various kinds of data to/from an external device having a network communication function such as a home server, home storage, external server, and the imaging apparatus 1 via the network 214. Moreover, image data groups and metadata can be received from an external device by the communication device 213 via the network 214.

### [1.6. Function Configuration of Display control device]

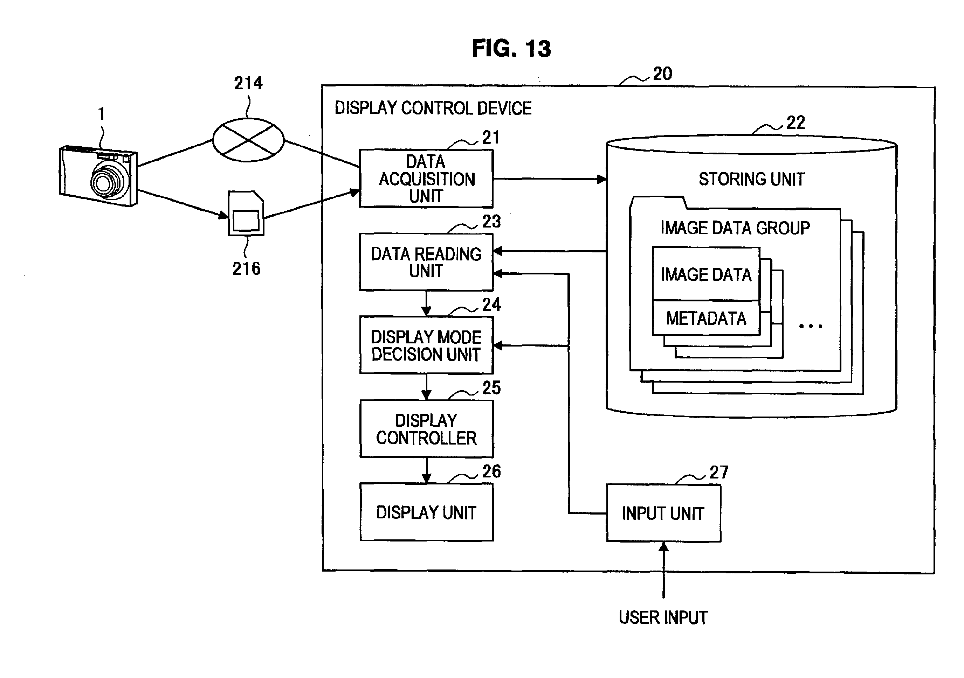

Next, the function configuration of the display control device 20 according to the present embodiment with reference to Fig. 13. Fig. 13 is a block diagram showing the function configuration of the display control device 20 according to the present embodiment.

As shown in Fig. 13, the display control device 20 includes a data acquisition unit 21, a storing unit 22, a data reading unit 23, a display mode decision unit 24, a display control unit 25, a display unit 26, and an input unit 27.

The data acquisition unit 21 acquires an image data group including a plurality of pieces of image data obtained by the multifocus imaging and metadata on the group of image data from an external device such as the imaging apparatus 1. The data acquisition unit 21 can acquire the group of image data and the metadata thereof from an external device such as the imaging apparatus 1 via the network 214 or the removable recording medium 215. For example, the data acquisition unit 21 can receive the group of image data and the metadata thereof from the imaging apparatus 1 via the network 214. The data acquisition unit 21 can also read the group of image data and the metadata thereof from a removable recording medium 216 such as a memory card in which the data is recorded by the imaging apparatus 1. The data acquisition unit 21 associates and stores the group of image data and the metadata thereof acquired in this manner in the storing unit 22.

The storing unit 22 associates and stores one or two or more image data groups and metadata on the image data groups. The storing unit 22 can include any storing device capable of writing/reading data such as the storage device 210 (HDD), the removable recording medium 215, and a semiconductor memory shown in Fig. 12. In the illustrated example, metadata stored in the storing unit 22 is attached to each of a plurality of pieces image data belonging to an image data group and the metadata and image data are present in one file whereby both are associated. However, the present invention is not limited to such an example and, for example, metadata and an image data group may be stored in separate files as long as the metadata and the group of image data are associated.

The data reading unit 23 reads an image data group intended for a slideshow display and metadata from the storing unit 22, which are provided to the display mode decision unit 24. The data reading unit 23 reads the group of image data specified by user input through the input unit 27 and intended for a slideshow display and the metadata thereof. The data reading unit 23 can read not only an image data group obtained by the multifocus imaging, but also a single piece of image data captured normally and the metadata thereof as a slideshow display target from the storing unit 22.

The display mode decision unit 24 decides the display mode when an image data group is displayed in the display screen of the display unit 26 as a slideshow. The display control unit 25 controls the slideshow display of an image data group in the display unit 26 according to the display mode decided by the display mode decision unit 24. More specifically, the display control unit 25 reproduces (for example, decompression processing of compressed data) image data read by the data reading unit 23 and intended for a slideshow display to generate a display image to be displayed in the display unit 26 and outputs the display image to the display unit 26 to cause the display unit 26 to display the display image.

When a plurality of pieces of image data belonging to the group of image data should be displayed as a slideshow, the display mode decision unit 24 controls the slideshow display mode based on the metadata corresponding to the group of image data to be displayed. The control of the slideshow display mode is to control the display mode of the whole group of image data and includes, for example, the control of the display order of the plurality of pieces of image data belonging to the group of image data, the control of the display time of each piece of image data, and the selection of image data to be displayed.

More specifically, the display mode decision unit 24 controls the display order of a plurality of pieces of image data belonging to an image data group based on focal position information contained in the metadata and causes the display unit 26 to display the plurality of pieces of image data in the order corresponding to the focal position. In this case, the display mode decision unit 24 may exercise control so that image data is successively displayed in order of increasing focal position from the close-range side (macro side) to the long-range side (infinity side) (first display order). Conversely, the display mode decision unit 24 may exercise control so that image data is successively displayed in order of decreasing focal position from the long-range side (infinity side) to the close-range side (macro side) (second display order).

The display mode decision unit 24 also determines focused image data (representative image data) from a plurality of pieces of image data belonging to an image data group based on focused image determination information contained in the metadata. As described above, the focused image data is image data obtained by imaging in such a way that a specific subject in the imaging range is in focus by the AF function or the subject detection function of the imaging apparatus 1. The focused image data is captured in the focused point position corresponding to the specific subject and thus is a representative image representing the group of image data including the plurality of pieces of image data captured in mutually different focal positions.

The display mode decision unit 24 controls the slideshow display mode so that focused image data is more easily recognizable by the user than other image data of the group of image data in the display mode. For example, the display mode decision unit 24 controls the display time of a plurality of pieces of image data belonging to an image data group depending on whether or not focused image data and makes the display time of the focused image data (for example, 2 sec) longer than the display time of other image data (for example, 0. 1 sec). Accordingly, in a slideshow display process, the focused image data stands out compared with other image data so that the user can easily identify the focused image data from among image data successively reproduced and displayed.

In the foregoing, the function configuration of the display control device 20 according to the present embodiment has been described. The data acquisition unit 21, the data reading unit 23, the display mode decision unit 24, and the display control unit 25 can be realized by installing programs executing functions of these units into the display control device 20. Such programs can be provided to the display control device 20 via any communication medium or storing medium.

### [1.7. Data Structure of Metadata]

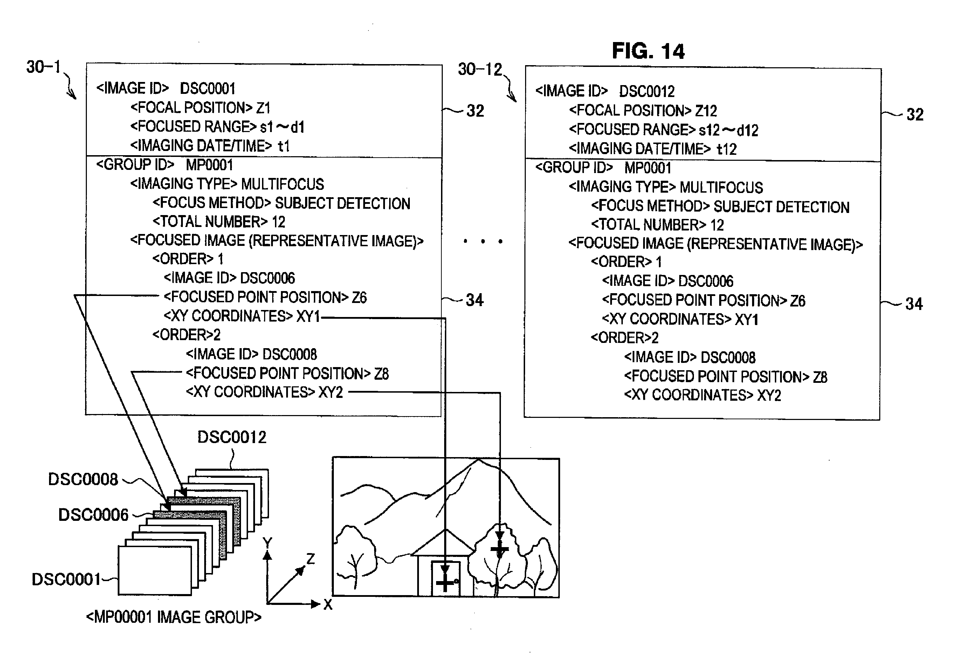

Next, metadata added to an image data group will be described in detail with reference to Fig. 14. Fig. 14 is an explanatory diagram showing a data structure of metadata added to an image data group according to the present embodiment.

As shown in Fig. 14, a image data group "MP00001" includes 12 pieces of image data "DSC0001" to "DSC0012" images in mutually different focal positions for the same imaging range. Metadata 30 on the image data group "MP00001" includes 12 pieces of metadata 30-1 to 30-12 attached to each of 12 pieces of image data. Each piece of the metadata 30-1 to 30-12 contains individual metadata 32 and common metadata 34. The individual metadata 32 is metadata corresponding to each piece of image data and has different information for each piece of image data added thereto. The common metadata 34, on the other hand, is metadata corresponding to the whole image data group and has information common to all image data belonging to one image data group added thereto. The individual metadata 32 and the common metadata 34 will be described in detail below by using an example of the metadata 30-1 corresponding to the first image data "DSC0001".

First, the individual metadata 32 will be described. The individual metadata 32 contains identification information "DSC0001" of the image data, focal position information "Z1", focused range information (s1 to d1), and imaging date/time information "t1", The identification information of the image data is information to identify each piece of image data and, for example, an image ID or file name. From the viewpoint of avoiding overlapping, the image ID specifically attached to each piece of image data is better than the file name. By using the image ID, not only each piece of image data can be identified, but also the whole image data group including other image data can be precisely determined.

The focal position information is information representing the focal position when the image data is imaged. The focal position is the position of the focus of an imaging optical system within the focusing enabled range (from the macro side to the infinity side). The display mode decision unit 24 can control the display order of a plurality of pieces of image data in an image data group in order of focal position by referring to the focal position information. The focal position information does not have to be information representing the focal position itself of each piece of image data and may be information corresponding to the focal position, for example, information representing the display order in accordance with the focal position of each piece of image data.

The focused range information is information representing the focused range for the focal position. The focused range is a range of the focal position around the focused point position when the focal position is in some focused point position in which focusing is obtained due to depth of field of an imaging optical system. Based on the focused range information, the range of distance to a subject in focus in each piece of image data can be determined. In the illustrated example, the focused range information is represented by the range "s1 to d1" of the focal position. However, as described above, the focused range depends on the depth of field and the depth of field changes depending on (a) the aperture of the diaphragm 3 of an imaging optical system, (b) the focal length of the lens of an imaging optical system, and (c) the distance from the imaging apparatus 1 to the focal position. Thus, instead of the illustrated range itself of the focal position, parameter information corresponding to the focused range such as (a) the focal position, (b) the setting of the lens of an imaging optical system, and (c) the setting of the diaphragm 3 may be used as the focused range information.

The imaging date/time information is information representing the date/time when the image data is imaged. In addition to the illustrated information, the individual metadata 32 may further contain various kinds of information about individual pieces of image data such as thumbnail images. The individual metadata 32 conforms to standardized specifications of image data such as EXIF (Exchangeable Image File Format).

Next, the common metadata 34 will be described. The common metadata 34 is metadata on a whole image data group and has information common to each piece of image data attached thereto. The common metadata 34 contains, for example, identification information of the image data group, imaging type information, and focused image determination information (focus point information).

The identification information of the image data group is information to identify the image data group and, for example, a group ID "MP0001" attached specifically to each piece of image data, the name of an image data group or the like.

The imaging type information is information representing the type (imaging type) of the imaging method of an image data group. Imaging types include the above multifocus imaging, panorama imaging, continuous imaging, and multi-data type imaging (for example, JPEG + RAW). In the illustrated example, it is evident that the imaging type of the image data group "MP0001" is "multifocus". The display mode decision unit 24 can control the display mode in accordance with the imaging type of an image data group to be displayed based on the imaging type information.

Further, subordinate information attached to the imaging type information includes focus method information and total number information. The focus method information represents the focus method (focusing method) in multifocus imaging and the focus method is, for example, the above "AF (see Fig. 8)" or "subject detection (see Fig. 10)". If the focus method is the AF, only one piece of image data imaged in the focused point position in which arbitrary one subject is in focus becomes focused image data. If the focus method is the subject detection, on the other hand, one or two or more pieces of image data imaged in the focused point position in which each of one or two or more subjects is in focus can become focused image data. The total number information represents the number of pieces of image data contained in an image data group, that is, the total number of pieces of image data obtained at a time in multifocus imaging. In the illustrated example, the image data group "MP001" contains "12" pieces of image data.

The focused image determination information (focus point information) is information to determine focused image data from a plurality of pieces of image data belonging to an image data group. The focused image determination information may be, for example, identification information (such as the image ID and file name) of focused image data or information indicating the focal position when focused image data is imaged. The focused image data becomes, as described above, representative image data representing the plurality of pieces of image data belonging to the image data group and the user can grasp not only content of image data in the image data group by viewing focused image data, but also the subject brought into focus when imaged.

In the illustrated example, the focused image determination information contains priority information, identification information of focused image data, focused point position information, and XY coordinate information for each of two pieces of focused image data "DSC0006" and "DSC0008".

The priority information represents priorities of each piece of focused image data when a plurality of pieces of focused image data is present. In the illustrated example, the priority of the "DSC0006" is "1" and the priority of the "DSC0008" is "2". The focused image data with the highest priority becomes the representative image data.

Identification information "DSC0006" and "DSC0008" of focused image data is identification information (for example, the image ID) attached specifically to the image data. The focused point position information is information representing the focused point position when focused image data is imaged. The display mode decision unit 24 can determine focused image data from the image data group based on the identification information of focused image data or the focused point position information held in the common metadata 34.

The XY coordinate information represents the position in which the focused point (a predetermined subject in focus when imaged) of focused image data is present on the XY plane. In the illustrated example, XY coordinates of the focused point of the focused image data "DSC0006" are "XY1" on the left side of the image and XY coordinates of the focused point of the focused image data "DSC0008" are "XY2" on the left side of the image. The display mode decision unit 24 can determine the XY plane position of the focused point (focused subject) in the focused image data based on the XY coordinate information and display/control the image data group based on the XY plane position of the focused point. For example, the display mode decision unit 24 can extract image data desired by the user or select image data to be displayed longer in a slideshow by using the above focused point position information (Z coordinate) and XY coordinate information.

In the illustrated example, the focused image determination information when two pieces of focused image data are present is described. When the imaging apparatus 1 automatically detects a plurality of subjects or the user performs multifocus imaging by specifying a plurality of subjects, metadata (focused image determination information) on a plurality of pieces of focused image data is generated. When multifocus imaging is performed by automatically detecting a subject by AF, on the other hand, only one piece of metadata (focused image determination information) of focused image data is generated.

The display mode decision unit 24 can change the focused image determination information based on user input. For example, the display mode decision unit 24 can replace focused image data (representative image) in an image data group by other image data by rewriting the focused image determination information. Accordingly, the user can change the representative image of the image data group from an image in which a subject desired first (for example, a distant view) is in focus to a newly desired image (for example, a close-range view) ex-post facto after imaging. Thus, the image data group can be handled more flexibly so that the convenience when the user uses the image data group can be increased.

In the foregoing, the data structures of the individual metadata 32 and the common metadata 34 have been described. The individual metadata 32 corresponding to each piece of image data in the image data group is attached to the each piece of image data. Moreover, the same common metadata 34 is attached to all image data in the image data group. Accordingly, losses of the common metadata 34 can be prevented.

Thus, in the example in Fig. 14, like metadata conforming to conventional image file standards (such as EXIF) the metadata 30 according to the present embodiment is added to each piece of image data in the image data group to create one image file (image data + the metadata 30). Accordingly, the metadata 30 according to the present embodiment can advantageously be applied to existing devices or software compliant with the above standards.

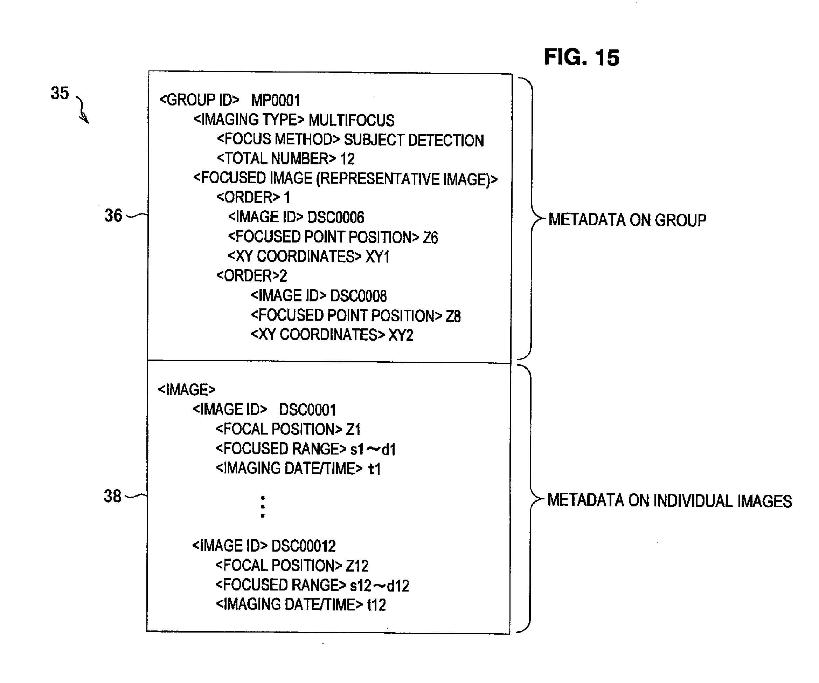

Fig. 15 is an explanatory diagram showing a modification of the data structure of the metadata according to the embodiment. As shown in Fig. 15, an image data group can be handled as a lump of content so that one piece of metadata 35 can be added to the whole image data group. The metadata 35 includes metadata 36 on an image data group and metadata 38 on individual pieces of image data belonging to the image data group. The metadata 36 on an image data group contains information similar to information contained in the metadata 34 described in Fig. 14. The metadata 38 on individual pieces of image data contains information combining all of the individual metadata 32-1 to 32-12 of each piece of image data described in Fig. 14.

The metadata 35 described above is configured, for example, as one file containing the metadata 36 and the metadata 38 and as a separate file from an image data file. If the file of the metadata 38 is configured in this manner, the file of the metadata 38 can be used for slideshow display control described later. However, from the viewpoint of compatibility between existing device and image display software (viewer) and the metadata, the file configuration in Fig. 14 is preferable to the file configuration in Fig. 15.

### [1.8. Slideshow Display]

Next, the slideshow display of an image data group by the display control device 20 according to the present embodiment will be described. In the slideshow display according to the present embodiment, the display control device 20 successively displays a plurality of pieces of image data belonging to an image data group one by one based on focal position information of the metadata. In this case, the display control device 20 displays the image data group in such a way that a display time P of focused image data in which a predetermined subject is in focus becomes longer than a display time Q of other image data based on focused image determination information of the metadata.

### [1.8.1. Overview of slideshow display]

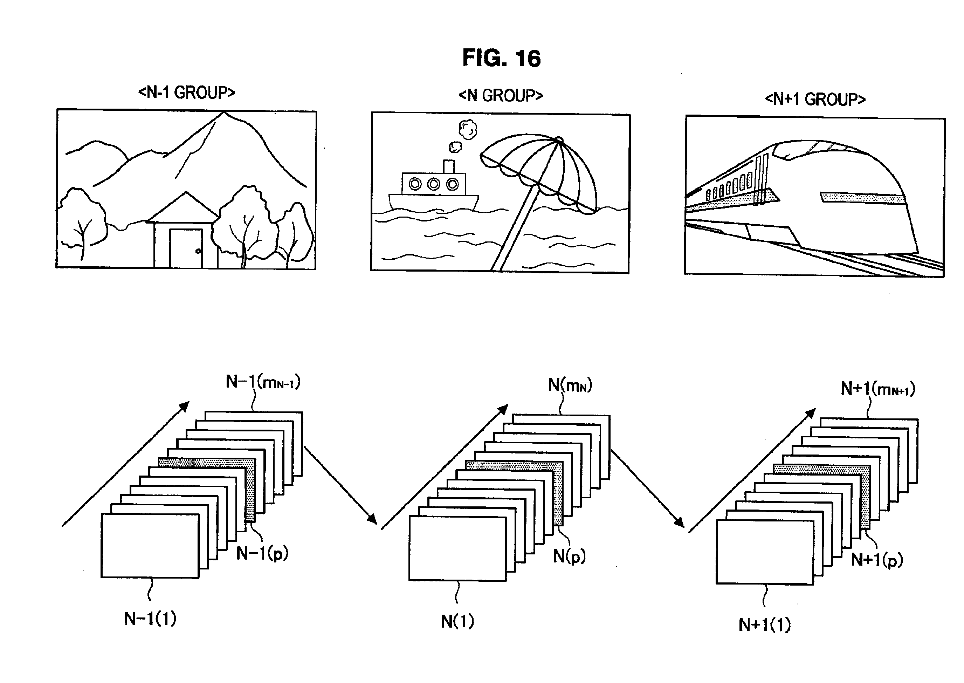

Fig. 16 is a schematic diagram schematically showing a slideshow display according to the present embodiment. As shown in Fig. 16, a case when three image data groups (N-1 group, N group, N+1 group) are successively displayed as a slideshow will be considered. In this case, the display control device 20 successively displays not only focused image data (representative image data) belonging to each of the image data groups N-1, N, N+1, but also image data other than the focused image data as one slide. Then, the display control device 20 sets the display time P (for example, 2 sec) of specific focused image data longer than the display time Q (for example, 0.1 sec) of other image data. The display order of image data in this case is as follows. m is the total number of pieces of image data contained in each image data group.

The procedure therefor will be described in more detail. m_{N-1} pieces of image data N-1 (1) to N-1 (m_{N-1}) belonging to the first image data group N-1 are successively displayed from the close-range side (macro side). In this case, the image data N-1 (1) to N-1 (p-1) on the close-range side from the image data N-1 (p) is displayed at intervals of Q sec (for example, 0.1 sec) in order of focal position and then, the image data N-1 (p) is displayed for P sec (for example, 2 sec). Then, the image data N-1 (p+1) to N-1 (m_{N-1}) on the long-range side from the image data N-1 (p) is displayed at intervals of Q sec (for example, 0.1 sec) in order of focal position.

Next, n pieces of image data N-1 (1) to N-1 (m_{N}) belonging to the second image data group N are successively displayed from the close-range side (macro side). Also in this case, like the above image data group N-1, the display time P of the image data N (p) is made longer for the display than the display time Q of the other image data N (1) to N (p-1) and N (p+1) to N (m_{N}). Then, similarly m_{N+1} pieces of image data N+1 (1) to N+1 (m_{N+1}) belonging to the third image data group N+1 are successively displayed from the close-range side (macro side).

When a plurality of image data groups N-1, N, N+1 are displayed as a slideshow, as described above, image data is successively displayed in order of focal position from the close-range side toward the long-range side. Further, the focused image data N-1 (p), N (p), N+1 (p) in which a predetermined subject is in focus is displayed longer than other image data. Accordingly, a plurality of pieces of image data can be displayed as a slideshow in such a way that a predetermined subject in focus in the focused image data (p), N (p), N+1 (p) gradually comes into focus and after the focused image data is displayed, the subject gradually goes out of focus. Therefore, the slideshow display can effectively be presented to the user. Moreover, the user can recognize focused image data easily because the display time is different between the focused image data and other image data.

### [1.8.2. Slideshow display flow]

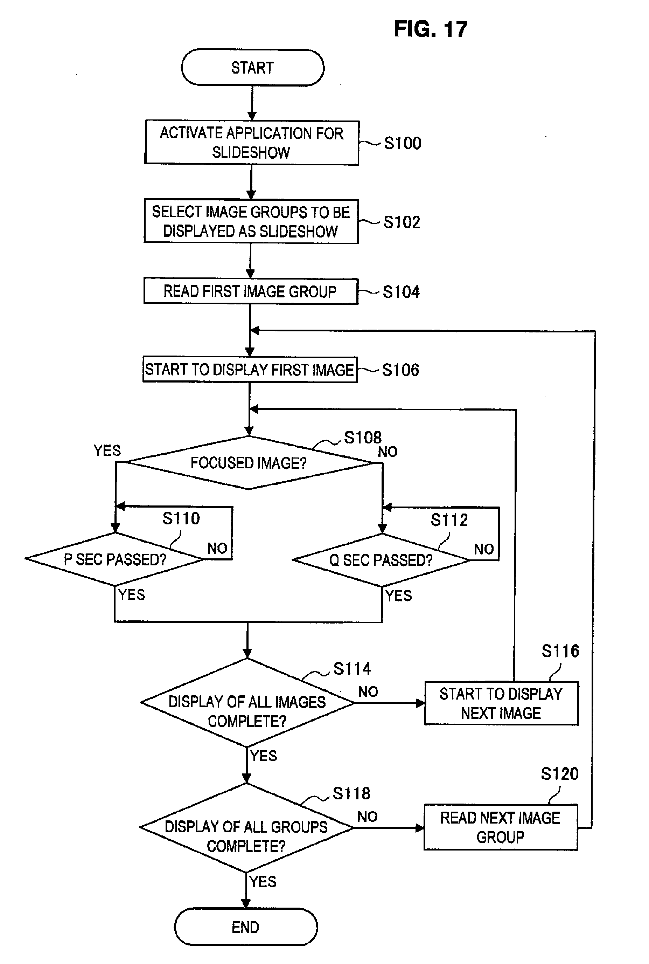

Next, a slideshow display flow according to the present embodiment will be described with reference to Fig. 17. Fig. 17 is a flow chart showing the slideshow display according to the present embodiment.

As shown in Fig. 17, the display control device 20 first activates application software for slideshow (S100). Next, the display control device 20 selects image data to be displayed as a slideshow from image data groups saved in the storing unit 22 based on user input (S102).

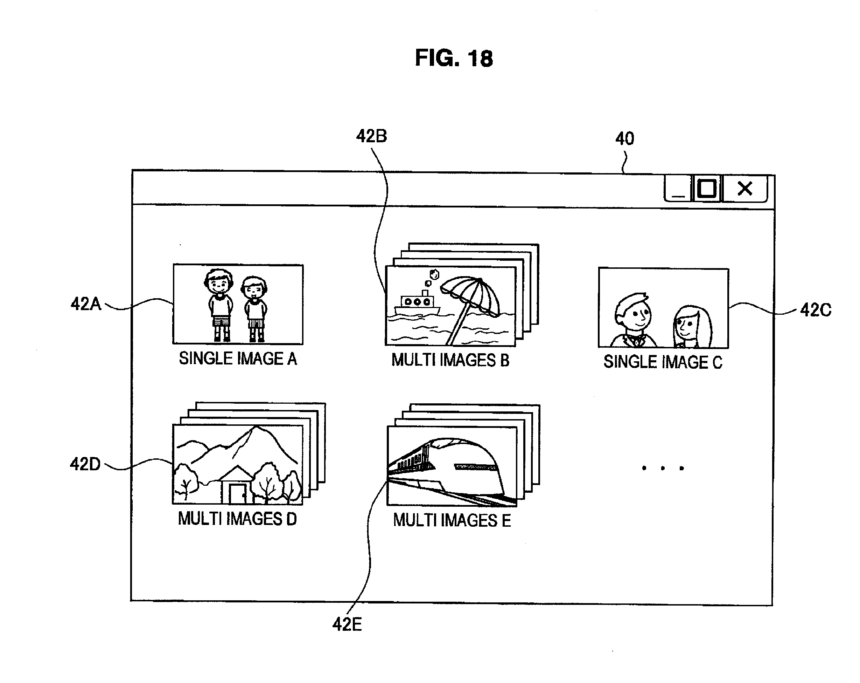

Here, the selection of an image data group to be displayed will be described in detail with reference to Fig. 18. Fig. 18 is a schematic diagram showing the image selection window 40 displayed in the display screen of the display control device 20 according to the present embodiment.

As shown in Fig. 18, a plurality of thumbnail images 42A to E saved in the storing unit 22 and representing files of single image data and image data groups is displayed in the image selection window 40. Such thumbnail images 42 include the thumbnail images 42B, D, E of image data groups obtained by multifocus imaging and the thumbnail images 42A, E of single image data obtained by normal imaging. In addition, images or image data groups imaged by any focus method such as thumbnail images (not shown) of an image data group obtained by continuous imaging may be displayed.

The thumbnail images 42B, D, E of image data groups are images (representative images) of focused image data whose priority among image data groups is the highest and images of other image data belonging to the image data groups are not displayed. If thumbnail images of many similar images belonging to the same image data group are displayed, it becomes complicated and troublesome for the user. By displaying representative images of image data groups as described above, the user can easily recognize and manage images held by the user.

The user selects images (image data groups and/or single images) to be displayed as a slideshow in the image selection window 40 and then instructs execution of the slideshow. Accordingly, the display control device 20 successively displays the selected image data groups or single images as a slideshow.

The description of the slideshow display flow will continue by returning to Fig. 17. First, the data reading unit 23 of the display control device 20 reads, from the storing unit 22, the first image data group and metadata thereof among the image data groups selected in S102 (S104). Then, the display control device 20 starts to display a plurality of pieces of image data belong to the first image data group starting with the first image data (S106). The first image data may be, for example, image data whose focal length is closest to close-range side (macro side) or image data whose focal length is closest to long-range side (infinity side). The display mode decision unit 24 of the display control device 20 exercises control to set the display order of the plurality of pieces of image data in the image data group as the ascending order or descending order of focal position.

Next, the display mode decision unit 24 determines whether the first image data is focused image data (representative image data) by using synthetic image determination information contained in the metadata (S108). More specifically, the display mode decision unit 24 compares identification information (or focused point position information) of focused image data contained in the synthetic image determination information with identification information (or focal position information) of the first image data contained in the metadata. If both pieces of information match as a result of the comparison, the display mode decision unit 24 determines that the first image data is focused image data and if both pieces of information do not match, the display mode decision unit 24 determines that the first image data is not focused image data.

If, as a result of the determination in S108, the first image data is focused image data, the display mode decision unit 24 decides the display time of the first image data as P (for example, 2 sec) and the display control unit 25 continues to display the first image data until the predetermined display time P (for example, 2 sec) passes after starting to display the first image data (S110). On the other hand, if the first image data is image data other than focused image data, the display mode decision unit 24 decides the display time of the first image data as Q (for example, 0.1 sec) and the display control unit 25 continues to display the first image data until the predetermined display time Q (for example, 0.1 sec) passes after starting to display the first image data (S112).

Thus, if the first image data is focused image data, the first image data is displayed for the predetermined display time P and if the first image data is not focused image data, the first image data is displayed for the predetermined display time Q (Q < P) shorter than the display time of focused image data.

Then, the display mode decision unit 24 determines whether the display of all image data belonging to the image data group is completed (S114) and, if the display is not completed, starts to display the next image data (second image data) (S116). Then, also for the second image data, if the second image data is focused image data, the second image data is similarly displayed for the display time P and if the second image data is not focused image data, the second image data is displayed for the display time Q (S108 to S112). The above processing is repeated for all image data belonging to the image data group and if the display of all image data is completed (S114), the display mode decision unit 24 proceeds to S118.

In S118, the display mode decision unit 24 determines whether the display of all image data groups selected in S102 is completed (S118) and if the display is not completed, the data reading unit 23 reads the next image data group and metadata thereof (S120). Then, also for the next image data group, image data is similarly displayed one by one as a slideshow in order of focal position (S106 to S116). The above processing is repeated for all image data groups to be displayed and if the slideshow display of all image data groups is completed (S118), slideshow display processing is terminated.

In the foregoing, the slideshow display according to the first embodiment has been described. According to the first embodiment, an image data group including a plurality of pieces of image data imaged in mutually different focal positions can effectively be displayed as a slideshow. That is, in the slideshow displayed according to the first embodiment, not only focused image data in which a specific subject is in focus, but also other image data of a image data group is used to present the image data to the user one by one in order of focal position. Accordingly, the slideshow display can effectively be staged so that a specific subject in focused image data gradually comes into focus. Moreover, the display time P of the focused image data is longer than the display time Q of other image data and thus, the focused image data of the image data group can be highlighted and displayed. Therefore, the user can clearly recognize the focused image data of the image data group and also accentuation in the slideshow display of many similar images can be provided so that the user can be helped avoid a feeling of ennui.

### <Second embodiment>

Next, the second embodiment of the present invention will be described. The slideshow display according to the second embodiment is different from the slideshow display according to the first embodiment in that the display order of image data belonging to an image data group is controlled and the other function configuration is the same as in the first embodiment and thus, a detailed description thereof is omitted.

### [2.1. Overview of Slideshow Display]

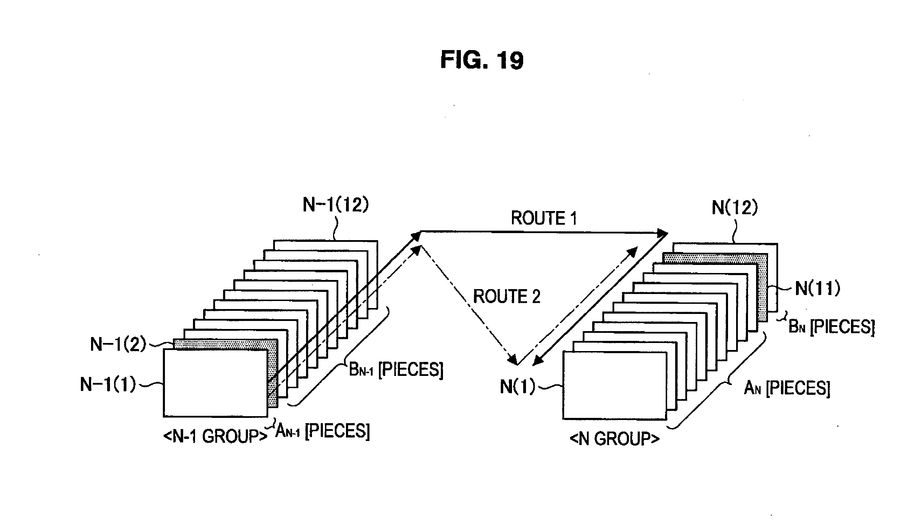

First, an overview of the slideshow display according to the second embodiment will be provided with reference to Fig. 19. Fig. 19 is a schematic diagram schematically showing the slideshow display according to the second embodiment.

In the first embodiment described above, the display order when a plurality of pieces of image data belonging to an image data group is displayed as a slideshow typically is, as shown by Route 2 in Fig. 19, from the close-range side to the long-range side. That is, regardless of the arrangement of focused image data in the image data group, image data is typically displayed in the order starting with the image data whose focal position is closest to the close-range side (N (1) → N (2) → ... N (12)). The display order in which a plurality of pieces of image data is successively displayed in the order from the close-range side toward the long-range side (ascending order of focal position) is called a "forward display order". The forward display order corresponds to the display order in the first embodiment of the present invention.

However, if the display order is fixed to the forward display order (from the close-range side to the long-range side), the following problem arises when a plurality of image data groups is consecutively displayed. For example, a case when, as shown in Fig. 19, focused image data is on the close-range side in an image data group N-1 to be displayed first and focused image data is on the long-range side in an image data group N to be displayed second will be considered. In this case, if both the image data group N-1 and the image data group N are displayed in the forward display order, after focused image data N-1 (2) of the image data group N-1 is displayed, 10 pieces of image data N-1 (3) to (12) belonging to the image data group N-1 are successively displayed. Next, 10 pieces of image data N (3) to (10) belonging to the image data group N are successively displayed. Then, focused image data N (11) of the image data group N is displayed. That is, a total of 20 pieces of out-of-focus image data is displayed between the time when the focused image data N-1 (2) is displayed and the time when the focused image data N (11), which could cause the user to have a feeling of ennui.

Thus, in the second embodiment, not only the above "forward display order (first display order)", but also "backward display order (second display order)" is used as the display order of image data groups. The "backward display order" is a display order in which image data is displayed starting with the image data whose focal position is closest to the long-range side. In the backward display order, as shown by Route 2 in Fig. 19, a plurality of pieces of image data N (1) to (12) belonging to the image data group N is displayed in the order from the long-range side toward the close-range side (descending order of focal position) (N (12) → N (11) → ... N (1)).

Then, the display mode decision unit 24 determines whether focused image data is on the close-range side or the long-range side when a plurality of pieces of image data belonging to each of the image data groups N-1, N is arranged in order of focal position. Further, the display mode decision unit 24 decides which of the forward direction and backward direction to adopt as the display order of the next image data group N in accordance with the above determination result and the display order of the previous image data group N-1.

### [2.2. Decision Technique of Display Order]

Next, the decision technique of the display order of each piece of image data according to the present embodiment will be described in detail. As shown in Fig. 19, the display mode decision unit 24 compares a number A_{N-1} of pieces of image data on the close-range side of the focused image data N-1 (2) and a number B_{N-1} of pieces of image data on the long-range side of the focused image data N-1 (2) in the image data group N-1 to be displayed first. In the example in Fig. 19, A_{N-1} = 1 and B_{N-1} = 10 and thus, B_{N-1} > A_{N-1}. Therefore, the focused image data N-1 (2) can be determined to be on the close-range side among all image data N-1 (1) to (12) in the image data group N-1.

Further, the display mode decision unit 24 compares a number A_{N} of pieces of image data on the close-range side of the focused image data N (11) and a number B_{N} of pieces of image data on the long-range side of the focused image data N (11) in the image data group N to be displayed next. In the example in Fig. 19, A_{N} = 10 and B_{N} = 1 and thus, A_{N} > B_{N}. Therefore, the focused image data N (11) can be determined to be on the long-range side among all image data N (1) to (12) in the image data group N.

Then, the display mode decision unit 24 decides the display order of the image data group N to be displayed next in favor of the forward direction (close-range → long-range) or the backward direction (long-range → close-range) in accordance with the display order of the image data group N-1 to be displayed first and the above two determination results (B_{N-1} > A_{N-1}, A_{N} > B_{N}). In the example in Fig. 19, the display order of the image data group N-1 is the forward direction and B_{N-1} > A_{N-1}, A_{N} > B_{N} hold and thus, the display order of the image data group N is decided in favor of the backward direction (see Route 2 in Fig. 19).

According to the above technique, whether the focused image data N-1 (2) is on the close-range side or the long-range side is determined in the image data group N-1 based on a comparison result of A_{N-1}, and B_{N-1}. Then, based on a comparison result of A_{N} and B_{N}, whether the focused image data N (11) is on the close-range side or the long-range side from the center of the image data group N is determined. However, the technique to determine the arrangement of focused image data in the image data group N-1 is not limited to such an example and, for example, the following determination technique can be also used. That is, first, a half value "m_{N-1}/2" of a total number m_{N-1} (for example, m_{N-1} = 12) of pieces of focused image data of the image data group N-1 is determined as a threshold. Then, based on a comparison result of the threshold "m_{N-1}/2" and A_{N-1} shown above (or B_{N-1}), whether the focused image data is on the close-range side or the long-range side from the center of the image data group N-1 may be determined. Similarly for the image data group N, based on a comparison result of the threshold "m_{N}/2" and A_{N} shown above (or B_{N}), whether the focused image data is on the close-range side or the long-range side from the center of the image data group N can be determined.

The technique to decide the display order of the next image data group N in accordance with a determination result using the threshold "m/2" as described above and the display order of the previous image data group N-1 will be described in more detail. The total number of pieces of image data in the image data group N-1 and the total number of pieces of image data in the image data group N may be the same (m_{N} = m_{N-1}) or different (m_{N} ≠ m_{N-1}).

### (1) If A_{N-1} > (m_{N-1}/2) and A_{N} > (m_{N}/2)

In this case, focused image data is on the long-range side from the center in both the image data groups N-1, N and thus, the display order of the image data group N is set in the same direction as the display order of the image data group N-1. That is, if the display order of the image data group N-1 is the forward direction, the display order of the image data group N is set in the forward direction, and if the display order of the image data group N-1 is the backward direction, the display order of the image data group N is set in the backward direction.

### (2) If A_{N-1} < (m_{N-1}/2) and A_{N} < (m_{N}/2)

In this case, focused image data is on the close-range side from the center in both the image data groups N-1, N and thus, the display order of the image data group N is set in the same direction as the display order of the image data group N-1.

### (3) If A_{N-1} > (m_{N-1}/2) and A_{N} < (m_{N/}2)

In this case, focused image data is on the long-range side from the center in the image data group N-1 and focused image data is on the close-range side from the center in the image data group N and thus, the display order of the image data group N set in the direction opposite to the display order of the image data group N-1. That is, if the display order of the image data group N-1 is the forward direction, the display order of the image data group N is set in the backward direction, and if the display order of the image data group N-1 is the backward direction, the display order of the image data group N is set in the forward direction.

### (4) If A_{N-1} < (m_{N-1}/2) and A_{N} > (m_{N}/2)

In this case, focused image data is on the close-range side from the center in the image data group N-1 and focused image data is on the long-range side from the center in the image data group N and thus, the display order of the image data group N set in the direction opposite to the display order of the image data group N-1.

### [2.3. Slideshow Display Flow]

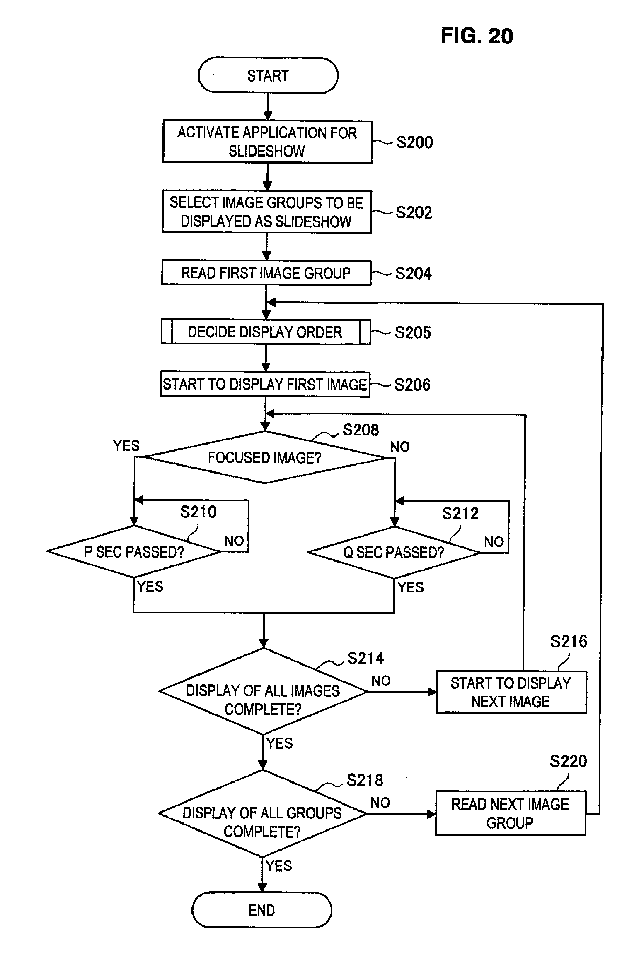

Next, the slideshow display flow according to the present embodiment will be described with reference to Fig. 20. Fig. 20 is a flow chart showing the slideshow display according to the present embodiment.

As shown in Fig. 20, the display control device 20 first activates application software for slideshow (S200) and selects image data to be displayed as a slideshow (S202). Next, the data reading unit 23 of the display control device 20 reads the first image data group and metadata thereof among image data groups selected in S202 from the storing unit 22 (S204). Steps S200 to S204 heretofore are substantially the same as steps S100 to S104 in Fig. 17 according to the first embodiment and thus, a detailed description thereof is omitted.

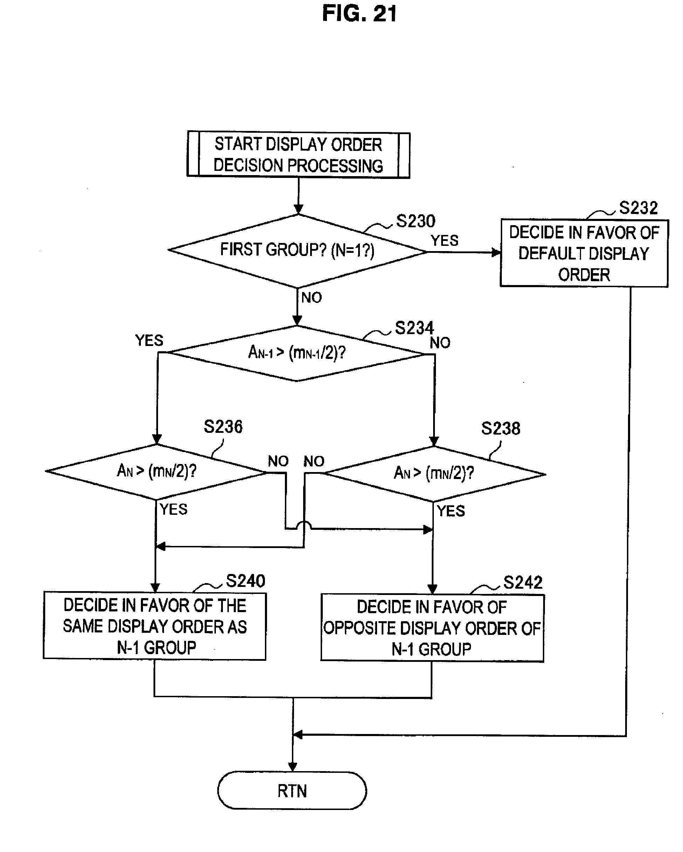

Next, the display mode decision unit 24 of the display control device 20 decides the display order of a plurality of pieces of image data belonging to the image data group based on the metadata of the image data group read in S204 (S205). Decision processing of the display order in S205 is a feature of the present embodiment and so will be described in detail with reference to Fig. 21. Fig. 21 is a flow chart showing the decision processing of the display order according to the present embodiment.

As shown in Fig. 21, the display mode decision unit 24 first determines whether the image data group N to be displayed is the first image data group (N = 1) of a plurality of image data groups to be displayed as a slideshow (S230). If, as a result of the determination, the image data group N is the first image data group, the display mode decision unit 24 decides the display direction of the plurality of pieces of image data belonging to the image data group N in favor of the preset default display order (5232). The default display order may be set to the forward display order (close-range → long-range) or the backward display order (long-range → close-range).

On the other hand, if, as a result of the determination in S230, the image data group N is not the first image data group, the display mode decision unit 24 determines whether focused image data in the image data group N-1 displayed before the image data group N is on the close-range side or the long-range side (S234). More specifically, the display mode decision unit 24 determines whether focused image data is on the close-range side or the long-range side when a plurality of pieces of image data belonging to the image data group N-1 is arranged in order of focal position based on focal position information of the image data group N-1. For this determination, the display mode decision unit 24 compares, for example, a number A_{N-1} of pieces of image data on the close-range side of focused image data of image data belonging to the image data group N-1 with a half value "m_{N-1}/2" of a total number m_{N-1} of pieces of image data belonging to the image data group N-1. If, as a result, A_{N-1} > (m_{N}-₁/2) holds, the display mode decision unit 24 determines that the focused image data is on the long-range side in the image data group N-1 and proceeds to S236. If, on the other hand, A_{N-1} ≤ (m_{N-1}/2) holds, the display mode decision unit 24 determines that the focused image data is on the close-range side in the image data group N-1 and proceeds to S238.

In both S236 and S238, the display mode decision unit 24 determines whether focused image data in the image data group N is on the close-range side or the long-range side (S236, S238). More specifically, the display mode decision unit 24 determines whether the focused image data is on the close-range side or the long-range side when a plurality of pieces of image data belonging to the image data group N is arranged in order of focal position based on focal position information of the image data group N. For this determination, the display mode decision unit 24 compares, for example, a number A_{N} of pieces of image data on the close-range side of the focused image data of image data belonging to the image data group N with a half value "m_{N}/2" of a total number m_{N} of pieces of image data belonging to the image data group N.

If, as a result, A_{N} > (m_{N}/2) holds in S236 (YES in S236), the display mode decision unit 24 determines that the focused image data is on the long-range side in the image data group N and proceeds to S240. If A_{N} ≤ (m_{N}/2) holds in S238 (NO in S238), the display mode decision unit 24 determines that the focused image data is on the close-range side in the image data group N-1 and proceeds to S240. Thus, as described above, the processing proceeds to S240 when focused image data is on the long-range side or the close-range side in both the image data group N-1 and the image data group N. Then, in S240, the display mode decision unit 24 decides the display order of the image data group N in the same direction as the display order of the image data group N (S240).

If, on the other hand, A_{N} ≤ (m_{N}/2) holds in S236 (NO in S236), the display mode decision unit 24 determines that the focused image data is on the close-range side in the image data group N and proceeds to S242. If A_{N-1} > (m_{N-1}/2) holds in S238 (YES in S238), the display mode decision unit 24 determines that the focused image data is on the long-range side in the image data group N and proceeds to S242. Thus, as described above, the processing proceeds to S242 when focused image data is on the opposite sides in the image data group N-1 and the image data group N. Then, in S242, the display mode decision unit 24 decides the display order of the image data group N in the opposite direction of the display order of the image data group N (S242).

In the foregoing, the decision processing of the display order of the image data group N according to the present embodiment has been described with reference to Fig. 21. The description will continue by returning to Fig. 20.

The display order of the image data group N is decided as shown in Fig. 21. Then, the display control unit 25 successively displays a plurality of pieces of image data belonging to the image data group N in the forward direction (dose-range → long-range) or backward direction (long-range → close-range) according to the display order decided above as a slideshow (S206 to S216). At this point, if image data to be displayed is focused image data (S208), the display control unit 25 displays only the image data for the long display time P (S210) and if image data is not focused image data (S208), the display control unit 25 displays only the image data for the short display time Q (S212). The display processing is repeated sequentially for all image data in the image data group N (S214, S216). Steps S206 to S216 are substantially the same as steps S106 to S116 in Fig. 17 according to the first embodiment and thus, a detailed description thereof is omitted.

Then, when the slideshow display of the image data group N ends (S214), the display mode decision unit 24 determines whether the next image data group N+1 is present (S218). If the next image data group N+1 is present, the display mode decision unit 24 reads the next image data group N+1 from the storing unit 22 (S220). When the next image data group N+1 is displayed as a slideshow, the display order of the image data group N+1 is decided in accordance with the display order of the image data group N according to the flow in Fig. 21 (S205) before starting the slideshow (S206 to S216). By repeating the above processing for all image data groups selected in S202, the slideshow display advances.

In the foregoing, the decision processing of the display order of the image data group N according to the present embodiment and the slideshow display processing using the display order have been described. As described above, there is a case when focused image data is on the close-range side in the image data group N-1 and focused image data is on the long-range side in the image data group N (see Fig. 19) and also a reversed case thereof. If the display order of all image data groups is the same in such cases, there is a problem that many pieces of out-of-focus image data are displayed for a long time between the time when focused image data of the image data group N-1 is displayed and the time when focused image data of the image data group N is displayed.

According to the decision technique of the display order according to the present embodiment (see Fig. 21), by contrast, if focused image data of the image data group N-1 and focused image data of the image data group N are on opposite sides, the display order of the image data group N is set in the opposite direction of the display order of the image data group N-1 displayed previously. Accordingly, the time in which many pieces of out-of-focus image data are displayed consecutively between focused image data of a plurality of image data groups can be reduced and made uniform so that the user can be prevented from becoming tired of viewing the slideshow display.

In the flow in Fig. 20, the display order of the image data group N displayed currently is controlled by using information of the image data group N-1 displayed previously, but the display order of the image data group N displayed currently can be controlled by using information of the image data group N+1 displayed later. In this case, metadata on all image data groups to be displayed as a slideshow may be read in S204 to control the display order of each image data group based on metadata of all the image data groups. Accordingly, the display mode when a plurality of image data groups is displayed as a slideshow can further be optimized.

### [2.4. Modification of Slideshow Display]

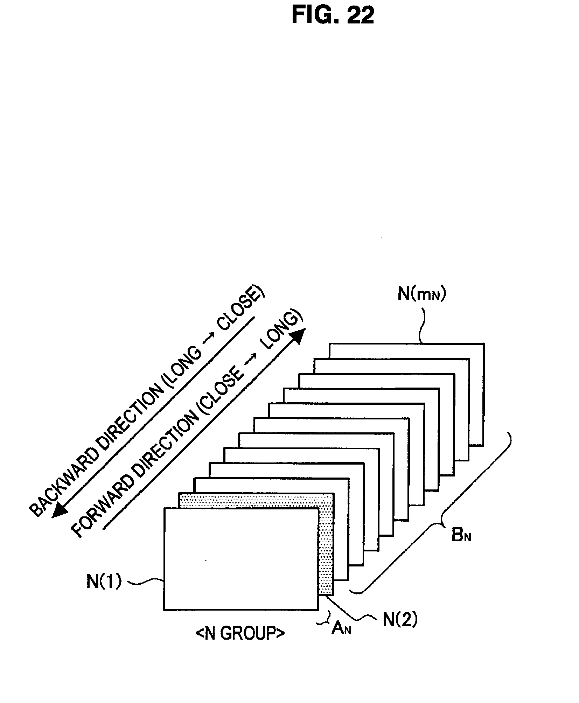

Next, a modification of the slideshow display according to the second embodiment will be described with reference to Fig. 22. Fig. 22 is a schematic diagram schematically showing the slideshow display according to a modification of the second embodiment.

As shown in Fig. 22, focused image data N (2) may be present lopsidedly on the close-range side or the long-range side in the image data group N to be displayed as a slideshow. In such a case, the display control device 20 according to the present modification decides the display order in such a way that the time before the intended focused image data N (2) is made longer to inflame the feeling of user's anticipation. In the illustrated example, the focused image data N (2) is on the close-range side and thus, a plurality of pieces of image data belonging to the focused image data N is displayed successively from the long-range side in the backward display order to inflame the feeling of user's anticipation (N (m_{N}) → N (m_{N}-1) → ... N (2) → N (1)). Conversely, if the focused image data is on the long-range side, a plurality of pieces of image data belonging to the focused image data N is displayed successively from the close-range side in the forward display order to inflame the feeling of user's anticipation (N (1) → N (2) → ... N (m_{N}-1) → N (m_{N})).

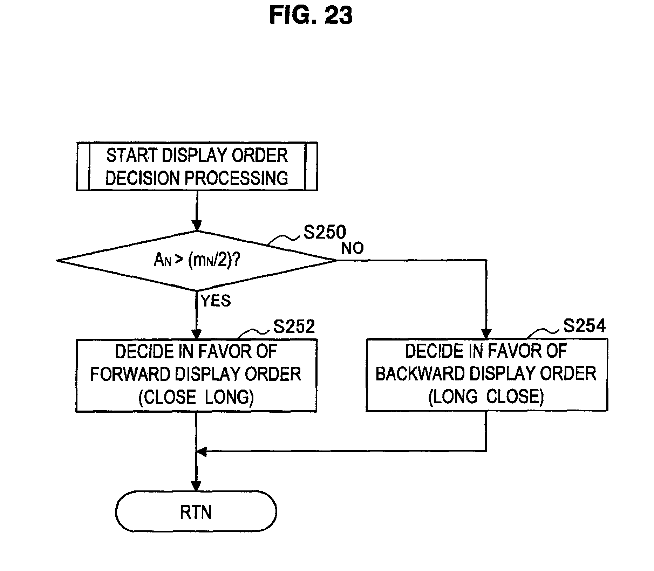

The decision processing of the display order according to the modification of the present embodiment will be described with reference to Fig. 23. Fig. 23 is a flow chart showing the decision processing of the display order according to the modification of the present embodiment. The processing in Fig. 23 corresponds to a subroutine of step S205 in Fig. 21.

As shown in Fig. 23, the display mode decision unit 24 first determines whether focused image data is on the close-range side or long-range side in the image data N (S250). More specifically, the display mode decision unit 24 first determines whether the focused image data is on the close-range side or the long-range side when a plurality of pieces of image data belonging to the image data group N is arranged in order of focal position based on focal position information of the image data group N. For this determination, the display mode decision unit 24 compares, for example, a number A_{N} of pieces of image data on the close-range side of the focused image data of image data belonging to the image data group N with a half value "m_{N}/2" of a total number m_{N} of pieces of image data belonging to the image data group N.

If, as a result, A_{N} > (m_{N}/2) holds, the display mode decision unit 24 determines that the focused image data is on the long-range side in the image data group N and proceeds to S252. In S252, the display mode decision unit 24 decides the display order of the plurality of pieces of image data belonging to the image data group N in favor of the forward direction (from the close-range side to the long-range side) (S252). If A_{N} ≤ (m_{N}/2) holds, on the other hand, the display mode decision unit 24 determines that the focused image data is on the close-range side in the image data group N and proceeds to S254. In S254, the display mode decision unit 24 decides the display order of the plurality of pieces of image data belonging to the image data group N in favor of the backward direction (from the long-range side to the close-range side) (S252).

[0259] The display order is decided based on a comparison result of A_{N} and (m_{N}/2) in the above example, but the present embodiment is not limited to such an example and the display order may be decided based on, for example, A_{N} and B_{N}. B_{N} is the number of pieces of image data on the long-range side of the focused image data of the image data group N. If A_{N} > B_{N} holds, the focused image data can be determined to be on the long-range side in the image data group N and if A_{N} ≤ B_{N} holds, the focused image data can be determined to be on the close-range side in the image data group N.

In the foregoing, the decision processing of the display order according to the modification of the present embodiment has been described. According to the present modification, when the image data group N is displayed as a slideshow, whether the focused image data is on the long-range side or the close-range side in the image data group N is determined and the display order of the plurality of pieces of image data belonging to the image data group N is decided in favor of the forward direction or backward direction based on the determination result. Accordingly, the time between the display start of the first image data of the image data group N and the display of the user-desired focused image data can be made longer. Therefore, the feeling of anticipation to want to view an intended representative image can be enhanced so that an effective slideshow display can be made.

### <Third embodiment>

Next, the third embodiment of the present invention will be described. The slideshow display according to the third embodiment is different from the slideshow display according to the first embodiment in that image data belonging to an image data group is selected and the other function configuration is the same as in the first embodiment and thus, a detailed description thereof is omitted.

### [3.1. Overview of Slideshow Display]

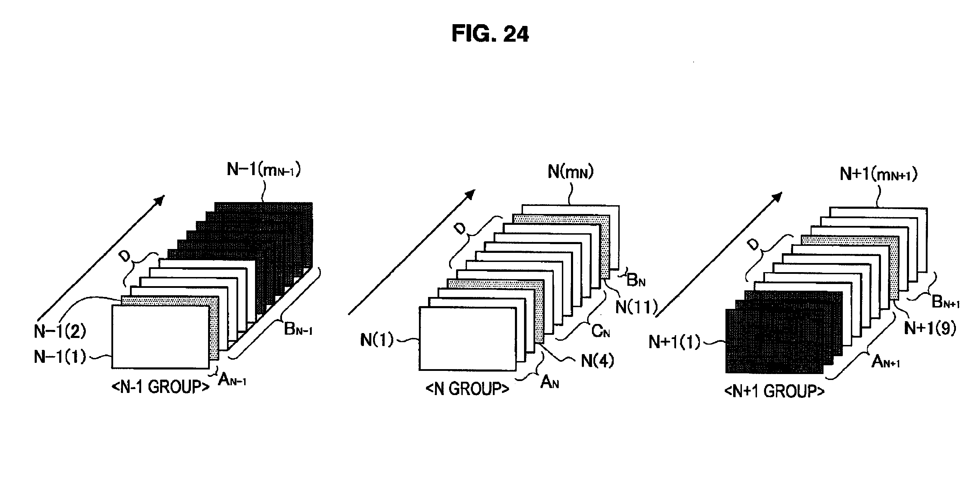

First, an overview of the slideshow display according to the third embodiment will be provided with reference to Fig. 24. Fig. 24 is a schematic diagram schematically showing the slideshow display according to the third embodiment.

As shown in Fig. 24, an example in which a plurality of image data groups N-1, N, N+1 is successively displayed as a slideshow will be described. The display order of all image data groups N-1, N, N+1 is set in the forward direction (close-range → long-range) in the third embodiment, but like the second embodiment, both the forward direction and backward direction may be used in combination.

For example, like the image data group N-1, there is a case when focused image data N-1 (2) is on the close-range side and image data N-1 (3) to (m_{N-1}) on the long-range side of the focused image data is the majority when a plurality of pieces of image data N-1 (1) to (m_{N-1}) is arranged in order of focal position. In this case, if the image data group N-1 is displayed as a slideshow, after the focused image data N-1 (2) is displayed, many pieces of out-of-focus image data N-1 (3) to (m_{N}-₁) will be displayed for a long time. Thus, the user may become boring and have a feeling of ennui.

Also, like the image data group N+1, there is a case when focused image data N+1 (9) is on the long-range side and image data N+1 (1) to (8) on the close-range side of the focused image data is the majority when a plurality of pieces of image data N+1 (1) to (m_{N+1}) is arranged in order of focal position. Also in this case, like the above case, many pieces of out-of-focus image data N+1 (1) to (8) will be displayed for a long time and the user may have a feeling of ennui.

Thus, in the third embodiment, the display control device 20 determines numbers A, B of pieces of image data on the close-range side and the long-range side of focused image data in each image data group respectively and controls the display mode in such a way that the display time of the whole image data on the close-range side or the long-range side becomes equal to a predetermined time or less in accordance with the numbers A, B. Methods to control the display mode as described above include, for example, methods (a) and (b) shown below.

(a) If the numbers A, B are equal to a threshold or greater, other image data on the close-range side or the long-range side of focused image data is selected in accordance with the distance from the focused image data and a portion thereof is excluded from the slideshow display.

(b) If the numbers A, B are equal to a threshold or greater, the display time of at least a portion of other image data on the close-range side or the long-range side of focused image data is made shorter.

The control of the display mode according to the present embodiment will be described more concretely with reference to Fig. 24. For example, when the image data group N-1 is displayed as a slideshow, the display control device 20 determines the number B_{N-1} of pieces of image data (3) to (m_{N-1}) on the long-range side of the focused image data N-1 (2). Then, if the number B_{N-1} is equal to a threshold or greater, the display control device 20 controls the display mode so that the display time of the whole image data N-1 (3) to (m_{N}-₁) becomes equal to a predetermined time or less.

If, for example, the method of (a) is used as the control method of the display mode according to the present embodiment, the display control device 20 sorts the image data N-1 (3) to (m_{N}-₁) in accordance with the distance from the focused image data N-1 (2). More specifically, the display control device 20 selects the image data N-1 (3) to (7) of a predetermined number D (for example, D=5) of pieces of image data on the long-range side from the focused image data N-1 (2) to be displayed as a slideshow. Also, the display control device 20 excludes the image data N-1 (8) to (m_{N-1}) on the long-range side after the predetermined number D of pieces of image data being selected as image data to be displayed as a slideshow. Accordingly, in the slideshow display of the image data group N-1, only the image data N-1 (1) to (7) is successively displayed and then, the image data N (1) of the image data group N is displayed. Accordingly, the number of pieces of out-of-focus image data can be reduced and therefore, the time in which out-of-focus images are displayed can be reduced.

Instead of excluding the image data N-1 (8) to (m_{N-1}) after the predetermined number D of pieces of image data from the focused image data N-1 (2) like the above case, image data to be displayed as a slideshow may be picked up from the image data N-1 (3) to (m_{N-1}) on the long-range side of the focused image data side. For example, the image data N-1 (3), (5), (7), ...(m_{N-1}) may be left to be displayed as a slideshow to exclude the other image data N-1 (4), (6), (8), .... (m_{N-1}-1).

If, for example, the method of (b) is used as the control method of the display mode according to the present embodiment, the display control device 20 reduces the display time of the image data (3) to (m_{N-1}) on the long-range side of the focused image data N-1 (2) to a display time Q' (for example, 0.05 sec) from the normal display time Q (for example, 0.1 sec). Accordingly, the display speed can be made faster than normal even of all the image data (3) to (m_{N-1}) is displayed so that the time in which out-of-focus images are displayed can be reduced.

### [3.2. Image Selection Technique]

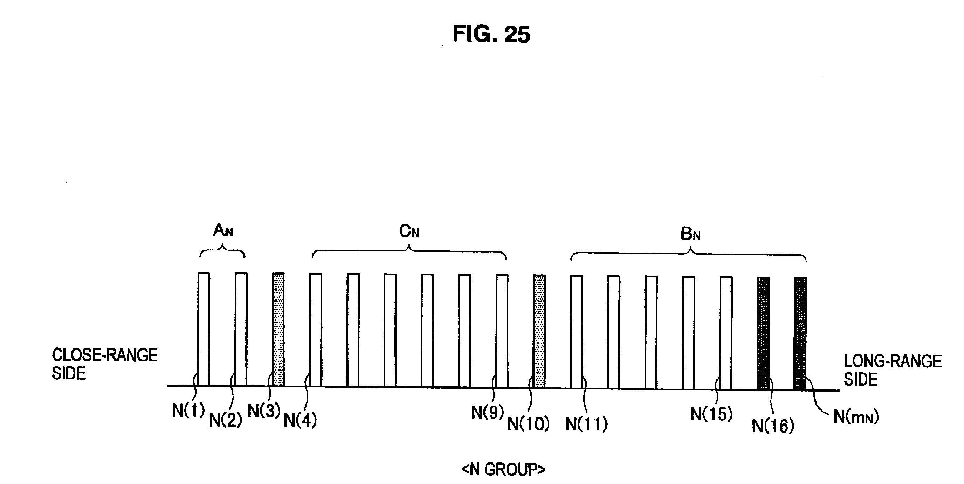

Next, the technique to select image data by the above method of (a) to control the display mode so that the display time of the whole image data present on the close-range side or the long-range side of focused image data in an image data group becomes equal to a predetermined time or less will be described in detail with reference to Fig. 25.

As shown in Fig. 25, the image data group N is assumed to include m_{N} pieces of image data N (1) to (m_{N}) and to contain two focused image data N (3), N (10) among the m_{N} pieces of image data. The focused image data N (3) is closer to the close-range side than the focused image data N (10), the focused image data N (3) corresponds to first focused image data of the present invention, and the focused image data N (10) corresponds to second focused image data of the present invention.

The image data N (1), (2) on the close-range side of the focused image data N (3) and the image data N (11) to (m_{N}) on the long-range side of the focused image data N (10) of the image data N (1) to (m_{N}) are excluded from image data to be displayed as a slideshow based on predetermined selection conditions. The predetermined selection conditions may be that, for example, image data within the predetermined number D (for example, D=5) of pieces around focused image data be selected as image data to be displayed, as described above, and to exclude image data present beyond the predetermined number D from the focused image data. According to such selection conditions, the image data N (16) to (m_{N}) beyond the predetermined number D from the focused image data N (10) of the image data N (11) to (m_{N}) on the long-range side of the focused image data N (10) is excluded.

The image data N (4) to (9) present between the focused image data N (3) and the focused image data N (10) is not excluded from image data to be displayed as a slideshow. The reason therefor is that if the image data N (4) to (9) between a plurality of pieces of focused image data N (3) and N (10) contained in the same image data group is excluded, continuity of image data may be lost when a slideshow is displayed.

In contrast, the image data N (1), (2) on the close-range side of the focused image data N (3) and the image data N (11) to (m_{N}) on the long-range side of the focused image data N (10) may be excluded because continuity will not be lost even if such image data is excluded from image data to be displayed as a slideshow. However, the image data N (1), (2) or N (11) to (m_{N}) may not be excluded if a subject in focus is contained therein. Accordingly, image data (m_{N}) in which some subject is in focus can be prevented from being excluded from image data to be displayed as a slideshow and thus, the user can view the applicable image data when a slideshow is displayed to recognize the presence of an image in which the subject is in focus and to decide whether the image is necessary. Alternatively, the image data N (1), (2) or N (11) to (m_{N}) on the close-range side or the long-range side of the focused image data may be excluded from image data to be displayed as a slideshow by applying blurring thereto through signal processing.

### [3.3. Slideshow Display Flow]

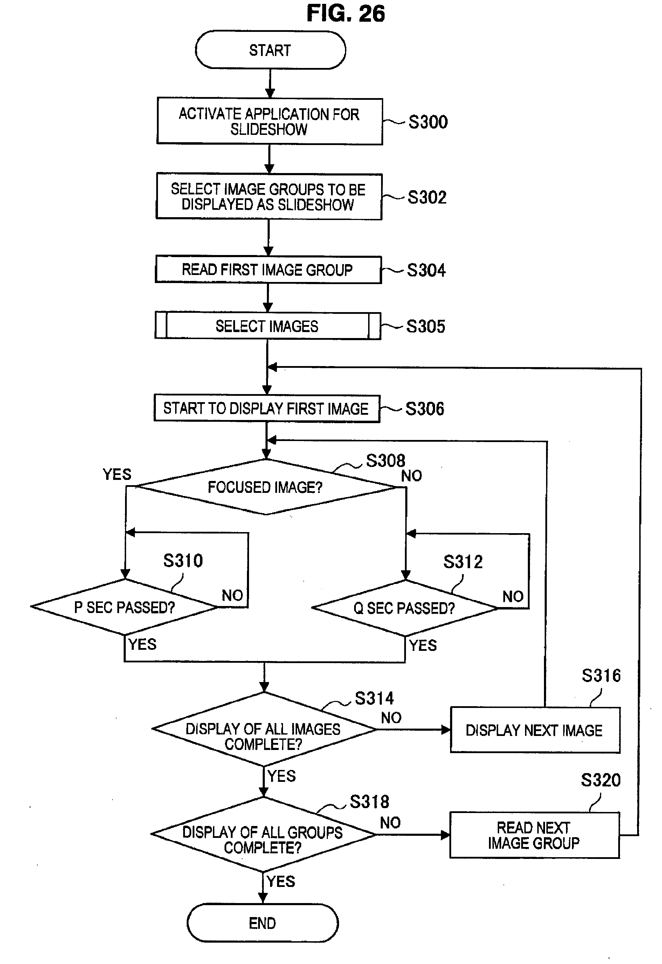

Next, the slideshow display flow according to the present embodiment will be described with reference to Fig. 26. Fig. 26 is a flow chart showing the slideshow display according to the present embodiment.

As shown in Fig. 26, the display control device 20 first activates application software for slideshow (S300) and selects image data to be displayed as a slideshow (S302). Next, the data reading unit 23 of the display control device 20 reads the first image data group and metadata thereof among image data groups selected in S302 from the storing unit 22 (S304). Steps 5300 to S304 heretofore are substantially the same as steps S100 to S104 in Fig. 17 according to the first embodiment and thus, a detailed description thereof is omitted.

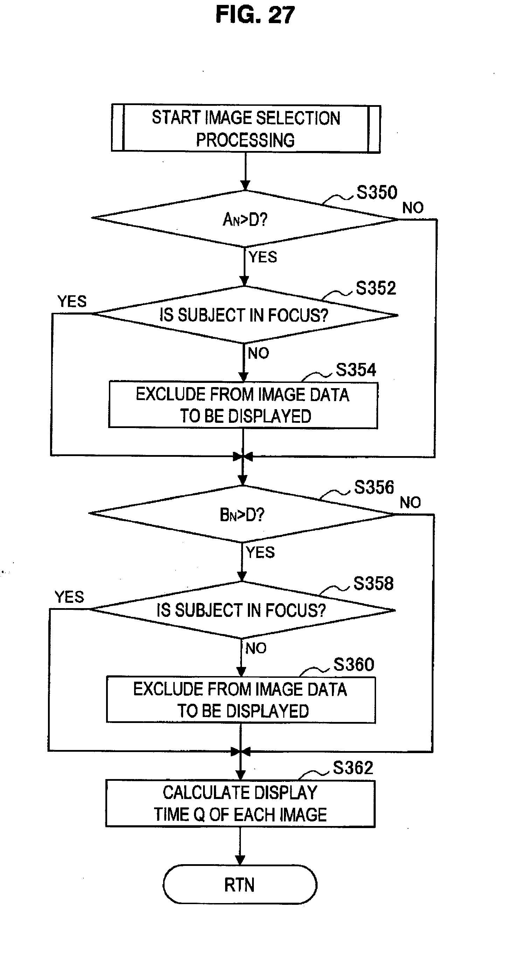

Next, the display mode decision unit 24 of the display control device 20 selects image data to be displayed as a slideshow so that the display time of image data other than focused image data becomes equal to a predetermined time or less based on metadata of image data groups read in S304 (S305). Image selection processing in S305 is a feature of the present embodiment and so will be described in detail with reference to Fig. 27. Fig. 27 is a flow chart showing the image selection processing according to the present embodiment.

As shown in Fig. 27, the display mode decision unit 24 first determines a number A_{N} of pieces of image data on the close-range side of the first focused image data closest to the close-range side of the image data group and compares the number A_{N} and a threshold D to determine whether A_{N} > D holds (S350). The threshold D is the upper limit of the number of pieces of image data to be displayed as a slideshow and, for example, D=5. If A_{N} > D holds, the number A_{N} of pieces of image data on the close-range side of the first focused image data exceeds the upper limit D and thus, the display mode decision unit 24 sets image data exceeding D of the image data to be excluded before proceeding to S352. If, on the other hand, A_{N} ≤ D holds, the number A_{N} of pieces of image data on the close-range side of the first focused image data is equal to the threshold D or less and thus, the display mode decision unit 24 proceeds to S356 without setting the applicable image data to be excluded.

In S352, the display mode decision unit 24 determines whether any image in which a predetermined subject is in focus is present in image data determined to be excluded in S350 (S352). If such an image in which a predetermined subject is in focus is present, the display mode decision unit 24 proceeds to S356 to include the image data, which is determined to be excluded in S350, as image data to be displayed in a slideshow, instead of excluding the image data from the slideshow.

If, on the other hand, an image in which a predetermined subject is in focus is not present in S352, the display mode decision unit 24 proceeds to S354 to exclude image data determined to be excluded in S350 from image data to be displayed as a slideshow (S354). As a result, image data on the close-range side of the first focused image data excluding D pieces of focused image data closer to the first focused image data is excluded from image data to be displayed as a slideshow.

Next, in S356, the display mode decision unit 24 determines a number B_{N} of pieces of image data on the long-range side of the second focused image data closest to the long-range side in the image data group and compares the number B_{N} and the threshold D to determine whether B_{N} > D holds (S356). If B_{N} > D holds, the number B_{N} of pieces of image data on the close-range side of the second focused image data exceeds the upper limit D and thus, the display mode decision unit 24 sets image data exceeding D of the image data to be excluded before proceeding to S358. If, on the other hand, B_{N} ≤ D holds, the number B_{N} of pieces of image data on the close-range side of the second focused image data is equal to the threshold D or less and thus, the display mode decision unit 24 proceeds to S362 without setting the applicable image data to be excluded.

In S358, the display mode decision unit 24 determines whether any image in which a predetermined subject is in focus is present in image data determined to be excluded in S356 (S358). If such an image in which a predetermined subject is in focus is present, the display mode decision unit 24 proceeds to S362 to include the image data, which is determined to be excluded in S356, as image data to be displayed in a slideshow, instead of excluding the image data from the slideshow.

If, on the other hand, an image in which a predetermined subject is in focus is not present in S358, the display mode decision unit 24 proceeds to S360 to exclude image data determined to be excluded in S356 from image data to be displayed as a slideshow (S360). As a result, image data on the long-range side of the second focused image data excluding D pieces of focused image data closer to the second focused image data is excluded from image data to be displayed as a slideshow.

With the above steps S350 to S360, image data separated from the first and second focused image data by (D+1) pieces or more on the close-range side and the long-range side respectively when a plurality of pieces of image data of the image data group N is arranged in order of focal position is excluded from image data to be displayed as a slideshow. Incidentally, as shown in Fig. 25, C_{N} pieces of image data between the first focused image data N (3) and the second focused image data N (10) are not excluded from image data to be displayed as a slideshow. Accordingly, continuity of images (continuous transition of the focal position) when C_{N} pieces of image data are displayed as a slideshow can be maintained.

Next, in S362, the display mode decision unit 24 calculates the display time Q of each piece of image data to be displayed as a slideshow by using a predetermined formula so that the display time of other image data as a whole on the close-range side or the long-range side of focused image data becomes equal to predetermined time T or less (S362). As described above, the display time P (for example, 2 sec) of focused image data is longer than the display time Q (for example, 0.1 sec) of other image data. Image data to be displayed as a slideshow selected by the selection processing up to S360 described above includes the first focused image data N (3) and the second focused image data N (10), C_{N} pieces of image data N (4) to (9) therebetween, the image data N (1), (2) within D pieces on the close-range side of the first focused image data N (3), and the image data N (11) to (15) within D pieces on the long-range side of the second focused image data N (3). The display time Q of the other image data N (1), (2), (4) to (9), (11) to (15) other than the focused image data is decided so that the image data N (1), (2), (11) to (15) can all be displayed within the preset predetermined time T.

In the foregoing, the decision processing of the display order of the image data group N according to the present embodiment will be described with reference to Fig. 27. The description will continue by returning to Fig. 26.

The image data in the image data N is sorted as shown in Fig. 27 and the display time Q thereof is decided. Then, the display control unit 25 successively displays image data selected in S305 as image data to be displayed as a slideshow from a plurality of pieces of image data belonging to the image data group N in the forward direction (close-range → long-range) or backward direction (long-range → close-range) as a slideshow (S306 to S316). Then, if image data to be displayed is focused image data (S308), the display control unit 25 displays only the image data for the long display time P (S310) and if image data to be displayed is not focused image data (S308), the display control unit 25 displays only the image data for the short display time Q decided in S362 (S312). The display processing is repeated for all image data in the image data group N (S314, S316). Steps S306 to S316 are substantially the same as steps S106 to S116 in Fig. 17 according to the first embodiment and thus, a detailed description thereof is omitted.

Then, when the slideshow display of the image data group N ends (S314), the display mode decision unit 24 determines whether the next image data group N+1 is present (S318). If the next image data group N+1 is present, the display mode decision unit 24 reads the next image data group N+1 from the storing unit 22 (S320). When the next image data group N+1 is displayed as a slideshow, image data to be displayed as a slideshow is selected and the display time Q of the image data are decided according to the flow in Fig. 27 (S305) before starting the slideshow (S306 to S316). By repeating the above processing for all image data groups selected in S302, the slideshow display advances.

In the foregoing, the selection processing of image data to be displayed as a slideshow according to the present embodiment and the slideshow display processing using the image data have been described. As described above, if focused image data is on the close-range side or the long-range side in an image data group, there is a problem that many pieces of out-of-focus image data are displayed for a long time after the focused image data on the close-range side is displayed or before the focused image data on the long-range side is displayed. If, for example, flowers are imaged on the macro side using the imaging apparatus 1, an image in which the background is in focus is an out-of-focus image whose utility value is low for the user. Thus, if such out-of-focus images are displayed for a long time in a slideshow display, the user becomes boring.

According to the decision technique of the display order according to the present embodiment (see Fig. 27), by contrast, other image data whose focal position is significantly different from the focal position of focused image data in an image data group is excluded from image data to be displayed as a slideshow to reduce the number of pieces of image data displayed as a slideshow. Further, the display speed is made faster by adjusting the display time Q for each piece of image data so that all image data to be displayed as a slideshow can be displayed within a predetermined time. Accordingly, images of the image data group can be displayed as a slideshow within the predetermined time and the time in which out-of-focus image data is continuously displayed can be reduced so that the user can be prevented from becoming tired of viewing the slideshow display.

### <Fourth embodiment>

Next, the fourth embodiment of the present invention will be described. The slideshow display according to the fourth embodiment is different from the slideshow display according to the first embodiment in that the display time Q of image data is increased/decreased in accordance with the distance from the focused point position and the other function configuration is the same as in the first embodiment and thus, a detailed description thereof is omitted.

### [4.1. Overview of Slideshow Display]

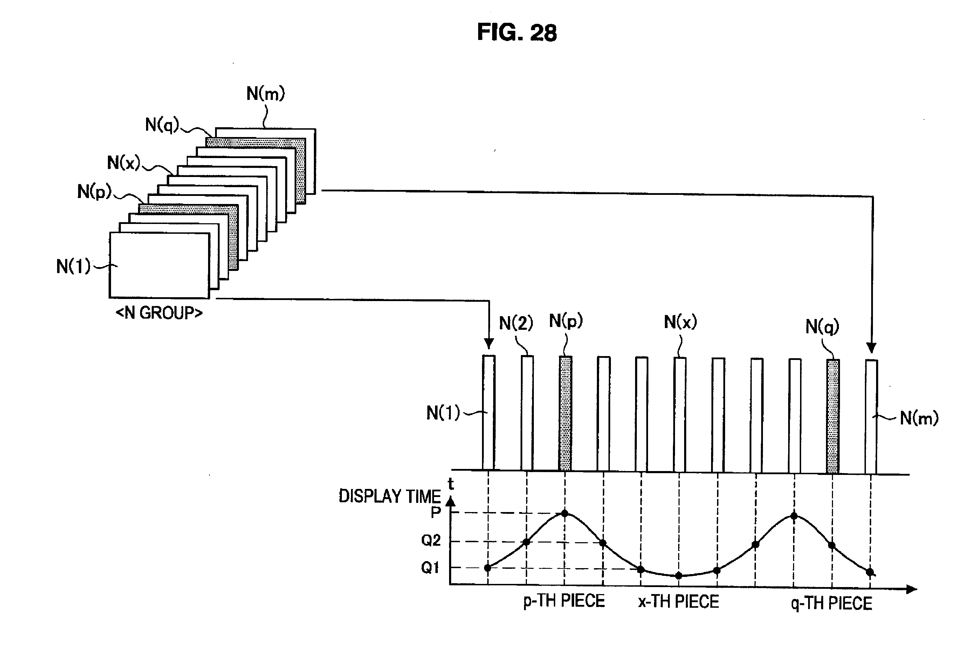

First, an overview of the slideshow display according to the fourth embodiment will be provided with reference to Fig. 28. Fig. 28 is a schematic diagram schematically showing the slideshow display according to the fourth embodiment.

As shown in Fig. 28, a case when, as a result of a plurality of subjects being detected during multifocus imaging, the image data group N in which a plurality of pieces of focused image data N (p), N (q) is present is displayed as a slideshow will be considered. When image data belonging to the image data group N is arranged in order of focal position based on focal position information, the display control device 20 according to the present embodiment increases/decreases the display time Q of image data N (x) in accordance with differences in arrangement order (ABS (x-p), ABS (x-q)) between the focused image data N (p), N (q) and the focused image data N (x). That is, the display control device 20 makes the display time Q of image data close to the focused image data of individual pieces of image data N (x) belonging to the image data group N longer and the display time Q of image data apart from the focused image data shorter.

The image data close to the focused image data means image data whose focal position is close to the focal position of the focused image data and the image data apart from the focused image data means image data whose focal position is close to the focal position of the focused image data. The differences in arrangement order corresponds to differences between the focused point position of the focused image data N (p), N (q) and the focal position of the focused image data N (x).

As described above, the display control device 20 according to the present embodiment increase/decreases the display time Q of the image data N (x) in accordance with differences in arrangement order between the focused image data N (p), N (q) and the focused image data N (x). In the example in Fig. 28, for example, the image data (2) near from the focused image data N (p) and thus, a display time Q2 of the image data (2) is set to a relatively long time (P > Q2). On the other hand, the image data (1) is apart from the focused image data N (p) and thus, a display time Q1 of the image data (1) is set to a relatively short time (P > Q2 > Q1).

Accordingly, when the image data group N is displayed as a slideshow, the display time Q of the image data N (x) gradually becomes longer as the focused image data comes closer and the display time Q of the image data N (x) gradually becomes shorter as the focused image data moves away. By making the display time Q variable in this manner, accentuation can be provided to the display time Q of each piece of image data in accordance with the focused point position so that the focused image data can be staged effectively to display as a slideshow.

### [4.2. Slideshow Display Flow]

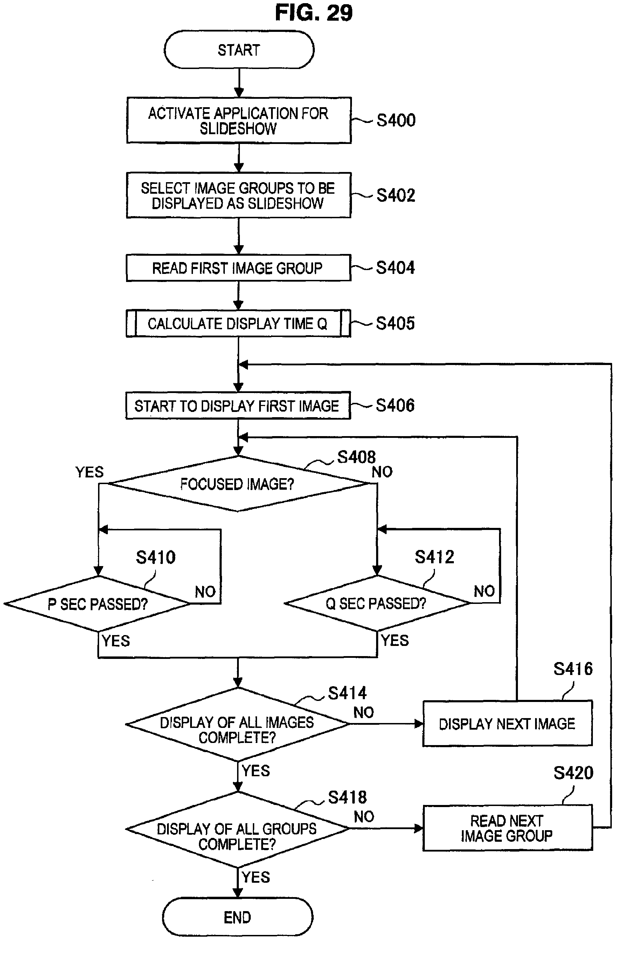

Next, the slideshow display flow according to the present embodiment will be described with reference to Fig. 29. Fig. 29 is a flow chart showing the slideshow display according to the present embodiment.

As shown in Fig. 29, the display control device 20 first activates application software for slideshow (S400) and selects image data to be displayed as a slideshow (S402). Next, the data reading unit 23 of the display control device 20 reads the first image data group and metadata thereof among image data groups selected in S402 from the storing unit 22 (S404). Steps S400 to S404 heretofore are substantially the same as steps S100 to S104 in Fig. 17 according to the first embodiment and thus, a detailed description thereof is omitted.

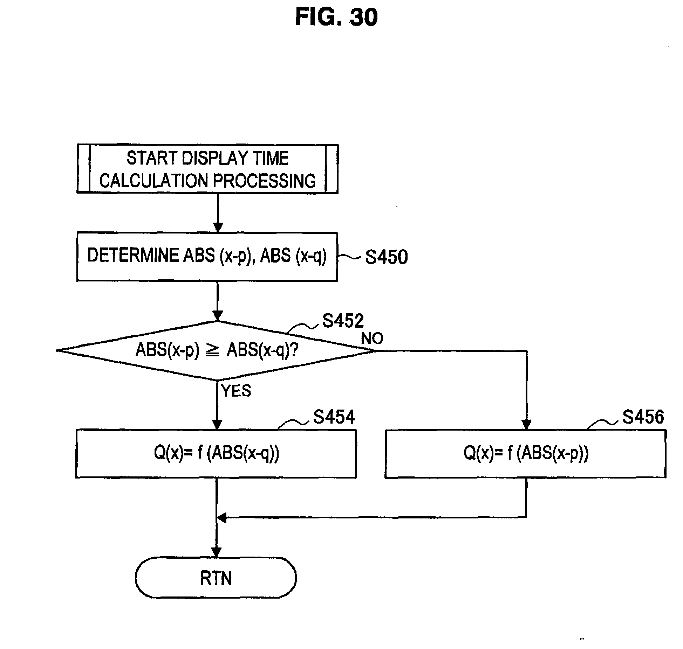

Next, the display mode decision unit 24 decides the display time Q (x) of other image data N (x) in accordance with differences in arrangement order between the focused image data N (p), N (q) and the other focused image data N (x) based on metadata of the image data groups read in S404 (S405). The arrangement order (for example, the number of pieces from the head) of image data is an arrangement order when a plurality of pieces of image data belonging to the image data group N is arranged in order of focal position. Display time setting processing in S405 is a feature of the present embodiment and so will be described in detail with reference to Fig. 30. Fig. 30 is a flow chart showing calculation processing of the display time Q according to the present embodiment.

As shown in Fig. 30, the display mode decision unit 24 first determines differences in arrangement order ABS (x-p), ABS (x-q) between each piece of image data N (x) other than focused image data and the focused image data N (p), N (q) (S450). The differences in arrangement order ABS (x-p), ABS (x-q) correspond to numbers of pieces image data from N (x) to N (p), N (q). In the example in Fig. 28, for example, the difference in arrangement order ABS (1-p) between the image data N (1) and the focused image data N (p) is "2" and the difference in arrangement order ABS (2-p) between the image data N (2) and the focused image data N (p) is "1".

Next, the display mode decision unit 24 compares the differences in arrangement order ABS (x-p) with ABS (x-q) and decides the smaller difference as the difference in arrangement order between N (x) and the focused image data closest to N (x) (S452). If, for example, ABS (x-p) ≥ ABS (x-q) holds, the difference in arrangement order between the image data N (x) and the focused image data closest to N (x) is ABS (x-q) and the display mode decision unit 24 proceeds to S454. If, on the other hand, ABS (x-p) < ABS (x-q) holds, the difference in arrangement order between the image data N (x) and the closest focused image data closest is ABS (x-p) and the display mode decision unit 24 proceeds to S456.

In S454, the display mode decision unit 24 calculates the display time Q (x) of the image data N (x) by using a predetermined function f (X) by setting the difference in arrangement order ABS (x-p) between the image data N (x) and the closest focused image data as a variable X. That is, Q (x) = f (ABS (x-p)). The function f (X) is a function whose value decreases with an increasing variable Z and, for example, f (X) = 1/X.

In S456, on the other hand, the display mode decision unit 24 calculates the display time Q (x) of the image data N (x) by using the predetermined function f (X) by setting the difference in arrangement order ABS (x-q) between the image data N (x) and the closest focused image data as a variable X. That is, Q (x) = f (ABS (x-q)).

With the above S454, S456, the display time Q (x) of the image data N (x) is calculated in accordance with the difference in arrangement order ABS (x-p) between the image data N (x) and the closest focused image data. By repeating the calculation of Q (x) for all image data N (x) in the image data group N, Q (1) to Q (m_{N}) are determined. The technique to calculate the display time Q (x) by using the difference in arrangement order and the function f (x) is described above, but the technique to determine the display time Q (x) is not limited to such an example. For example, the display control device 20 may hold a table in which the display time Q (x) in accordance with the difference in arrangement order is preset so that the display time Q (x) of each piece of image data N (x) is decided based on the table.

By determining Q (x) as described above, the display time Q (x) of the image data N (x) can be increased/decreased in accordance with the distance (the difference in arrangement order) from the focused image data to the image data N (x). Therefore, when a slideshow is displayed, the display time Q (x) can be made longer for the image data N (x) close to the focused image data and the display time Q can be made shorter for the image data N (x) apart from the focused image data.

In the foregoing, the calculation processing of the display time Q (x) of the image data N (x) according to the present embodiment is described with reference to Fig. 30. The description will continue by returning to Fig. 29.
Next, the display control unit 25 successively displays image data selected as image data to be displayed as an S slideshow of a plurality of pieces of image data belonging to the image data group N in the forward direction (close-range → long-range) or backward direction (long-range → close-range) as a slideshow (S406 to S416). If image data to be displayed is focused image data (S408), the display control unit 25 displays only the image data for the long display time P (S410) and if image data to be displayed is not focused image data (S408), the display control unit 25 displays only the image data for the display time Q (x) calculated in S454, S456 described above (S412). The display processing is successively repeated for all image data in the image data group N (S414, S416). Steps S406 to S416 are substantially the same as steps S106 to S116 in Fig. 17 according to the first embodiment and thus, a detailed description thereof is omitted.

Then, when the slideshow display of the image data group N ends (S414), the display mode decision unit 24 determines whether the next image data group N+1 is present (S418). If the next image data group N+1 is present, the display mode decision unit 24 reads the next image data group N+1 from the storing unit 22 (S420). When the next image data group N+1 is displayed as a slideshow, the display time Q (x) of each piece of the image data N (x) other than focused image data is calculated according to the flow in Fig. 30 (S405) before starting the slideshow (S406 to S416). By repeating the above processing for all image data groups selected in S402, the slideshow display advances.

In the foregoing, the calculation processing of the display time Q of image data according to the present embodiment and the slideshow display processing using the display time Q have been described. If, as described above, when an image data group is displayed as a slideshow, image data other than focused image data is displayed at equal intervals regardless of whether being close to or apart from a focused image, the display may be staged without accentuation. Thus, if images without accentuation are displayed for a long time in a slideshow display, the user may become boring.

According to the present embodiment, by contrast, the display time Q of image data close to focused image data is made longer and the display time Q is gradually reduced with an increasing distance from the focused image data. By making the display time Q variable in this manner, the display time Q of each piece of image data is accentuated in accordance with the focused point position so that a slideshow display that effectively stages focused image data can be realized. While images (photos) to which the user pays attention in a slideshow display are focused images, the present embodiment enhances a slideshow effect by using multifocus images around the focused image. Images other than focused images are presented to the user strictly as auxiliary images to enhance stage effects of focused images and thus, the display time thereof may be short. With a slideshow display and presentation using such focused images and auxiliary images, the user can view focused images more impressively.

In the foregoing, the display control device 20 and the slideshow display control method according to the first to fourth embodiments of the present invention have been described. According to the above embodiments, when a plurality of image data belonging to an image data group is displayed as a slideshow, the slideshow display mode (for example, the display order, display time, and selection of display images) is controlled based on metadata of the image data group. In this case, the display control device 20 determines focused image data (representative image data) from the plurality of pieces of image data based on focused image determination information contained in the metadata and displays the focused image data in a display mode that enables the user to recognize the focused image data more easily than other image data as a slideshow. Accordingly, focused image data is more highlighted than other image data. Therefore, a plurality of similar images with different focal positions can be displayed effectively as a slideshow and also the user can grasp the intention (which subject is in focus when imaged) of the imager while browsing the plurality of images displayed as a slideshow.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

In the above embodiments, for example, examples of a personal computer (PC) as a display control device have been shown and examples of displaying image data groups acquired from the imaging apparatus 1 as a slideshow have been described. However, in addition to the PC, the display control device in the present invention can be applied to any electronic device, for example, the imaging apparatus 1 such as a digital still camera and digital camcorder, mobile video player, TV set, and mobile phone. For example, also in the imaging apparatus 1 that performs the multifocus imaging, an imaged and recorded image data group can be displayed in the display screen as a slideshow.

The display control device 20 according to the above embodiments includes the display device 209 (corresponding to the display unit 26) that displays image data as a slideshow, but the display control device according to an embodiment of the present invention is not limited to such an example. For example, the display control device may exercise control to cause a display device included in another device connected to the display control device to display image data as a slideshow without including a display device.

## Claims

1. A display control device, comprising:
a display mode decision unit that decides a display mode in which an image data group including a plurality of pieces of image data obtained by capturing a subject image in a plurality of mutually different focal positions based on focused image determination information to determine focused image data in which a predetermined subject is in focus from the image data group; and
a display control unit that controls a slideshow display of the image data group based on the display mode decided by the display mode decision unit.

2. The display control device according to claim 1,
wherein the display mode decision unit determines the focused image data from the image data group based on the focused image determination information and decides the display mode in such a way that the focused image data can visually be recognized more easily than other image data, which is the image data group excluding the focused image data.

3. The display control device according to claim 2,
wherein the display mode decision unit controls a display time of each piece of the image data so that the display time of the focused image data becomes longer than the display time of the other image data.

4. The display control device according to claim 2,
wherein the display mode decision unit decides a display order of the plurality of pieces of image data belonging to the image data group based on focal position information representing a focal position of each piece of the image data belonging to the image data group in favor of a first display order in which the image data the focal position of which is on a close-range side is displayed, or a second border in which the image data the focal position of which is on a long-range side is first displayed.

5. The display control device according to claim 4,
wherein the display mode decision unit
determines whether the focused image data is on the close-range side or the long-range side based on the focal position information of an (N-1)-th image data group when the plurality of pieces of image data belonging to the (N-1)-th image data group is arranged in order of the focal position,
determines whether the focused image data is on the close-range side or the long-range side based on the focal position information of an N-th image data group when the plurality of pieces of image data belonging to the N-th image data group is arranged in order of the focal position, and
decides the display order of the N-th image data group in accordance with results of the determination of the (N-1)-th and N-th image data groups and the display order of the (N-1)-th image data group.

6. The display control device according to claim 4,
wherein the display mode decision unit
determines whether the focused image data is on the close-range side or the long-range side based on the focal position information when the plurality of pieces of image data belonging to the image data group is arranged in order of the focal position, and
decides the display order of the image data group in accordance with a result of the determination.

7. The display control device according to claim 4,
wherein the display mode decision unit
determines a number of pieces of the other image data present on the close-range side or the long-range side of the focused image data based on the focal position information when the plurality of pieces of image data belonging to the image data group is arranged in order of the focal position, and
controls the display mode in accordance with the number so that a display time of the whole other image data on the close-range side or the long-range side becomes equal to a predetermined time or less.

8. The display control device according to claim 7,
wherein the display mode unit excludes a portion of the other image data on the close-range side or the long-range side of the focused image data from the image data to be displayed as a slideshow when the number is equal to or greater than a threshold.

9. The display control device according to claim 8,
wherein when first focused image data and second focused image data are present in the one image data group, the display mode decision unit does not exclude the other image data present between the first focused image data and the second focused image data from the image data to be displayed as the slideshow.

10. The display control device according to claim 7,
wherein the display mode decision unit controls at least a portion of the display time of the other image data on the close-range side or the long-range side of the focused image data in accordance with the number.

11. The display control device according to claim 4,
wherein the display mode decision unit determines a difference in arrangement order between the focused image data and the other image data based on the focal position information when the plurality of pieces of image data belonging to the image data group is arranged in order of the focal position and controls a display time of the other image data in accordance with the difference in arrangement order.

12. A display control method, comprising:
deciding a display mode in which an image data group including a plurality of pieces of image data obtained by capturing a subject image in a plurality of mutually different focal positions based on focused image determination information to determine focused image data in which a predetermined subject is in focus from the image data group; and
controlling a slideshow display of the image data group based on the display mode decided by the display mode decision step.

13. A program causing a computer to execute:
deciding a display made in which an image data group including a plurality of or image data obtained by capturing a image in a plurality of mutually different focal positions based an focused image determination information to determine focused image data in which a predetermined subject is in focus from the image data group; and
controlling a slideshow display of the image data group based on the display mode decided by the display mode decision step.
